# EUROPEAN PATENT APPLICATION

(11) **EP 4 580 185 A1**
(43) Date of publication of application: **02.07.2025**
(21) Application number: 23884256.1
(22) Date of filing: 30.06.2023
(51) Int. Cl.: H04N 19/30

(54) **HIERARCHICAL CODING METHOD AND APPARATUS FOR IMAGE**

(30) Priority: 31.10.2022 CN 202211349151
(71) Applicant: Huawei Technologies Co., Ltd., Shenzhen, Guangdong 518129 (CN)
(72) Inventor: YANG, Haitao, Shenzhen, Guangdong 518129 (CN); SONG, Yi, Shenzhen, Guangdong 518129 (CN); ZHANG, Yixuan, Shenzhen, Guangdong 518129 (CN); CHEN, Shaolin, Shenzhen, Guangdong 518129 (CN); DI, Peiyun, Shenzhen, Guangdong 518129 (CN)
(74) Representative: Thun, Clemens
(86) International application number: PCT/CN2023/104497
(87) International publication number: WO 2024/093317

(57) **Abstract**

This application provides a picture scalable coding method and apparatus. The method includes: obtaining a current picture block, where a 4:4:4 sampling format is used for the current picture block; and the current picture block includes three 2W×2H sample arrays, where one 2W×2H sample array is used to represent a first chrominance component, one 2W×2H sample array is used to represent a second chrominance component, and one 2W×2H sample array is used to represent a luminance component; separately downsampling the first chrominance component and the second chrominance component of the current picture block to obtain a base layer picture block, where a 4:2:0 sampling format is used for the base layer picture block; obtaining a differential chrominance picture block based on the current picture block, where the differential chrominance picture block includes a part or all of chrominance samples of the current picture block; encoding the base layer picture block to obtain a base layer bitstream; and encoding the differential chrominance picture block to obtain an enhancement layer bitstream. In this application, picture transmission efficiency can be ensured, and picture quality can be ensured.

## Description

This application claims priority to Chinese Patent Application No. 202211349151.9, filed with the China National Intellectual Property Administration on October 31, 2022 and entitled "PICTURE SCALABLE CODING METHOD AND APPARATUS", which is incorporated herein by reference in its entirety.

### TECHNICAL FIELD

This application relates to video coding technologies, and in particular, to a picture scalable coding method and apparatus.

### BACKGROUND

Generally, a 4:2:0 sampling format is used for most pictures input into a coder for coding. A standard video codec based on the 4:2:0 sampling format is widely used in various products, for example, a video application (application, APP), a mobile phone (chip), and a television (chip). A high-sampling-rate chrominance component YUV usually means that a sampling rate of a chrominance component is higher than that of the 4:2:0 sampling format, for example, a 4:4:4 sampling format.

Therefore, coding a picture with a high-sampling-rate chrominance component through an existing standard video codec based on the 4:2:0 sampling format is a common requirement. In a related technology, a compressed bitstream includes base layer YUV420 picture coded data and enhancement layer UV44 picture coded data. However, this technology has a problem of low prediction coding efficiency of an enhancement layer.

### SUMMARY

This application provides a picture scalable coding method and apparatus, to ensure picture transmission efficiency and picture quality.

According to a first aspect, this application provides a picture scalable encoding method, including: obtaining a current picture block, where a 4:4:4 sampling format is used for the current picture block; and the current picture block includes three 2W×2H sample arrays, where one 2W×2H sample array is used to represent a first chrominance component, one 2W×2H sample array is used to represent a second chrominance component, and one 2W×2H sample array is used to represent a luminance component; separately downsampling the first chrominance component and the second chrominance component of the current picture block to obtain a base layer picture block, where a 4:2:0 sampling format is used for the base layer picture block; and the base layer picture block includes two W×H sample arrays and one 2W×2H sample array, where one W×H sample array is used to represent a first chrominance component, one W×H sample array is used to represent a second chrominance component, and the 2W×2H sample array is used to represent a luminance component; obtaining a differential chrominance picture block based on the current picture block, where the differential chrominance picture block includes a part or all of chrominance samples of the current picture block; encoding the base layer picture block to obtain a base layer bitstream; and encoding the differential chrominance picture block to obtain an enhancement layer bitstream.

In this embodiment of this application, the picture block in the YUV444 sampling format is downsampled into the picture block in the YUV420 sampling format and the differential chrominance picture block, so that base layer encoding and enhancement layer encoding are separately performed on the picture block in the YUV420 sampling format and the differential chrominance picture block. Bitstream transmission of the base layer picture block can ensure picture transmission efficiency. In addition, transmission of the differential chrominance picture block may provide a high-frequency component of a chrominance component of the picture block. This ensures picture quality.

In this embodiment of this application, the first chrominance component may be a U component, a Cb component, a Co component, or the like, and the second chrominance component may be a V component, a Cr component, a Cg component, or the like. Alternatively, the first chrominance component may be a V component, a Cr component, a Cg component, or the like, and the second chrominance component may be a U component, a Cb component, a Co component, or the like.

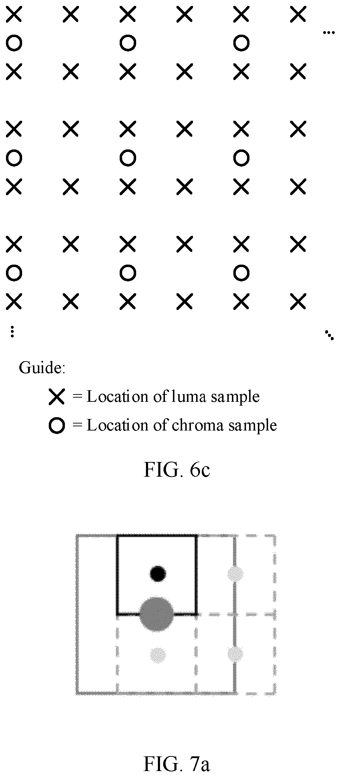

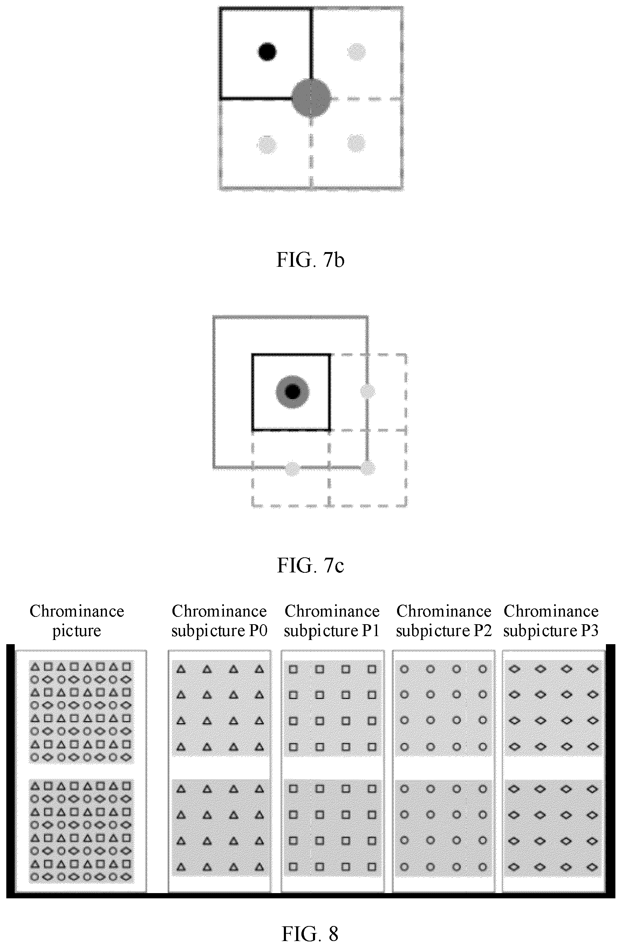

Chrominance sampling locations of the first chrominance component and the second chrominance component in the base layer picture block may be of any type shown in FIG. 7a to FIG. 7c. If the chrominance sampling location of the base layer picture block is of a type 2 shown in FIG. 7c, a UV11 chrominance picture block in the base layer picture block is a chrominance subpicture P0 shown in FIG. 8. If the chrominance sampling location of the base layer picture block is of a type 1 shown in FIG. 7b, a downsampling operation needs to be performed on a UV44 chrominance picture block in the current picture block, to obtain a UV11 chrominance picture block in the base layer picture block. Typically, an averaging operation may be performed on four chrominance samples in FIG. 7b to obtain a chrominance value at a new sampling location. Similarly, if the chrominance sampling location of the base layer picture block is of a type 0 shown in FIG. 7a, a downsampling operation also needs to be performed on a UV44 chrominance picture block in the current picture block to obtain chrominance samples at new sampling locations, so as to obtain a UV11 chrominance picture block in the base layer picture block.

That the differential chrominance picture block includes a part or all of chrominance samples of the current picture block may include the following two cases:

In a first case, the differential chrominance picture block is a UV44 chrominance picture block; and the UV44 chrominance picture block includes two 2W×2H sample arrays, where one 2W×2H sample array is used to represent a first chrominance component, and one 2W×2H sample array is used to represent a second chrominance component.

The UV44 chrominance picture block may be a picture block formed by the first chrominance component (including one 2W×2H sample array) and the second chrominance component (including one 2W×2H sample array) in the current picture block (including three 2W×2H sample arrays). Therefore, the UV44 chrominance picture block includes the two 2W×2H sample arrays, where one 2W×2H sample array is used to represent the first chrominance component, and one 2W×2H sample array is used to represent the second chrominance component. The two 2W×2H sample arrays may be two 2W×2H sample arrays that are in the current picture block and that are used to represent the first chrominance component and the second chrominance component. Based on the UV44 chrominance picture block, complete chrominance information may be obtained on a decoder side, to ensure quality of a reconstructed picture block as much as possible.

In a second case, the differential chrominance picture block is a UV33 chrominance picture block; and the UV33 chrominance picture block includes six W×H sample arrays, where three W×H sample arrays are used to represent a first chrominance component, and three W×H sample arrays are used to represent a second chrominance component.

The UV33 chrominance picture block is a picture block formed by separately extracting sampling points in three phases (one phase is represented by one W×H sample array) from the first chrominance component (including one 2W×2H sample array) and the second chrominance component (including one 2W×2H sample array) in the current picture block (including three 2W×2H sample arrays), for example, a set of chrominance subpictures P1, P2, and P3 shown in FIG. 8. The chrominance subpictures P1, P2, and P3 respectively correspond to sampling points in three phases, and there are two chrominance components. Therefore, the UV33 chrominance picture block includes the six W×H sample arrays, where three W×H sample arrays are used to represent the first chrominance component, and one W×H sample array represents one phase; and three W×H sample arrays are used to represent the second chrominance component, and one W×H sample array represents one phase. Based on the UV33 chrominance picture block, there is no intersection of samples in picture blocks at a base layer and a reconstruction layer. This reduces encoded data. In addition, complete chrominance information may be obtained on the decoder side by splicing a base layer picture and the UV33 chrominance picture block, to ensure quality of a reconstructed picture block as much as possible.

It should be noted that the UV33 chrominance picture block may be a set of any three of the chrominance subpictures P0, P1, P2, and P3 shown in FIG. 8. To avoid overlapping with the UV11 chrominance picture block in the base layer picture block, samples in a phase of a non-UV11 chrominance picture block may be selected in a downsampling manner, to obtain the UV33 chrominance picture block.

A base layer encoder performs an encoding operation on the input base layer picture block to obtain a compressed base layer bitstream, a base layer reconstructed block, and base layer coding information. The base layer coding information includes information such as a block split manner of the base layer picture block, and an encoding mode and a motion vector of each picture block. In this embodiment of this application, the base layer picture block may be encoded in the foregoing plurality of/picture encoding manners. This is not specifically limited.

The base layer encoder may obtain a base layer prediction block, then calculate a difference between corresponding samples in the base layer picture block and in the base layer prediction block to obtain a base layer residual, divide the base layer residual, perform transform and quantization on a divided base layer residual, and perform entropy encoding on a transformed and quantized base layer residual as well as base layer encoding control information, prediction information, motion information, and the like to obtain the base layer bitstream. In addition, the base layer encoder may further perform inverse quantization and inverse transform on a quantized quantization coefficient to obtain a base layer reconstructed residual, and then sum up corresponding samples in the base layer prediction block and in the base layer reconstructed residual to obtain the base layer reconstructed block.

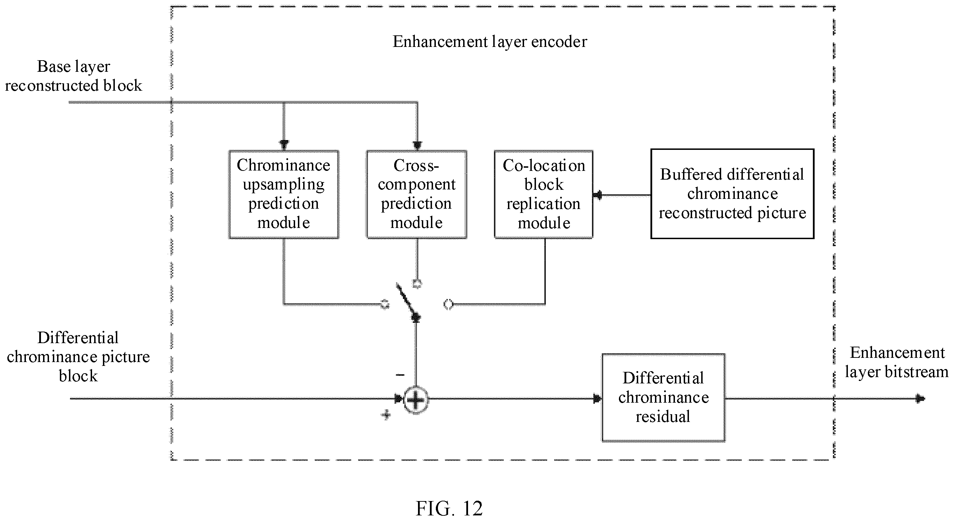

FIG. 12 is an example diagram of a structure of an enhancement layer encoder. As shown in FIG. 12, an input of the enhancement layer encoder may include the base layer reconstructed block and the differential chrominance picture block, and an output may be the enhancement layer bitstream. In the enhancement layer encoder, a differential chrominance prediction block of the differential chrominance picture block may be obtained. In this way, the enhancement layer encoder may obtain a differential chrominance residual based on the differential chrominance picture block and the differential chrominance prediction block, and further encode the differential chrominance residual to obtain the enhancement layer bitstream. The differential chrominance prediction block may be obtained through three modules: a chrominance upsampling prediction module, a cross-component prediction module, and a co-location block replication module. Based on this, the three modules each may correspond to one manner of obtaining the differential chrominance prediction block. This is described below.

In this embodiment of this application, a spare reconstructed block may be first obtained; the differential chrominance prediction block is then obtained based on the spare reconstructed block, where the differential chrominance prediction block includes a first chrominance component and a second chrominance component; the differential chrominance residual is obtained based on the differential chrominance prediction block and the differential chrominance picture block; and the differential chrominance residual is encoded to obtain the enhancement layer bitstream.
1. Corresponding to the chrominance upsampling prediction module and the cross-component prediction module, the spare reconstructed block may be a base layer reconstructed block, and has a same sampling format as the base layer picture block. The 4:2:0 sampling format is used for the base layer reconstructed block; and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component.

Based on this, the differential chrominance prediction block may be obtained according to the following two methods:

Method 1 (corresponding to the upsampling prediction module): A UV11 chrominance reconstructed block is obtained based on the base layer reconstructed block, where the UV11 chrominance reconstructed block includes two W×H arrays, where one W×H array is used to represent a first chrominance component, and one W×H array is used to represent a second chrominance component; and the differential chrominance prediction block is obtained based on the UV11 chrominance reconstructed block.

The UV11 chrominance reconstructed block includes the two chrominance components of the base layer reconstructed block, and therefore includes two W×H arrays, where one W×H array is used to represent the first chrominance component, and one W×H array is used to represent the second chrominance component.

In a possible implementation, the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

In this embodiment of this application, the differential chrominance prediction block may be obtained through upsampling based on the UV11 chrominance reconstructed block. There are a plurality of optional upsampling manners, for example, bicubic interpolation and DCTIF interpolation that are commonly used in the industry. The upsampling manner is not specifically limited in embodiments of this application.

In a possible implementation, the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

If the chrominance sampling location of the base layer picture block is of the type 2 shown in FIG. 7c, and the UV11 chrominance picture block in the base layer picture block is the chrominance subpicture P0 shown in FIG. 8, correspondingly, the UV11 chrominance reconstructed block in the base layer reconstructed block may also be the chrominance subpicture P0 shown in FIG. 8. In this case, the to-be-obtained differential chrominance prediction block may be the set of the chrominance subpictures P1, P2, and P3 shown in FIG. 8. In this case, the chrominance subpictures P1, P2, and P3 may be separately obtained through resampling based on the obtained chrominance subpicture P0 (the UV11 chrominance reconstructed block), to obtain the differential chrominance prediction block. There are a plurality of optional resampling manners. For example, a filter that is the same as that used for upsampling may be used, for example, bicubic or DCTIF.

It should be understood that, in this embodiment of this application, both resampling and upsampling are sampling manners. A difference lies in that upsampling describes an increase in a quantity of sampling points, and resampling describes a change in a location of a sampling point (the quantity of sampling points remains unchanged).

Method 2 (corresponding to the cross-component prediction module): The differential chrominance prediction block is obtained based on linear relationships between the luminance component and the chrominance components of the base layer reconstructed block.
(1) When the differential chrominance picture block is the UV44 chrominance picture block, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a second linear relationship between the first luminance reconstructed block and the second chrominance reconstructed block is obtained; a first differential chrominance prediction block is obtained based on the first linear relationship and the luminance component of the base layer reconstructed block, where the first differential chrominance prediction block includes one 2W×2H sample array, and the 2W×2H sample array is used to represent a first chrominance component; and a second differential chrominance prediction block is obtained based on the second linear relationship and the luminance component of the base layer reconstructed block, where the second differential chrominance prediction block includes one 2W×2H sample array, and the 2W×2H sample array is used to represent a second chrominance component.
(2) When the differential chrominance picture block is the UV44 chrominance picture block, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a third linear relationship between the first chrominance reconstructed block and the second chrominance reconstructed block is obtained; a first differential chrominance prediction block is obtained based on the first linear relationship and the luminance component of the base layer reconstructed block, where the first differential chrominance prediction block includes one 2W×2H sample array, and the 2W×2H sample array is used to represent a first chrominance component; and a second differential chrominance prediction block is obtained based on the third linear relationship and the first differential chrominance prediction block, where the second differential chrominance prediction block includes one 2W×2H sample array, and the 2W×2H sample array is used to represent a second chrominance component.
(3) When the differential chrominance picture block is the UV33 chrominance picture block, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a second linear relationship between the first luminance reconstructed block and the second chrominance reconstructed block is obtained; three third differential chrominance prediction blocks are obtained based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and three fourth differential chrominance prediction blocks are obtained based on the second linear relationship and the three W×H sample arrays of the luminance component of the base layer reconstructed block, where the fourth differential chrominance prediction block includes one W×H sample array, and three W×H sample arrays are used to represent three W×H sample arrays of a second chrominance component.
(4) When the differential chrominance picture block is the UV33 chrominance picture block, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a third linear relationship between the first chrominance reconstructed block and the second chrominance reconstructed block is obtained; three third differential chrominance prediction blocks are obtained based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and three fourth differential chrominance prediction blocks are obtained based on the third linear relationship and the three third differential chrominance prediction blocks, where the fourth differential chrominance prediction block includes one W×H sample array, and three W×H sample arrays are used to represent three W×H sample arrays of a second chrominance component.

2. Corresponding to the co-location block replication module, the spare reconstructed block may be a buffered differential chrominance reconstructed picture. To be specific, a picture block that is in the buffered differential chrominance reconstructed picture and that is at a same location as a differential chrominance reconstructed block (a UV44 chrominance picture or a UV33 chrominance picture) is used as the differential chrominance prediction block.

An algorithm of an enhancement layer codec is simple. Compared with a YUV420 video picture hardware codec, the enhancement layer codec can support a coding operation of a video picture of a same specification with only a small increase in costs. Compared with a conventional YUV444 video picture codec, an enhancement layer codec has a large increase in costs, and deploying the codec in a software manner can also effectively reduce codec costs.

According to a second aspect, this application provides a picture scalable decoding method, including: obtaining a base layer bitstream and an enhancement layer bitstream; obtaining a base layer reconstructed block based on the base layer bitstream, where a 4:2:0 sampling format is used for the base layer reconstructed block; and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component; obtaining a differential chrominance reconstructed block based on the enhancement layer bitstream; and obtaining a target reconstructed block based on the base layer reconstructed block and the differential chrominance reconstructed block, where a 4:4:4 sampling format is used for the target reconstructed block; and the target reconstructed block includes three 2W×2H sample arrays, where one 2W×2H sample array is used to represent a first chrominance component, one 2W×2H sample array is used to represent a second chrominance component, and one 2W×2H sample array is used to represent a luminance component.

In this embodiment of this application, through picture scalable decoding, the target reconstructed block in the YUV444 sampling format is restored from the base layer reconstructed block in the YUV420 sampling format and the differential chrominance reconstructed block at an enhancement layer that are obtained through decoding. Bitstream transmission of a base layer picture block can ensure picture transmission efficiency. In addition, transmission of a differential chrominance picture block may provide a high-frequency component of a chrominance component of a picture block. This ensures picture quality.

A base layer decoder performs a decoding operation on the input base layer bitstream to obtain the base layer reconstructed block and base layer decoding information. The base layer decoding information includes information such as a block split manner of the base layer reconstructed block, and a decoding mode and a motion vector of each reconstructed block. In this embodiment of this application, the base layer bitstream may be decoded in the foregoing plurality of/picture decoding manners. This is not specifically limited.

The base layer decoder may obtain a base layer prediction block. The base layer decoder may further perform inverse quantization and inverse transform on a quantized quantization coefficient to obtain a base layer reconstructed residual, and then sum up corresponding samples in the base layer prediction block and in the base layer reconstructed residual to obtain the base layer reconstructed block.

In this embodiment of this application, after the base layer bitstream is obtained, the base layer bitstream may be sent to a deployed YUV420 video picture decoder (the base layer decoder), to obtain a base layer reconstructed picture (YUV420). This can ensure at least normal display of a video. If the decoder has an enhancement layer bitstream processing capability, a target reconstructed picture (YUV444) may be obtained through decoding. This further improves video quality.

Corresponding to an encoder side, the differential chrominance reconstructed block may include the following two cases:
In a first case, the differential chrominance reconstructed block is a UV44 chrominance picture block; and the UV44 chrominance picture block includes two 2W×2H sample arrays, where one 2W×2H sample array is used to represent a first chrominance component, and one 2W×2H sample array is used to represent a second chrominance component.

The UV44 chrominance picture block may be a picture block including the first chrominance component and the second chrominance component. Therefore, the UV44 chrominance picture block includes the two 2W×2H sample arrays, where one 2W×2H sample array is used to represent the first chrominance component, and one 2W^{x}2H sample array is used to represent the second chrominance component. The two 2W×2H sample arrays may be two 2W×2H sample arrays that are in the target reconstructed block and that are used to represent the first chrominance component and the second chrominance component.

In a second case, the differential chrominance reconstructed block is a UV33 chrominance picture block; and the UV33 chrominance picture block includes six W×H sample arrays, where three W×H sample arrays are used to represent a first chrominance component, and three W×H sample arrays are used to represent a second chrominance component.

The UV33 chrominance picture block may be a set of chrominance subpictures P1, P2, and P3 shown in FIG. 8. The chrominance subpictures P1, P2, and P3 respectively correspond to sampling points in three phases, and there are two chrominance components. Therefore, the UV33 chrominance picture block includes the six W×H sample arrays, where three W×H sample arrays are used to represent the first chrominance component, and one W×H sample array represents one phase; and three W×H sample arrays are used to represent the second chrominance component, and one W×H sample array represents one phase.

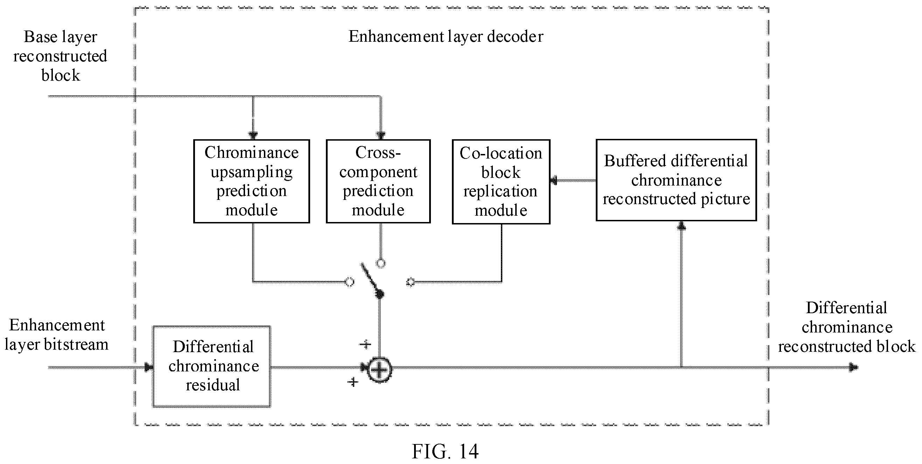

FIG. 14 is an example diagram of a structure of an enhancement layer encoder. As shown in FIG. 14, an input of the enhancement layer decoder may include the base layer reconstructed block and the enhancement layer bitstream, and an output may be the differential chrominance reconstructed block. In the enhancement layer decoder, the enhancement layer bitstream may be decoded to obtain a differential chrominance residual, and then a differential chrominance prediction block is obtained. In this way, the enhancement layer decoder may obtain the differential chrominance reconstructed block based on the differential chrominance residual and the differential chrominance prediction block. The differential chrominance prediction block may be obtained through three modules: a chrominance upsampling prediction module, a cross-component prediction module, and a co-location block replication module. Based on this, the three modules each may correspond to one manner of obtaining the differential chrominance prediction block. This is described below.

In this embodiment of this application, a spare reconstructed block may be first obtained; the enhancement layer bitstream is then decoded to obtain the differential chrominance residual; the differential chrominance prediction block is obtained based on the spare reconstructed block, where the differential chrominance prediction block includes a first chrominance component and a second chrominance component; and the differential chrominance reconstructed block is obtained based on the differential chrominance prediction block and the differential chrominance residual.
1. Corresponding to the chrominance upsampling prediction module and the cross-component prediction module, the spare reconstructed block may be a base layer reconstructed block, and has a same sampling format as the base layer reconstructed block on the encoder side. The 4:2:0 sampling format is used for the base layer reconstructed block; and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component.
2. Corresponding to the co-location block replication module, the spare reconstructed block may be a buffered differential chrominance reconstructed picture. To be specific, a picture block that is in the buffered differential chrominance reconstructed picture and that is at a same location as a differential chrominance reconstructed block (a UV44 chrominance picture or a UV33 chrominance picture) is used as the differential chrominance prediction block.

Corresponding to a current picture block on the encoder side, the 4:4:4 sampling format is also used for the target reconstructed block. The target reconstructed block includes the three 2W×2H sample arrays, where one 2W×2H sample array is used to represent the first chrominance component, one 2W×2H sample array is used to represent the second chrominance component, and the 2W×2H sample array is used to represent the luminance component.

The target reconstructed block may be obtained through construction based on the luminance component of the base layer reconstructed block and the differential chrominance reconstructed block.

In a possible implementation, the differential chrominance reconstructed block is the UV44 chrominance picture block. In this case, the luminance component (including one 2W×2H sample array) of the base layer reconstructed block and the UV44 chrominance picture block (including two 2W×2H sample arrays) may be spliced to obtain the three 2W^{x}2H sample arrays, where one 2W×2H sample array is used to represent the first chrominance component, one 2W×2H sample array is used to represent the second chrominance component, and one 2W×2H sample array is used to represent the luminance component, so as to obtain the target reconstructed block. The two W×H sample arrays that are in the base layer reconstructed block and that are used to represent the first chrominance component and the second chrominance component may be discarded.

In a possible implementation, the differential chrominance reconstructed block is the UV33 chrominance picture block. In this case, the base layer reconstructed block (including one 2W×2H sample array and two W×H sample arrays) and the UV33 chrominance picture block (including six W×H sample arrays) may be spliced to obtain one 2W×2H sample array and eight W×H sample arrays, where the eight W×H sample arrays may form two 2W×2H sample arrays, so as to obtain the target reconstructed block.

In a possible implementation, the differential chrominance reconstructed block is the UV44 chrominance picture block; and the UV44 chrominance picture block includes the two 2W×2H sample arrays, where one 2W×2H sample array is used to represent the first chrominance component, and one 2W×2H sample array is used to represent the second chrominance component.

In a possible implementation, the differential chrominance reconstructed block is the UV33 chrominance picture block; and the UV33 chrominance picture block includes the six W×H sample arrays, where three W×H sample arrays are used to represent the first chrominance component, and three W×H sample arrays are used to represent the second chrominance component.

In a possible implementation, the target reconstructed block is obtained through construction based on the luminance component of the base layer reconstructed block and the UV44 chrominance picture block.

In a possible implementation, the target reconstructed block is obtained through construction based on the base layer reconstructed block and the UV33 chrominance picture block.

In a possible implementation, before the parsing the enhancement layer bitstream to obtain a differential chrominance reconstructed block, the method further includes: obtaining the spare reconstructed block; and parsing the enhancement layer bitstream to obtain a differential chrominance reconstructed block includes: decoding the enhancement layer bitstream to obtain the differential chrominance residual; obtaining the differential chrominance prediction block based on the spare reconstructed block, where the differential chrominance prediction block includes a first chrominance component and a second chrominance component; and obtaining the differential chrominance reconstructed block based on the differential chrominance prediction block and the differential chrominance residual.

In a possible implementation, the spare reconstructed block is a base layer reconstructed block, the 4:2:0 sampling format is used for the base layer reconstructed block, and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component.

In a possible implementation, the obtaining a differential chrominance prediction block based on the spare reconstructed block includes: obtaining a UV11 chrominance reconstructed block based on the base layer reconstructed block, where the UV11 chrominance reconstructed block includes two W×H arrays, where one W×H array is used to represent a first chrominance component, and one W×H array is used to represent a second chrominance component; and obtaining the differential chrominance prediction block based on the UV11 chrominance reconstructed block.

In a possible implementation, the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

In a possible implementation, the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

In a possible implementation, when the differential chrominance picture block is a UV44 chrominance picture block, the obtaining a differential chrominance prediction block based on the spare reconstructed block includes: obtaining a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsampling the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtaining a first linear relationship between the first luminance reconstructed block and the first chrominance reconstructed block; obtaining a second linear relationship between the first luminance reconstructed block and the second chrominance reconstructed block; obtaining a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtaining a second differential chrominance prediction block based on the second linear relationship and the luminance component of the base layer reconstructed block, where the second differential chrominance prediction block includes one 2W×2H sample array, and the 2W×2H sample array is used to represent a second chrominance component.

In a possible implementation, when the differential chrominance picture block is a UV44 chrominance picture block, the obtaining a differential chrominance prediction block based on the spare reconstructed block includes: obtaining a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsampling the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtaining a first linear relationship between the first luminance reconstructed block and the first chrominance reconstructed block; obtaining a third linear relationship between the first chrominance reconstructed block and the second chrominance reconstructed block; obtaining a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtaining a second differential chrominance prediction block based on the third linear relationship and the first differential chrominance prediction block, where the second differential chrominance prediction block includes one 2W×2H sample array, and the 2W×2H sample array is used to represent a second chrominance component.

In a possible implementation, when the differential chrominance picture block is a UV33 chrominance picture block, the obtaining a differential chrominance prediction block based on the spare reconstructed block includes: obtaining a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsampling the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtaining a first linear relationship between the first luminance reconstructed block and the first chrominance reconstructed block; obtaining a second linear relationship between the first luminance reconstructed block and the second chrominance reconstructed block; obtaining three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtaining three fourth differential chrominance prediction blocks based on the second linear relationship and the three W×H sample arrays of the luminance component of the base layer reconstructed block, where the fourth differential chrominance prediction block includes one W×H sample array, and three W×H sample arrays are used to represent three W×H sample arrays of a second chrominance component.

In a possible implementation, when the differential chrominance picture block is a UV33 chrominance picture block, the obtaining a differential chrominance prediction block based on the spare reconstructed block includes: obtaining a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsampling the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtaining a first linear relationship between the first luminance reconstructed block and the first chrominance reconstructed block; obtaining a third linear relationship between the first chrominance reconstructed block and the second chrominance reconstructed block; obtaining three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtaining three fourth differential chrominance prediction blocks based on the third linear relationship and the three third differential chrominance prediction blocks, where the fourth differential chrominance prediction block includes one W×H sample array, and three W×H sample arrays are used to represent three W×H sample arrays of a second chrominance component.

In a possible implementation, the spare reconstructed block is the buffered differential chrominance reconstructed picture, and the differential chrominance reconstructed picture is the UV44 chrominance picture or the UV33 chrominance picture.

In a possible implementation, the obtaining a differential chrominance prediction block based on the spare reconstructed block includes: using, as the differential chrominance prediction block, the picture block that is in the buffered differential chrominance reconstructed picture and that is at the same location as the differential chrominance picture block.

According to a third aspect, this application provides an encoding apparatus, including: an obtaining module, configured to obtain a current picture block, where a 4:4:4 sampling format is used for the current picture block; and the current picture block includes three 2W×2H sample arrays, where one 2W×2H sample array is used to represent a first chrominance component, one 2W×2H sample array is used to represent a second chrominance component, and one 2W×2H sample array is used to represent a luminance component; a preprocessing module, configured to separately downsample the first chrominance component and the second chrominance component of the current picture block to obtain a base layer picture block, where a 4:2:0 sampling format is used for the base layer picture block; and the base layer picture block includes two W×H sample arrays and one 2W^{x}2H sample array, where one W×H sample array is used to represent a first chrominance component, one W×H sample array is used to represent a second chrominance component, and the 2W×2H sample array is used to represent a luminance component; and obtain a differential chrominance picture block based on the current picture block, where the differential chrominance picture block includes a part or all of chrominance samples of the current picture block; a base layer encoding module, configured to encode the base layer picture block to obtain a base layer bitstream; and an enhancement layer encoding module, configured to encode the differential chrominance picture block to obtain an enhancement layer bitstream.

In a possible implementation, the differential chrominance picture block is a UV44 chrominance picture block; and the UV44 chrominance picture block includes two 2W^{x}2H sample arrays, where one 2W×2H sample array is used to represent a first chrominance component, and one 2W×2H sample array is used to represent a second chrominance component.

In a possible implementation, the differential chrominance picture block is a UV33 chrominance picture block; and the UV33 chrominance picture block includes six W×H sample arrays, where three W×H sample arrays are used to represent a first chrominance component, and three W×H sample arrays are used to represent a second chrominance component.

In a possible implementation, the enhancement layer encoding module is specifically configured to: obtain a spare reconstructed block; obtain a differential chrominance prediction block based on the spare reconstructed block, where the differential chrominance prediction block includes a first chrominance component and a second chrominance component; obtain a differential chrominance residual based on the differential chrominance prediction block and the differential chrominance picture block; and encode the differential chrominance residual to obtain the enhancement layer bitstream.

In a possible implementation, the enhancement layer encoding module includes a chrominance upsampling prediction submodule, a cross-component prediction submodule, and a co-location block replication submodule.

In a possible implementation, the spare reconstructed block is a base layer reconstructed block, the 4:2:0 sampling format is used for the base layer reconstructed block, and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component.

In a possible implementation, the chrominance upsampling prediction submodule is specifically configured to: obtain a UV11 chrominance reconstructed block based on the base layer reconstructed block, where the UV11 chrominance reconstructed block includes two W×H arrays, where one W×H array is used to represent a first chrominance component, and one W×H array is used to represent a second chrominance component; and obtain the differential chrominance prediction block based on the UV11 chrominance reconstructed block.

In a possible implementation, the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

In a possible implementation, the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

In a possible implementation, when the differential chrominance picture block is the UV44 chrominance picture block, the cross-component prediction submodule is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtain a second differential chrominance prediction block based on the second linear relationship and the luminance component of the base layer reconstructed block, where the second differential chrominance prediction block includes one 2W×2H sample array, and the 2W×2H sample array is used to represent a second chrominance component.

In a possible implementation, when the differential chrominance picture block is the UV44 chrominance picture block, the cross-component prediction submodule is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtain a second differential chrominance prediction block based on the third linear relationship and the first differential chrominance prediction block, where the second differential chrominance prediction block includes one 2W×2H sample array, and the 2W×2H sample array is used to represent a second chrominance component.

In a possible implementation, when the differential chrominance picture block is the UV33 chrominance picture block, the cross-component prediction submodule is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtain three fourth differential chrominance prediction blocks based on the second linear relationship and the three W×H sample arrays of the luminance component of the base layer reconstructed block, where the fourth differential chrominance prediction block includes one W×H sample array, and three W×H sample arrays are used to represent three W×H sample arrays of a second chrominance component.

In a possible implementation, when the differential chrominance picture block is the UV33 chrominance picture block, the cross-component prediction submodule is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtain three fourth differential chrominance prediction blocks based on the third linear relationship and the three third differential chrominance prediction blocks, where the fourth differential chrominance prediction block includes one W×H sample array, and three W×H sample arrays are used to represent three W×H sample arrays of a second chrominance component.

In a possible implementation, the spare reconstructed block is a buffered differential chrominance reconstructed picture, and the differential chrominance reconstructed picture is a UV44 chrominance picture or a UV33 chrominance picture.

In a possible implementation, the co-location block replication submodule is specifically configured to use, as the differential chrominance prediction block, a picture block that is in the buffered differential chrominance reconstructed picture and that is at a same location as the differential chrominance picture block.

According to a fourth aspect, this application provides a decoding apparatus, including: an obtaining module, configured to obtain a base layer bitstream and an enhancement layer bitstream; a base layer decoding module, configured to obtain a base layer reconstructed block based on the base layer bitstream, where a 4:2:0 sampling format is used for the base layer reconstructed block; and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component; an enhancement layer decoding module, configured to obtain a differential chrominance reconstructed block based on the enhancement layer bitstream; and a postprocessing module, configured to obtain a target reconstructed block based on the base layer reconstructed block and the differential chrominance reconstructed block, where a 4:4:4 sampling format is used for the target reconstructed block; and the target reconstructed block includes three 2W×2H sample arrays, where one 2W^{x}2H sample array is used to represent a first chrominance component, one 2W×2H sample array is used to represent a second chrominance component, and one 2W×2H sample array is used to represent a luminance component.

In a possible implementation, the differential chrominance reconstructed block is a UV44 chrominance picture block; and the UV44 chrominance picture block includes two 2W×2H sample arrays, where one 2W×2H sample array is used to represent a first chrominance component, and one 2W×2H sample array is used to represent a second chrominance component.

In a possible implementation, the differential chrominance reconstructed block is a UV33 chrominance picture block; and the UV33 chrominance picture block includes six W×H sample arrays, where three W×H sample arrays are used to represent a first chrominance component, and three W×H sample arrays are used to represent a second chrominance component.

In a possible implementation, the target reconstructed block is obtained through construction based on the luminance component of the base layer reconstructed block and the UV44 chrominance picture block.

In a possible implementation, the target reconstructed block is obtained through construction based on the base layer reconstructed block and the UV33 chrominance picture block.

In a possible implementation, the enhancement layer decoding module is specifically configured to: obtain a spare reconstructed block; decode the enhancement layer bitstream to obtain a differential chrominance residual; obtain a differential chrominance prediction block based on the spare reconstructed block, where the differential chrominance prediction block includes a first chrominance component and a second chrominance component; and obtain the differential chrominance reconstructed block based on the differential chrominance prediction block and the differential chrominance residual.

In a possible implementation, the enhancement layer decoding module includes a chrominance upsampling prediction submodule, a cross-component prediction submodule, and a co-location block replication submodule.

In a possible implementation, the spare reconstructed block is a base layer reconstructed block, the 4:2:0 sampling format is used for the base layer reconstructed block, and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component.

In a possible implementation, the chrominance upsampling prediction submodule is specifically configured to: obtain a UV11 chrominance reconstructed block based on the base layer reconstructed block, where the UV11 chrominance reconstructed block includes two W×H arrays, where one W×H array is used to represent a first chrominance component, and one W×H array is used to represent a second chrominance component; and obtain the differential chrominance prediction block based on the UV11 chrominance reconstructed block.

In a possible implementation, the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

In a possible implementation, the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

In a possible implementation, when the differential chrominance picture block is a UV44 chrominance picture block, the cross-component prediction submodule is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtain a second differential chrominance prediction block based on the second linear relationship and the luminance component of the base layer reconstructed block, where the second differential chrominance prediction block includes one 2W×2H sample array, and the 2W×2H sample array is used to represent a second chrominance component.

In a possible implementation, when the differential chrominance picture block is a UV44 chrominance picture block, the cross-component prediction submodule is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtain a second differential chrominance prediction block based on the third linear relationship and the first differential chrominance prediction block, where the second differential chrominance prediction block includes one 2W×2H sample array, and the 2W×2H sample array is used to represent a second chrominance component.

In a possible implementation, when the differential chrominance picture block is a UV33 chrominance picture block, the cross-component prediction submodule is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtain three fourth differential chrominance prediction blocks based on the second linear relationship and the three W×H sample arrays of the luminance component of the base layer reconstructed block, where the fourth differential chrominance prediction block includes one W×H sample array, and three W×H sample arrays are used to represent three W×H sample arrays of a second chrominance component.

In a possible implementation, when the differential chrominance picture block is a UV33 chrominance picture block, the cross-component prediction submodule is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtain three fourth differential chrominance prediction blocks based on the third linear relationship and the three third differential chrominance prediction blocks, where the fourth differential chrominance prediction block includes one W×H sample array, and three W×H sample arrays are used to represent three W×H sample arrays of a second chrominance component.

In a possible implementation, the spare reconstructed block is a buffered differential chrominance reconstructed picture, and the differential chrominance reconstructed picture is a UV44 chrominance picture or a UV33 chrominance picture.

In a possible implementation, the co-location block replication submodule is specifically configured to use, as the differential chrominance prediction block, a picture block that is in the buffered differential chrominance reconstructed picture and that is at a same location as the differential chrominance picture block.

According to a fifth aspect, this application provides an encoder, including: one or more processors; and a non-transitory computer-readable storage medium coupled to the processor and storing a program executed by the processor. When the program is executed by the processor, the encoder performs the method according to any one of the first aspect.

According to a sixth aspect, this application provides a decoder, including: one or more processors; and a non-transitory computer-readable storage medium coupled to the processor and storing a program executed by the processor. When the program is executed by the processor, the decoder performs the method according to any one of the second aspect.

According to a seventh aspect, this application provides a non-transitory computer-readable storage medium, including program code. The program code is executed by a computer device, to perform the method according to any one of the first aspect and the second aspect.

According to an eighth aspect, this application provides a non-transitory storage medium, including a bitstream obtained through encoding according to the method according to any one of the first aspect and the second aspect.

### BRIEF DESCRIPTION OF DRAWINGS

FIG. 1A is an example block diagram of a coding system 10 according to an embodiment of this application;
FIG. 1B is an example block diagram of a video coding system 40 according to an embodiment of this application;
FIG. 2 is an example block diagram of a video encoder 20 according to an embodiment of this application;
FIG. 3 is an example block diagram of a video decoder 30 according to an embodiment of this application;
FIG. 4 is an example block diagram of a video coding device 400 according to an embodiment of this application;
FIG. 5 is an example diagram of layers of scalable video coding according to this application;
FIG. 6a to FIG. 6c are diagrams of common sampling formats of pictures in a YUV format;
FIG. 7a to FIG. 7c are diagrams of common chrominance sampling locations;
FIG. 8 is an example diagram of a chrominance picture and chrominance subpictures;
FIG. 9 is an example block diagram of a picture scalable encoding architecture according to an embodiment of this application;
FIG. 10 is an example block diagram of a picture scalable decoding architecture according to an embodiment of this application;
FIG. 11 is a flowchart of a process 1100 of a picture scalable encoding method according to this application;
FIG. 12 is an example diagram of a structure of an enhancement layer encoder;
FIG. 13 is an example flowchart of a picture scalable decoding method according to this application;
FIG. 14 is an example diagram of a structure of an enhancement layer encoder;
FIG. 15 is an example diagram of a cross-component prediction algorithm;
FIG. 16 is an example diagram of a cross-component prediction algorithm;
FIG. 17 is an example diagram of a cross-component prediction algorithm;
FIG. 18 is an example diagram of a cross-component prediction algorithm;
FIG. 19 is a diagram of a structure of an encoding apparatus 1900 according to an embodiment of this application; and
FIG. 20 is a diagram of a structure of a decoding apparatus 2000 according to an embodiment of this application.

### DESCRIPTION OF EMBODIMENTS

To make objectives, technical solutions, and advantages of this application clearer, the following clearly and completely describes the technical solutions in this application with reference to accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Video compression coding technologies are widely used in fields such as multimedia services, broadcast, video communication, and storage. In recent years, two standard organizations, namely, the ITU-T and the ISO/IEC, jointly formulated and released three video coding standards, namely, H.264/AVC, H.265/HEVC, and H.266/VVC, in 2003, 2013, and 2020. At the same time, the AVS standard group also formulates and outputs a series of video picture coding standards such as AVS1, AVS2, and AVS3. In addition, the AOM alliance released the AV1 video coding solution in 2018. The foregoing video coding technical solutions all use a hybrid architecture based on block division and transform quantization, and continuous technical iteration is performed on specific modules such as a block division module, a prediction module, a transform module, an entropy coding module, and a loop filtering module, to continuously improve compression efficiency of a video picture.

Video coding typically refers to processing of a sequence of pictures, where the sequence of pictures forms a video or a video sequence. In the field of video coding, the terms "picture (picture)", "frame (frame)", and "image (image)" may be used as synonyms. Video coding (or coding in general) includes two parts: video encoding and video decoding. Video encoding is performed on a source side, and typically includes processing (for example, compressing) an original video picture to reduce an amount of data required for representing the video picture (for more efficient storage and/or transmission). Video decoding is performed on a destination side, and typically includes inverse processing in comparison with processing of an encoder to reconstruct the video picture. "Coding" of a video picture (or a picture in general) in embodiments should be understood as "encoding" or "decoding" of a video picture or a video sequence. A combination of an encoding part and a decoding part is also referred to as CODEC (encoding and decoding, CODEC).

In a case of lossless video coding, an original video picture can be reconstructed. In other words, a reconstructed video picture has same quality as the original video picture (it is assumed that no transmission loss or other data loss occurs during storage or transmission). In a case of lossy video coding, further compression is performed through, for example, quantization, to reduce an amount of data required for representing a video picture, and the video picture cannot be completely reconstructed on a decoder side. In other words, quality of a reconstructed video picture is lower or poorer than that of the original video picture.

Several video coding standards are used for "lossy hybrid video coding" (that is, spatial prediction and temporal prediction in a pixel domain are combined with 2D transform coding for applying quantization in a transform domain). Each picture of a video sequence is typically partitioned into a set of non-overlapping blocks, and coding is typically performed at a block level. To be specific, on an encoder side, a video is usually processed, that is, encoded, at a block (video block) level. For example, a prediction block is generated through spatial (intra) prediction and temporal (inter) prediction, the prediction block is subtracted from a current block (block being processed or to be processed) to obtain a residual block, and the residual block is transformed in the transform domain and quantized to reduce an amount of data that is to be transmitted (compressed). On a decoder side, an inverse processing part relative to an encoder is applied to an encoded block or a compressed block to reconstruct the current block for representation. In addition, the encoder needs to duplicate a processing step of a decoder, so that the encoder and the decoder generate same prediction (for example, intra prediction and inter prediction) and/or reconstructed pixels for processing, that is, coding, a subsequent block.

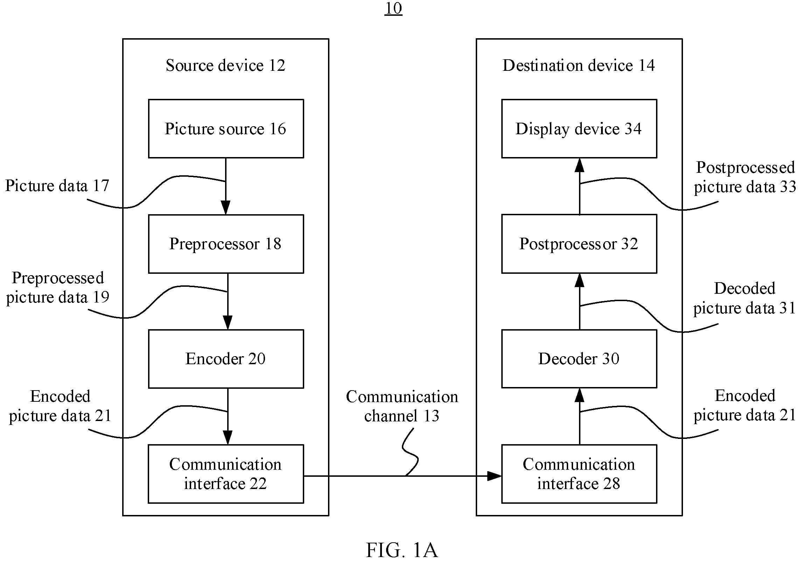

In the following embodiment of a coding system 10, an encoder 20 and a decoder 30 are described based on FIG. 1A to FIG. 3.

FIG. 1A is a block diagram of a coding system 10 according to an embodiment of this application, for example, a video coding system 10 (or a coding system 10 for short) that may utilize a technology of this application. A video encoder 20 (or an encoder 20 for short) and a video decoder 30 (or a decoder 30 for short) of the video coding system 10 represent devices that may be configured to perform various technologies based on various examples described in this application.

As shown in FIG. 1A, the coding system 10 includes a source device 12. The source device 12 is configured to provide encoded picture data 21, for example, an encoded picture, for a destination device 14 for decoding the encoded picture data 21.

The source device 12 includes an encoder 20, and may additionally, that is, optionally, include a picture source 16, a preprocessor (or preprocessing unit) 18, for example, a picture preprocessor, and a communication interface (or communication unit) 22.

The picture source 16 may include or be any type of picture capturing device, for example, a picture capturing device for capturing a real-world picture, and/or any type of picture generating device, for example, a computer-graphics processing unit for generating a computer animated picture, or any type of device for obtaining and/or providing a real-world picture, a computer generated picture (for example, screen content, a virtual reality (virtual reality, VR) picture and/or any combination thereof (for example, an augmented reality (augmented reality, AR) picture). The picture source may be any type of memory or storage storing any of the aforementioned pictures.

In order to distinguish processing performed by the preprocessor (or preprocessing unit) 18, a picture (or picture data) 17 may also be referred to as an original picture (or original picture data) 17.

The preprocessor 18 is configured to receive the original picture data 17, and preprocess the original picture data 17, to obtain a preprocessed picture (or preprocessed picture data) 19. Preprocessing performed by the preprocessor 18 may, for example, include trimming, color format conversion (for example, from RGB to YCbCr), color correction, or de-noising. It may be understood that the preprocessing unit 18 may be an optional component.

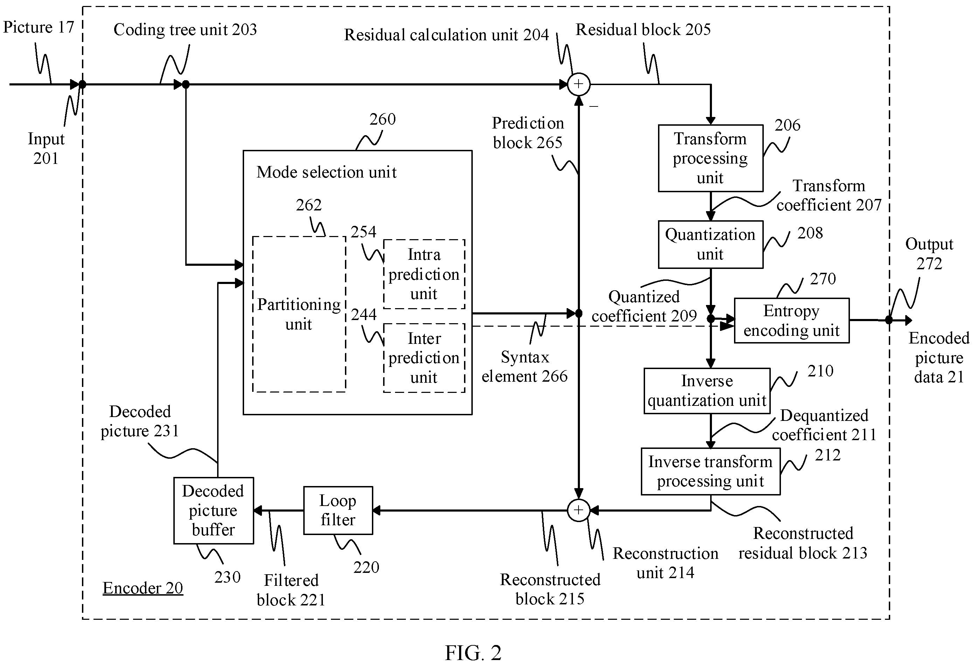

The video encoder (or encoder) 20 is configured to receive the preprocessed picture data 19 and provide the encoded picture data 21 (further details are described below, for example, based on FIG. 2).

The communication interface 22 of the source device 12 may be configured to receive the encoded picture data 21, and send the encoded picture data 21 (or any other processed version) to another device, for example, the destination device 14 or any other device over a communication channel 13, for storage or direct reconstruction.

The destination device 14 includes a decoder 30, and may additionally, that is, optionally, include a communication interface (or communication unit) 28, a postprocessor (or postprocessing unit) 32, and a display device 34.

The communication interface 28 of the destination device 14 is configured to: receive the encoded picture data 21 (or the any other processed version), for example, directly from the source device 12 or from any other source device, for example, a storage device, for example, the storage device is an encoded picture data storage device; and provide the encoded picture data 21 to the decoder 30.

The communication interface 22 and the communication interface 28 may be configured to send or receive the encoded picture data (or encoded data) 21 over a direct communication link between the source device 12 and the destination device 14, for example, a direct wired or wireless connection, or via any kind of network, for example, a wired or wireless network or any combination thereof, or any kind of private and public network, or any kind of combination thereof.

The communication interface 22 may be, for example, configured to package the encoded picture data 21 into an appropriate format, for example, packets, and/or process the encoded picture data using any kind of transmission encoding or processing for transmission over a communication link or communication network.

The communication interface 28, forming the counterpart of the communication interface 22, may be, for example, configured to receive the transmitted data and process the transmission data using any type of corresponding transmission decoding or processing and/or de-packaging to obtain the encoded picture data 21.

Both the communication interface 22 and the communication interface 28 may be configured as unidirectional communication interfaces as indicated by an arrow for the communication channel 13 in FIG. 1A pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded picture data transmission.

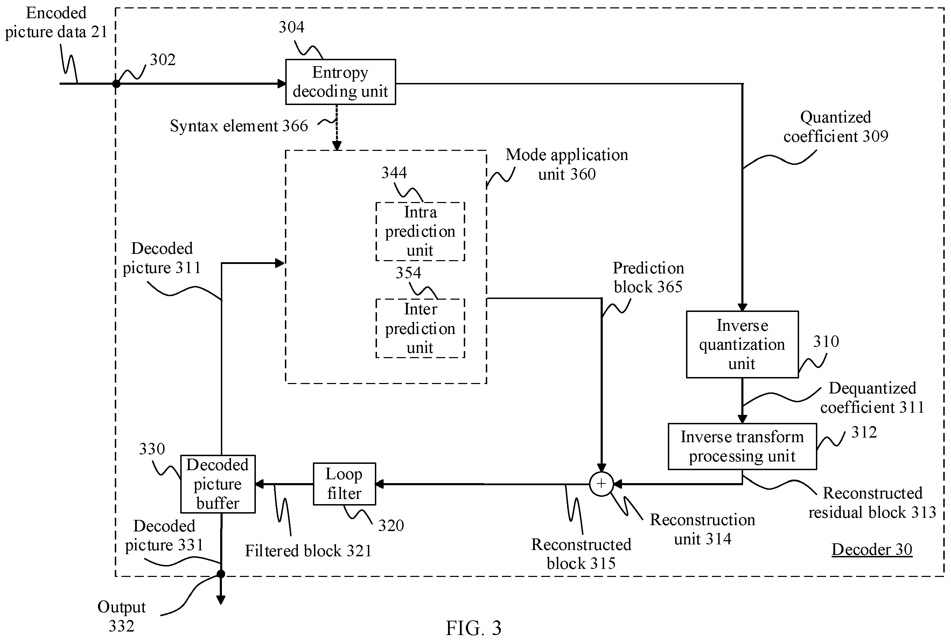

The video decoder (or decoder) 30 is configured to receive the encoded picture data 21 and provide decoded picture data (decoded picture data) 31 (further details are described below, for example, based on FIG. 3).

The postprocessor 32 is configured to postprocess the decoded picture data 31 (also referred to as reconstructed picture data), for example, the decoded picture, to obtain postprocessed picture data 33, for example, a postprocessed picture. Postprocessing performed by the postprocessing unit 32 may include, for example, color format conversion (for example, from YCbCr to RGB), color correction, trimming, or re-sampling, or any other processing, for example, for generating the decoded picture data 31 for display, for example, by the display device 34.

The display device 34 is configured to receive the postprocessed picture data 33 for displaying the picture, for example, to a user or viewer. The display device 34 may be or include any type of display for representing the reconstructed picture, for example, an integrated or external display or monitor. For example, the display may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS), a digital light processor (digital light processor, DLP), or any type of other display.

Although FIG. 1A shows that the source device 12 and the destination device 14 are independent devices. However, the device embodiment may also include both the source device 12 and the destination device 14 or include functions of both the source device 12 and the destination device 14, that is, include both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

As will be apparent for a skilled person based on the description, existence and (exact) division into different units or functions in the source device 12 and/or the destination device 14 shown in FIG. 1A may vary depending on an actual device and application.

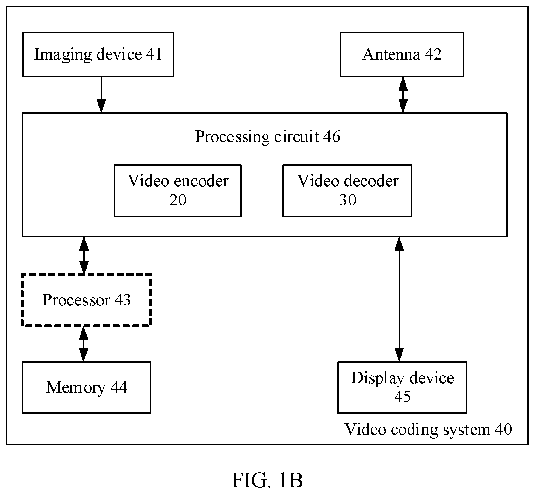

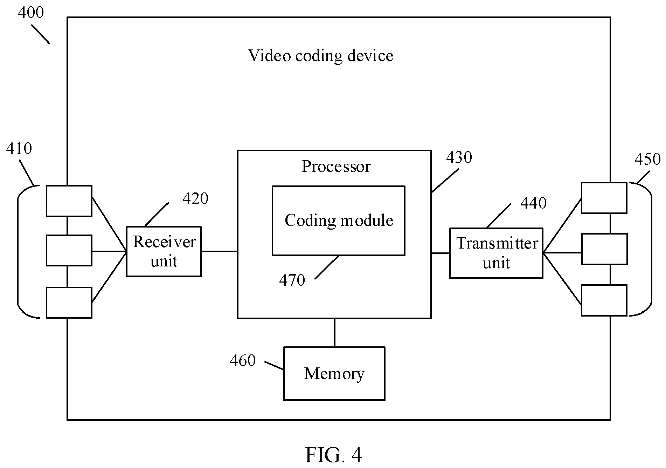

The encoder 20 (for example, the video encoder 20) or the decoder 30 (for example, the video decoder 30) or both the encoder 20 and the decoder 30 may be implemented through a processing circuit as shown in FIG. 1B, for example, one or more microprocessors, digital signal processors (digital signal processors, DSPs), application-specific integrated circuits (application-specific integrated circuits, ASICs), field-programmable gate arrays (field-programmable gate arrays, FPGAs), discrete logic, hardware, video coding dedicated processors, or any combinations thereof. The encoder 20 may be implemented through a processing circuit 46 to embody the various modules as discussed with respect to the encoder 20 of FIG. 2 and/or any other encoder system or subsystem described in the specification. The decoder 30 may be implemented through the processing circuit 46 to embody the various modules as discussed with respect to the decoder 30 of FIG. 3 and/or any other decoder system or subsystem described herein. The processing circuit 46 may be configured to perform the various operations as discussed later. As shown in FIG. 4, if the technologies are implemented partially in software, a device may store instructions for the software in a suitable computer-readable storage medium, and execute the instructions in hardware through one or more processors, to perform the technologies of the present invention. Either of the video encoder 20 and the video decoder 30 may be used as a part of a combined encoder/decoder (encoder/decoder, CODEC) in a single device, for example, as shown in FIG. 1B.

The source device 12 and the destination device 14 may include any of a wide range of devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content service servers or content delivery servers), broadcast receiver devices, broadcast transmitter devices, or the like, and may use no or any type of operating system. In some cases, the source device 12 and the destination device 14 may be equipped with components for wireless communication. Therefore, the source device 12 and the destination device 14 may be wireless communication devices.

In some cases, the video coding system 10 shown in FIG. 1A is merely an example, and the technologies of this application are applicable to video coding settings (for example, video encoding or video decoding) that do not necessarily include any data communication between an encoding device and a decoding device. In other examples, data is retrieved from a local memory, streamed over a network, or the like. A video encoding device may encode data and store encoded data into a memory, and/or a video decoding device may retrieve data from a memory and decode the data. In some examples, encoding and decoding are performed by devices that do not communicate with each other, but simply encode data into a memory and/or retrieve data from the memory and decode the data.

FIG. 1B is an example block diagram of a video coding system 40 according to an embodiment of this application. As shown in FIG. 1B, the video coding system 40 may include an imaging device 41, a video encoder 20, a video decoder 30 (and/or a video encoder/decoder implemented through a processing circuit 46), an antenna 42, one or more processors 43, one or more memories 44, and/or a display device 45.

As shown in FIG. 1B, the imaging device 41, the antenna 42, the processing circuit 46, the video encoder 20, the video decoder 30, the processor 43, the memory 44, and/or the display device 45 can communicate with each other. In different examples, the video coding system 40 may include only the video encoder 20 or only the video decoder 30.

In some examples, the antenna 42 may be configured to transmit or receive an encoded bitstream of video data. In addition, in some examples, the display device 45 may be configured to present the video data. The processing circuit 46 may include application-specific integrated circuit (application-specific integrated circuit, ASIC) logic, a graphics processing unit, a general-purpose processor, and the like. The video coding system 40 may also include the optional processor 43. The optional processor 43 may similarly include application-specific integrated circuit (application-specific integrated circuit, ASIC) logic, a graphics processing unit, a general-purpose processor, and the like. In addition, the memory 44 may be a memory of any type, for example, a volatile memory (for example, a static random access memory (static random access memory, SRAM) or a dynamic random access memory (dynamic random access memory, DRAM)) or a non-volatile memory (for example, a flash memory). In a non-limitative example, the memory 44 may be implemented by a cache memory. In other examples, the processing circuit 46 may include a memory (for example, a cache) for implementing a picture buffer.

In some examples, the video encoder 20 implemented through a logic circuit may include a picture buffer (which is implemented through, for example, the processing circuit 46 or the memory 44) and a graphics processing unit (which is implemented through, for example, the processing circuit 46). The graphics processing unit may be communicatively coupled to the picture buffer. The graphics processing unit may include the video encoder 20 implemented through the processing circuit 46 to embody the various modules discussed with respect to FIG. 2 and/or any other encoder system or subsystem described herein. The logic circuit may be configured to perform various operations described in this specification.

In some examples, the video decoder 30 may be implemented through the processing circuit 46 in a similar manner, to embody various modules described with reference to the video decoder 30 in FIG. 3 and/or any other decoder system or subsystem described in the specification. In some examples, the video decoder 30 implemented through the logic circuit may include a picture buffer (which is implemented through the processing circuit 46 or the memory 44) and a graphics processing unit (which is implemented through, for example, the processing circuit 46). The graphics processing unit may be communicatively coupled to the picture buffer. The graphics processing unit may include the video decoder 30 implemented through the processing circuit 46 to embody various modules discussed with respect to FIG. 3 and/or any other decoder system or subsystem described in the specification.

In some examples, the antenna 42 may be configured to receive the encoded bitstream of the video data. As described, the encoded bitstream may include data, an indicator, an index value, mode selection data, or the like related to a video frame encoded described in this specification, for example, data related to coding partitioning (for example, a transform coefficient or a quantized transform coefficient, an optional indicator (as described), and/or data defining the coding partitioning). The video coding system 40 may further include the video decoder 30 that is coupled to the antenna 42 and that is configured to decode the encoded bitstream. The display device 45 is configured to display a video frame.

It should be understood that in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may perform entropy encoding on the syntax element into an encoded video bitstream. In such examples, the video decoder 30 may parse such a syntax element and correspondingly decode related video data.

For ease of description, embodiments of the present invention are described by referring to versatile video coding (versatile video coding, VVC) reference software or high-efficiency video coding (high-efficiency video coding, HEVC) developed by the joint collaboration team on video coding (joint collaboration team on video coding, JCT-VC) of the ITU-T video coding experts group (video coding experts group, VCEG) and the ISO/IEC motion picture experts group (motion picture experts group, MPEG). A person of ordinary skill in the art understands that embodiments of the present invention are not limited to the HEVC or the VVC.

### Encoder and encoding method

FIG. 2 is an example block diagram of the video encoder 20 according to an embodiment of this application. As shown in FIG. 2, the video encoder 20 includes an input (or input interface) 201, a residual calculation unit 204, a transform processing unit 206, a quantization unit 208, an inverse quantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output (or output interface) 272. The mode selection unit 260 may include an inter prediction unit 244, an intra prediction unit 254, and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video codec.

The residual calculation unit 204, the transform processing unit 206, the quantization unit 208, and the mode selection unit 260 are referred to forming a forward signal path of the encoder 20, whereas the inverse quantization unit 210, the inverse transform processing unit 212, the reconstruction unit 214, a buffer 216, the loop filter 220, the decoded picture buffer (decoded picture buffer, DPB) 230, the inter prediction unit 244, and the intra prediction unit 254 are referred to forming a backward signal path of the encoder, where the backward signal path of the encoder 20 corresponds to a signal path of a decoder (refer to a decoder 30 in FIG. 3). The inverse quantization unit 210, the inverse transform processing unit 212, the reconstruction unit 214, the loop filter 220, the decoded picture buffer 230, the inter prediction unit 244, and the intra prediction unit 254 are further referred to forming a "built-in decoder" of the video encoder 20.

### Pictures&picture partitioning (pictures&blocks)

The encoder 20 may be configured to receive, for example, via the input 201, a picture (or picture data) 17, for example, a picture in a sequence of pictures forming a video or video sequence. The received picture or picture data may alternatively be a preprocessed picture (or preprocessed picture data) 19. For ease of simplicity, the picture 17 is used in the following description. The picture 17 may also be referred to as a current picture or to-be-coded picture (in particular in video coding to distinguish the current picture from other pictures, for example, previously encoded and/or decoded pictures of a same video sequence, that is, a video sequence which also includes the current picture).

A (digital) picture is or can be regarded as a two-dimensional array or matrix of samples with intensity values. A sample in the array may also be referred to as a pixel (pixel or pel) (a short form of a picture element). A quantity of samples in horizontal and vertical direction (or axis) of the array or picture define the size and/or resolution of the picture. For representation of color, three color components are usually employed, to be specific, the picture may be represented as or include three sample arrays. In an RBG format or color space, a picture includes a corresponding red, green and blue sample array. However, in video coding, each pixel is typically represented in a luminance/chrominance format or color space, for example, YCbCr, which includes a luminance component indicated by Y (sometimes also L is used instead) and two chrominance components indicated by Cb and Cr. The luminance (luma) component Y represents luminance or gray level intensity (for example, the two are the same in a gray-scale picture), while the two chrominance (chrominance, chroma for short) components Cb and Cr represent chromaticity or color information components. Accordingly, a picture in a YCbCr format includes a luminance sample array of luminance sample values (Y), and two chrominance sample arrays of chrominance values (Cb and Cr). A picture in an RGB format may be converted or transformed into a YCbCr format and vice versa, and the process is also referred to as color transformation or conversion. If a picture is monochrome, the picture may include only a luminance sample array. Accordingly, a picture may be, for example, an array of luminance samples in a monochrome format or an array of luminance samples and two corresponding arrays of chrominance samples in 4:2:0, 4:2:2, and 4:4:4 color formats.

In an embodiment, the embodiment of the video encoder 20 may include a picture partitioning unit (not shown in FIG. 2) configured to partition the picture 17 into a plurality of (typically non-overlapping) picture blocks 203. These blocks may also be referred to as root blocks, macro blocks (H.264/AVC) or coding tree blocks (coding tree blocks, CTBs) or coding tree units (coding tree units, CTUs) (H.265/HEVC and VVC). The partitioning unit may be configured to use a same block size for all pictures of a video sequence and a corresponding grid defining the block size, or to change a block size between pictures or picture subsets or picture groups, and partition each picture into corresponding blocks.

In other embodiments, the video encoder may be configured to directly receive the block 203 of the picture 17, for example, one, several or all the blocks forming the picture 17. The picture block 203 may also be referred to as a current picture block or a to-be-coded picture block.

Like the picture 17, the picture block 203 is also or can be regarded as a two-dimensional array or matrix of samples with intensity values (sample values), although of a smaller dimension than the picture 17. In other words, the block 203 may include one sample array (for example, a luminance array in a case of a monochrome picture 17, or a luminance or chrominance array in a case of a color picture) or three sample arrays (for example, a luminance array and two chrominance arrays in a case of a color picture 17) or any other quantity and/or type of arrays depending on a color format applied. A quantity of samples in horizontal and vertical directions (or axes) of the block 203 defines a size of the block 203. Accordingly, a block may be an array of M×N (M columns×N rows) samples, an array of M×N transform coefficients, or the like.

In an embodiment, the video encoder 20 shown in FIG. 2 is configured to encode the picture 17 block by block, for example, encode and predict per block 203.

In an embodiment, the video encoder 20 shown in FIG. 2 may be further configured to partition and/or encode a picture by using slices (also referred to as video slices), where a picture may be partitioned into or encoded by using one or more slices (typically non-overlapping). Each slice may include one or more blocks (for example, coding tree units CTUs) or one or more block groups (for example, tiles (tiles) in the H.265/HEVC/VVC standard and bricks (bricks) in the VVC standard).

In an embodiment, the video encoder 20 shown in FIG. 2 may be further configured to partition and/or encode a picture by using slices/tile groups (also referred to as video tile groups) and/or tiles (also referred to as video tiles), where a picture may be partitioned into or encoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

### Residual calculation

The residual calculation unit 204 is configured to calculate a residual block 205 based on the picture block 203 and a prediction block 265 (further details about the prediction block 265 are provided later), for example, by subtracting sample values of the prediction block 265 from sample values of the picture block 203, sample by sample (pixel by pixel) to obtain the residual block 205 in a sample domain.

### Transform

The transform processing unit 206 is configured to apply a transform, for example, a discrete cosine transform (discrete cosine transform, DCT) or discrete sine transform (discrete sine transform, DST), on sample values of the residual block 205 to obtain transform coefficients 207 in a transform domain. The transform coefficients 207 may also be referred to as transform residual coefficients and represent the residual block 205 in the transform domain.

The transform processing unit 206 may be configured to apply integer approximations of DCT/DST, such as transforms specified in H.265/HEVC. Compared with an orthogonal DCT transform, such integer approximations are usually scaled based on a factor. To preserve a norm of a residual block which is processed by using forward and inverse transforms, an additional scale factor is used as a part of the transform process. The scale factor is usually selected based on some constraints, for example, the scale factor being a power of two for a shift operation, a bit depth of the transform coefficient, and a tradeoff between accuracy and implementation costs. A specific scale factor is, for example, specified for an inverse transform, for example, by the inverse transform processing unit 212 on an encoder 20 side (and the corresponding inverse transform, for example, by an inverse transform processing unit 312 on a decoder 30 side), and a corresponding scale factor for the forward transform, for example, by the transform processing unit 206 on the encoder side 20 may be specified accordingly.

In an embodiment, the video encoder 20 (respectively the transform processing unit 206) may be configured to output transform parameters, for example, a type of transform or transforms, for example, directly or encoded or compressed through the entropy encoding unit 270, so that, for example, the video decoder 30 may receive and use the transform parameters for decoding.

### Quantization

The quantization unit 208 is configured to quantize the transform coefficients 207 to obtain quantized transform coefficients 209, for example, by applying scalar quantization or vector quantization. The quantized transform coefficient 209 may also be referred to as a quantized residual coefficient 209.

A quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for the scalar quantization, different scales may be used to implement finer or coarser quantization. A smaller quantization step size corresponds to finer quantization, and a larger quantization step size corresponds to coarser quantization. An appropriate quantization step size may be indicated by a quantization parameter (quantization parameter, QP). For example, the quantization parameter may be an index of a predefined set of appropriate quantization step sizes. For example, a smaller quantization parameter may correspond to finer quantization (a smaller quantization step size) and a larger quantization parameter may correspond to coarser quantization (a larger quantization step size), or vice versa. The quantization may include division by a quantization step size, and corresponding or inverse dequantization, for example, by the inverse quantization unit 210, may include multiplication by the quantization step size. In embodiments according to some standards such as HEVC, a quantization parameter may be used to determine the quantization step size. Generally, the quantization step size may be calculated based on a quantization parameter by using a fixed point approximation of an equation including division. Additional scale factors may be introduced for quantization and dequantization to restore the norm of the residual block, where the norm of the residual block may be modified because of a scale used in the fixed point approximation of the equation for the quantization step size and the quantization parameter. In an example implementation, scaling of the inverse transform and dequantization may be combined. Alternatively, customized quantization tables may be used and signaled from the encoder to the decoder, for example, in a bitstream. The quantization is a lossy operation, where a loss increases with increasing of the quantization step size.

In an embodiment, the video encoder 20 (respectively the quantization unit 208) may be configured to output quantization parameters (quantization parameters, QPs), for example, directly or encoded or compressed through the entropy encoding unit 270, so that, for example, the video decoder 30 may receive and apply the quantization parameters for decoding.

### Inverse quantization

The inverse quantization unit 210 is configured to apply inverse quantization of the quantization unit 208 on quantized coefficients to obtain dequantized coefficients 211, for example, by applying an inverse quantization scheme of the quantization scheme applied by the quantization unit 208 based on or using the same quantization step size as the quantization unit 208. The dequantized coefficients 211 may also be referred to as dequantized residual coefficients 211 and correspond - although typically not identical to the transform coefficients due to the loss by quantization - to the transform coefficients 207.

### Inverse transform

The inverse transform processing unit 212 is configured to apply the inverse transform of the transform applied by the transform processing unit 206, for example, an inverse discrete cosine transform (discrete cosine transform, DCT) or inverse discrete sine transform (discrete sine transform, DST), to obtain a reconstructed residual block 213 (or corresponding dequantized coefficients 213) in the sample domain. The reconstructed residual block 213 may also be referred to as a transform block 213.

### Reconstruction

The reconstruction unit 214 (for example, a summer 214) is configured to add the transform block 213 (that is, the reconstructed residual block 213) to the prediction block 265 to obtain a reconstructed block 215 in the sample domain, for example, by adding the sample values of the reconstructed residual block 213 and the sample values of the prediction block 265.

### Filtering

A loop filter unit 220 (or "loop filter" 220 for short), is configured to filter the reconstructed block 215 to obtain a filtered block 221, or in general, to filter reconstructed samples to obtain filtered sample values. The loop filter unit is, for example, configured to smooth pixel transitions, or otherwise improve video quality. The loop filter unit 220 may include one or more loop filters such as a de-blocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. An order of a filtering process may be the de-blocking filter, the SAO filter, and the ALF filter. For another example, a process called luma mapping with chroma scaling (luma mapping with chroma scaling, LMCS) (namely, an adaptive in-loop reshaper) is added. This process is performed before de-blocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 220 is shown as the loop filter in FIG. 2, in another configuration, the loop filter unit 220 may be implemented as a post-loop filter. The filtered block 221 may also be referred to as a filtered reconstructed block 221.

In an embodiment, the video encoder 20 (respectively the loop filter unit 220) may be configured to output loop filter parameters (such as SAO filter parameters or ALF filter parameters or LMCS parameters), for example, directly or encoded through the entropy encoding unit 270, so that, for example, the decoder 30 may receive and apply same or different loop filter parameters for decoding.

### Decoded picture buffer

The decoded picture buffer (decoded picture buffer, DPB) 230 may be a memory that stores reference pictures, or in general reference picture data, for encoding video data by the video encoder 20. The DPB 230 may be formed by any one of a variety of memory devices such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or other types of memory devices. The decoded picture buffer 230 may be configured to store one or more filtered blocks 221. The decoded picture buffer 230 may be further configured to store other previously filtered blocks, for example, previously reconstructed and filtered blocks 221, of the same current picture or of different pictures, for example, previously reconstructed pictures, and may provide complete previously reconstructed, that is, decoded, pictures (and corresponding reference blocks and samples) and/or a partially reconstructed current picture (and corresponding reference blocks and samples), for example, for inter prediction. The decoded picture buffer 230 may be further configured to store one or more unfiltered reconstructed blocks 215, or in general unfiltered reconstructed samples, for example, if the reconstructed block 215 is not filtered by the loop filter unit 220, or any other further processed version of the reconstructed blocks or samples.

### Mode selection (partitioning&prediction)

The mode selection unit 260 includes the partitioning unit 262, the inter prediction unit 244, and the intra prediction unit 254, and is configured to receive or obtain original picture data, for example, an original block 203 (the current block 203 of the current picture 17), and reconstructed block data, for example, filtered and/or unfiltered reconstructed samples or blocks of the same (current) picture and/or from one or more previously decoded pictures, for example, from the decoded picture buffer 230 or other buffers (for example, a line buffer, not shown in the figure). The reconstructed block data is used as reference picture data for prediction, for example, inter prediction or intra prediction, to obtain a prediction block 265 or predictor 265.

The mode selection unit 260 may be configured to determine or select a partitioning for a current block prediction mode (including no partitioning) and a prediction mode (for example, an intra or inter prediction mode) and generate a corresponding prediction block 265, which is used for the calculation of the residual block 205 and for the reconstruction of the reconstructed block 215.

In an embodiment, the mode selection unit 260 may be configured to select the partitioning and the prediction mode (for example, from those supported by or available for the mode selection unit 260), which provide the best match or in other words a minimum residual (the minimum residual means better compression for transmission or storage), or a minimum signaling overhead (the minimum signaling overhead means better compression for transmission or storage), or which considers or balances both. The mode selection unit 260 may be configured to determine the partitioning and the prediction mode based on rate distortion optimization (rate distortion Optimization, RDO), that is, select a prediction mode which provides minimum rate distortion optimization. Terms like "best", "lowest", and "optimal" in the specification do not necessarily refer to overall "best", "lowest", and "optimal", but may also refer to the fulfillment of a termination or selection criterion like a value exceeding or falling below a threshold or other constraints leading potentially to a "sub-optimum selection" but reducing complexity and processing time.

In other words, the partitioning unit 262 may be configured to partition a picture in a video sequence into a sequence of coding tree units (coding tree units, CTUs), and the CTU 203 may be further partitioned into smaller block partitions or sub-blocks (which form again blocks), for example, iteratively using quad-tree partitioning (quad-tree partitioning, QT), binary partitioning (binary-tree partitioning, BT) or triple-tree partitioning (triple-tree partitioning, TT) or any combination thereof, and to perform, for example, prediction for each of the block partitions or sub-blocks, where the mode selection includes selection of a tree structure of the partitioned block 203 and prediction modes are applied to each of the block partitions or subblocks.

The partitioning (for example, by the partitioning unit 262) and prediction processing (for example, by the inter prediction unit 244 and the intra prediction unit 254) performed by the video encoder 20 are explained in more detail below.

### Partitioning

The partitioning unit 262 may partition (or split) a coding tree unit 203 into smaller partitions, for example, smaller blocks of square or rectangular size. For a picture that has three sample arrays, a CTU includes an N×N block of luminance samples and two corresponding blocks of chrominance samples.

In the H.265/HEVC video coding standard, a frame of picture is partitioned into non-overlapping CTUs. A size of the CTU may be set to 64×64 (the size of the CTU may alternatively be set to another value, for example, a size of a CTU in JVET reference software JEM is increased to 128×128 or 256×256). A 64×64 CTU includes a rectangular sample matrix with 64 columns and 64 pixels per column, and each pixel includes a luminance component or/and a chrominance component.

In H.265, a QT-based CTU split method is used, a CTU is used as a root (root) node of a QT, and the CTU is recursively split into several leaf nodes (leaf nodes) in a QT-based split manner. One node corresponds to one picture area. If a node is not split, the node is referred to as a leaf node, and a picture area corresponding to the node is a CU. If a node is further split, a picture area corresponding to the node may be split into four areas of a same size (a length and a width of each of the four areas are respectively half a length and a width of the original area), and each area corresponds to one node. Whether these nodes are further split needs to be separately determined. Whether a node is split is indicated by a split flag split_cu_flag that is in a bitstream and that corresponds to the node. A node A is split into four nodes Bi once, where i=0, 1, 2, 3. Bi is referred to as a child node of A, and A is referred to as a parent node of Bi. A QT depth (qtDepth) of the root node is 0. A QT depth of a node is a QT depth of a parent node of the node plus 1.

In the H.265/HEVC standard, for a picture in a YUV4:2:0 format, a CTU includes one luminance block and two chrominance blocks. The luminance block and the chrominance block may be split in a same manner, and a coding tree is referred to as a luminance-chrominance joint coding tree. In VVC, if a current frame is an I frame, when a CTU is a node of a preset size (for example, 64×64) in an intra coded frame (I frame), a luminance block included in the node is split, by using a luminance coding tree, into a group of coding units that include only luminance blocks, and a chrominance block included in the node is split, by using a chrominance coding tree, into a group of coding units that include only chrominance blocks. Splitting by using the luminance coding tree and splitting by using the chrominance coding tree are independent of each other. Coding trees independently used for the luminance block and chrominance block are referred to as separate trees (separate trees). In H.265, a CU includes a luminance pixel and a chrominance pixel. In standards such as H.266 and AVS3, in addition to a CU that includes both a luminance pixel and a chrominance pixel, there are a luminance CU that includes only a luminance pixel and a chrominance CU that includes only a chrominance pixel.

As described above, the video encoder 20 is configured to determine or select a best or an optimum prediction mode from a set of (pre-determined) prediction modes. The set of prediction modes may include, for example, an intra prediction mode and/or an inter prediction mode.

### Intra prediction

A set of intra prediction modes may include 35 different intra prediction modes, for example, non-directional modes such as a DC (or average) mode and a planar mode, or directional modes such as those defined in HEVC, or may include 67 different intra prediction modes, for example, non-directional modes such as a DC (or average) mode and a planar mode, or directional modes such as those defined in VVC. For example, several conventional angular intra prediction modes are adaptively replaced with wide-angle intra prediction modes for non-square blocks defined in VVC. For another example, to avoid division operations for DC prediction, only a longer side is used to compute an average for non-square blocks. Intra prediction results of the planar mode may be further modified according to a position dependent intra prediction combination (position dependent intra prediction combination, PDPC) method.

The intra prediction unit 254 is configured to use reconstructed samples of neighboring blocks of the same current picture to generate an intra prediction block 265 based on an intra prediction mode of the set of intra prediction modes.

The intra prediction unit 254 (or in general the mode selection unit 260) is further configured to output intra prediction parameters (or in general information indicative of the selected intra prediction mode for the block) to the entropy encoding unit 270 in a form of syntax elements 266 for inclusion into encoded picture data 21, so that, for example, the video decoder 30 may receive and use the prediction parameters for decoding.

### Inter prediction

In a possible implementation, a set of inter prediction modes depends on available reference pictures (that is, previous at least partially decoded pictures, for example, stored in the DBP 230) and other inter prediction parameters, for example, whether the whole reference picture or only a part, for example, a search window area around the area of the current block, of the reference picture is used for searching for a best matching reference block, and/or for example, whether pixel interpolation is applied, for example, half/semi-pel, quarter-pel, and/or 1/16 pel interpolation, or not.

In additional to the foregoing prediction modes, a skip mode, and/or a direct mode may be applied.

For example, extended merge prediction, a merge candidate list of such mode is constructed by including the following five types of candidates in order: spatial MVP from spatial neighbor CUs, temporal MVP from collocated CUs, history-based MVP from an FIFO table, pairwise average MVP, and zero MVs. A bilateral-matching-based decoder side motion vector refinement (decoder side motion vector refinement, DMVR) may be applied to increase accuracy of the MVs of the merge mode. A merge mode with MVD (merge mode with MVD, MMVD) comes from a merge mode with motion vector differences. An MMVD flag is sent right after sending a skip flag and a merge flag to specify whether the MMVD mode is used for a CU. A CU-level adaptive motion vector resolution (adaptive motion vector resolution, AMVR) solution may be applied. AMVR allows an MVD of the CU to be coded in different precision. An MVD of a current CU may be adaptively selected based on a prediction mode of the current CU. When a CU is coded in the merge mode, a combined inter/intra prediction (combined inter/intra prediction, CIIP) mode may be applied to the current CU. Weighted averaging of inter and intra prediction signals is performed to obtain CIIP prediction. For affine motion compensated prediction, an affine motion field of a block is described by using motion information of two control point (4-parameter) or three control point motion vectors (6-parameter). Sub-block-based temporal motion vector prediction (sub-block-based temporal motion vector prediction, SbTMVP) is similar to the temporal motion vector prediction (temporal motion vector prediction, TMVP) in HEVC, but predicts motion vectors of sub-CUs within the current CU. Bi-directional optical flow (bi-directional optical flow, BDOF), previously referred to as BIO, is a simpler version that requires much less computation, especially in terms of a quantity of multiplications and a size of a multiplier. In a triangle partition mode, a CU is split evenly into two triangle-shaped partitions, using either diagonal split or anti-diagonal split. Besides, the bi-prediction mode is extended beyond simple averaging to allow weighted averaging of the two prediction signals.

The inter prediction unit 244 may include the motion estimation (motion estimation, ME) unit and the motion compensation (motion compensation, MC) unit (both not shown in FIG.2). The motion estimation unit may be configured to receive or obtain the picture block 203 (the current picture block 203 of the current picture 17) and a decoded picture 231, or at least one or more previously reconstructed blocks, for example, a reconstructed block of one or more other/different previously decoded pictures 231, for motion estimation. For example, a video sequence may include the current picture and the previously decoded pictures 231, or in other words, the current picture and the previously decoded pictures 231 may be a part of or form a sequence of pictures forming a video sequence.

The encoder 20 may, for example, be configured to select a reference block from a plurality of reference blocks of a same or different pictures of a plurality of other pictures and provide a reference picture (or reference picture index) and/or an offset (spatial offset) between a location (x, y coordinates) of the reference block and a location of the current block as inter prediction parameters to the motion estimation unit. This offset is also referred to as a motion vector (motion vector, MV).

The motion compensation unit is configured to obtain, for example, receive, an inter prediction parameter and to perform inter prediction based on or using the inter prediction parameter to obtain an inter prediction block 246. Motion compensation, performed by the motion compensation unit, may include fetching or generating the prediction block based on the motion/block vector determined by motion estimation, possibly performing interpolations to sub-pixel precision. Interpolation filtering may generate additional pixel samples from known pixel samples, thus potentially increasing a quantity of candidate prediction blocks that may be used to code a picture block. Upon receiving the motion vector corresponding to the PU of the current picture block, the motion compensation unit may locate the prediction block to which the motion vector points in one of the reference picture lists.

The motion compensation unit may further generate a syntax element associated with a block and a video slice, for decoding a picture block of the video slice by the video decoder 30. In addition or as an alternative to slices and respective syntax elements, tile groups and/or tiles and respective syntax elements may be generated or used.

### Entropy encoding

The entropy encoding unit 270 is configured to apply an entropy encoding algorithm or scheme (for example, a variable length coding (variable length coding, VLC) scheme, a context adaptive VLC (context adaptive VLC, CAVLC) scheme, an arithmetic coding scheme, a binarization algorithm, a context adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding or another entropy encoding methodology or technique) on the quantized residual coefficients 209, inter prediction parameters, intra prediction parameters, loop filter parameters and/or other syntax elements to obtain the encoded picture data 21 which can be output via the output 272, for example, in a form of an encoded bitstream 21, so that, for example, the video decoder 30 may receive and use the parameters for decoding. The encoded bitstream 21 may be transmitted to the video decoder 30, or stored in a memory for later transmission or retrieval by the video decoder 30.

Other structural variations of the video encoder 20 may be used to encode a video stream. For example, a non-transform-based encoder 20 may quantize a residual signal directly without the transform processing unit 206 for some blocks or frames. In another implementation, the encoder 20 may have the quantization unit 208 and the inverse quantization unit 210 that are combined into a single unit.

### Decoder and decoding method

FIG. 3 is an example block diagram of the video decoder 30 according to an embodiment of this application. The video decoder 30 is configured to receive encoded picture data 21 (for example, an encoded bitstream 21), for example, encoded by an encoder 20, to obtain a decoded picture 331. The encoded picture data or bitstream includes information for decoding the encoded picture data, for example, data that represents picture blocks of an encoded video slice (and/or tile groups or tiles) and associated syntax elements.

In the example of FIG. 3, the decoder 30 includes an entropy decoding unit 304, an inverse quantization unit 310, an inverse transform processing unit 312, a reconstruction unit 314 (for example, a summer 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process that is roughly inverse to the encoding process described with respect to the video encoder 100 in FIG 2.

As explained with regard to the encoder 20, the inverse quantization unit 210, the inverse transform processing unit 212, the reconstruction unit 214, the loop filter 220, the decoded picture buffer DPB 230, the inter prediction unit 344, and the intra prediction unit 354 are further referred to as forming the "built-in decoder" of the video encoder 20. Accordingly, the inverse quantization unit 310 may be identical in function to the inverse quantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for the respective units and functions of the video encoder 20 apply correspondingly to the respective units and functions of the video decoder 30.

### Entropy decoding

The entropy decoding unit 304 is configured to parse the bitstream 21 (or in general encoded picture data 21) and perform entropy decoding on the encoded picture data 21 to obtain quantized coefficients 309 and/or decoded coding parameters (not shown in FIG. 3), for example, any or all of inter prediction parameters (for example, a reference picture index and a motion vector), intra prediction parameter (for example, an intra prediction mode or an index), transform parameters, quantization parameters, loop filter parameters, and/or other syntax elements. The entropy decoding unit 304 may be configured to apply decoding algorithms or schemes corresponding to the encoding schemes as described with regard to the entropy encoding unit 270 of the encoder 20. The entropy decoding unit 304 may be further configured to provide inter prediction parameters, intra prediction parameters, and/or other syntax elements to the mode application unit 360, and provide other parameters to other units of the decoder 30. The video decoder 30 may receive syntax elements at a video slice level and/or a video block level. In addition or as an alternative to slices and respective syntax elements, tile groups and/or tiles and respective syntax elements may be received or used.

### Inverse quantization

The inverse quantization unit 310 may be configured to receive quantization parameters (quantization parameters, QPs) (or in general information related to the inverse quantization) and quantized coefficients from the encoded picture data 21 (for example, by parsing and/or decoding by the entropy decoding unit 304) and to apply, based on the quantization parameters, an inverse quantization on the decoded quantized coefficients 309 to obtain dequantized coefficients 311, which may also be referred to as transform coefficients 311. The inverse quantization process may include use of a quantization parameter calculated by the video encoder 20 for each video block in the video slice to determine a degree of quantization and, likewise, a degree of inverse quantization that should be applied.

### Inverse transform

The inverse transform processing unit 312 may be configured to receive the dequantized coefficients 311, also referred to as the transform coefficients 311, and to apply a transform to the dequantized coefficients 311 to obtain reconstructed residual blocks 213 in a sample domain. The reconstructed residual block 213 may also be referred to as a transform block 313. The transform may be an inverse transform, for example, an inverse DCT, an inverse DST, an inverse integer transform, or a conceptually similar inverse transform process. The inverse transform processing unit 312 may be further configured to receive transform parameters or corresponding information from the encoded picture data 21 (for example, by parsing and/or decoding by the entropy decoding unit 304) to determine the transform to be applied to the dequantized coefficients 311.

### Reconstruction

The reconstruction unit 314 (for example, a summer 314) is configured to add the reconstructed residual block 313 to a prediction block 365 to obtain a reconstructed block 315 in the sample domain, for example, by adding sample values of the reconstructed residual block 313 and sample values of the prediction block 365.

### Filtering

The loop filter unit 320 (either in a coding loop or after a coding loop) is configured to filter the reconstructed block 315 to obtain a filtered block 321, for example, to smooth pixel transitions, or otherwise improve video quality. The loop filter unit 320 may include one or more loop filters such as a de-blocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. An order of a filtering process may be the de-blocking filter, the SAO filter, and the ALF filter. For another example, a process called luma mapping with chroma scaling (luma mapping with chroma scaling, LMCS) (namely, an adaptive in-loop reshaper) is added. This process is performed before de-blocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 320 is shown as the loop filter in FIG. 3, in another configuration, the loop filter unit 320 may be implemented as a post-loop filter.

### Decoded picture buffer

Decoded video blocks 321 of a picture are then stored in the decoded picture buffer 330, which stores the decoded pictures 331 as reference pictures for subsequent motion compensation for other pictures and/or for output respectively display.

The decoder 30 is configured to output the decoded picture 311, for example, via an output 312, for presentation or viewing to a user.

### Prediction

The inter prediction unit 344 may be identical in function to the inter prediction unit 244 (in particular to the motion compensation unit), and the intra prediction unit 354 may be identical in function to the inter prediction unit 254. The inter prediction unit 344 and the intra prediction unit 354 perform split or partitioning decisions and prediction based on partitioning and/or prediction parameters or respective information received from the encoded picture data 21 (for example, by parsing and/or decoding by the entropy decoding unit 304). The mode application unit 360 may be configured to perform prediction (intra or inter prediction) per block based on reconstructed blocks, blocks or respective samples (filtered or unfiltered) to obtain the prediction block 365.

When the video slice is coded as an intra coded (intra coded, I) slice, the intra prediction unit 354 of the mode application unit 360 is configured to generate a prediction block 365 for a picture block of the current video slice based on a signaled intra prediction mode and data from previously decoded blocks of the current picture. When a video picture is coded as an inter coded (that is, B or P) slice, the inter prediction unit 344 (for example, the motion compensation unit) of the mode application unit 360 is configured to generate a prediction block 365 for a video block of the current video slice based on the motion vector and other syntax elements received from the entropy decoding unit 304. For inter prediction, the prediction blocks may be generated from one of reference pictures within one of reference picture lists. The video decoder 30 may construct reference frame lists, a list 0 and a list 1, using default construction techniques based on reference pictures stored in the DPB 330. The same or similar process may be applied for or by embodiments using tile groups (for example, video tile groups) and/or tiles (for example, video tiles) in addition or alternatively to slices (for example, video slices), for example, a video may be coded using I, P or B tile groups and/or tiles.

The prediction processing unit 360 is configured to determine prediction information for the video block of the current video slice by parsing the motion vector and the other syntax elements, and use the prediction information to generate a prediction block for the current video block that is being decoded. For example, the mode application unit 360 uses some of the received syntax elements to determine a prediction mode (for example, intra or inter prediction) used to code the video blocks of the video slice, an inter prediction slice type (for example, a B slice, a P slice, or a GPB slice), construction information for one or more of the reference picture lists for the slice, motion vectors for each inter coded video block of the slice, an inter prediction status for each inter coded video block of the slice, and other information, to decode the video blocks in the current video slice. The same or similar process may be applied for or by embodiments using tile groups (for example, video tile groups) and/or tiles (for example, video tiles) in addition or alternatively to slices (for example, video slices), for example, a video may be coded using I, P or B tile groups and/or tiles.

In an embodiment, the video encoder 30 shown in FIG. 3 may be further configured to partition and/or decode a picture by using slices (also referred to as video slices), where a picture may be partitioned into or decoded by using one or more slices (typically non-overlapping). Each slice may include one or more blocks (for example, CTUs) or one or more block groups (for example, tiles in the H.265/HEVC/VVC standard and bricks in the VVC standard).

In an embodiment, the video decoder 30 shown in FIG. 3 may be further configured to partition and/or decode a picture by using slices/tile groups (also referred to as video tile groups) and/or tiles (also referred to as video tiles), where a picture may be partitioned into or decoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Other variations of the video decoder 30 may be used to decode the encoded picture data 21. For example, the decoder 30 may generate an output video stream without processing by the loop filter unit 320. For example, a non-transform-based decoder 30 may inversely quantize a residual signal directly without the inverse transform processing unit 312 for some blocks or frames. In another implementation, the video decoder 30 may have the inverse quantization unit 310 and the inverse transform processing unit 312 that are combined into a single unit.

It should be understood that, in the encoder 20 and the decoder 30, a processing result of a current step may be further processed and then output to a next step. For example, after interpolation filtering, motion vector derivation or loop filtering, a further operation like a clip (clip) or shift (shift) operation, may be performed on a processing result of the interpolation filtering, motion vector derivation or loop filtering.

It should be noted that further operations may be applied to derived motion vectors of a current block (including but not limit to control point motion vectors in an affine mode, sub-block motion vectors in affine, planar, ATMVP modes, temporal motion vectors, and so on). For example, a value of the motion vector is constrained to a predefined range based on a representing bit of the motion vector. If the representing bit of the motion vector is bitDepth, the range is -2^(bitDepth-1) to 2^(bitDepth-1)-1, where "^" means exponentiation. For example, if bitDepth is set to 16, the range is -32768 to 32767; or if bitDepth is set to 18, the range is -131072 to 131071. For example, a value of the derived motion vector (for example, MVs of four 4×4 sub-blocks within one 8×8 block) is constrained such that a max difference between integer parts of the MVs of the four 4×4 sub-blocks is no more than N pixels, for example, no more than 1 pixel. Here provides two methods for constraining the motion vector based on the bitDepth.

Although the foregoing embodiments have been primarily described based on video coding, it should be noted that embodiments of the coding system 10, the encoder 20, and the decoder 30 and the other embodiments described herein may also be used for still picture processing or coding, that is, processing or coding of a single picture independent of any preceding or consecutive picture as in video coding. In general, the inter prediction unit 244 (the encoder) and the inter prediction unit 344 (the decoder) may not be available in a case in which picture processing is limited to a single picture 17. All other functions (also referred to as tools or technologies) of the video encoder 20 and the video decoder 30 may equally be used for still picture processing, for example, residual calculation 204/304, transform 206, quantization 208, inverse quantization 210/310, (inverse) transform 212/312, partitioning 262/362, intra prediction 254/354 and/or loop filtering 220/320, and entropy encoding 270 and entropy decoding 304.

FIG. 4 is an example block diagram of a video coding device 400 according to an embodiment of this application. The video coding device 400 is applicable to implementing the disclosed embodiments described in this specification. In an embodiment, the video coding device 400 may be a decoder like the video decoder 30 in FIG. 1A, or may be an encoder like the video encoder 20 in FIG. 1A.

The video coding device 400 includes: ingress ports 410 (or input ports 410) and a receiver unit (receiver unit, Rx) 420 that are configured to receive data; a processor, logic unit, or central processing unit (central processing unit, CPU) 430 configured to process data; a transmitter unit (transmitter unit, Tx) 440 and egress ports 450 (or output ports 450) that are configured to transmit data; and a memory 460 configured to store data. The video coding device 400 may further include an optical-to-electrical (optical-to-electrical, OE) component and an electrical-to-optical (electrical-to-optical, EO) component coupled to the ingress port 410, the receiver unit 420, the transmitter unit 440, and the egress port 450 for egress or ingress of an optical or electrical signal.

The processor 430 is implemented by hardware and software. The processor 430 may be implemented as one or more processor chips, cores (for example, a multi-core processor), FPGAs, ASICs, and DSPs. The processor 430 communicates with the ingress port 410, the receiver unit 420, the transmitter unit 440, the egress port 450, and the memory 460. The processor 430 includes a coding module 470. The coding module 470 implements the disclosed embodiments described above. For example, the coding module 470 performs, processes, prepares, or provides various coding operations. Therefore, the coding module 470 provides a substantial improvement to functions of the video coding device 400 and affects a switching of the video coding device 400 to a different state. Alternatively, the coding module 470 is implemented as instructions stored in the memory 460 and executed by the processor 430.

The memory 460 includes one or more disks, tape drives, and solid-state drives, and may be used as an overflow data storage device, to store programs when such programs are selected for execution, and to store instructions and data that are read during program execution. The memory 460 may be volatile and/or non-volatile, and may be a read-only memory (read-only memory, ROM), a random access memory (random access memory, RAM), a ternary content-addressable memory (ternary content-addressable memory, TCAM), and/or a static random access memory (static random access memory, SRAM).

For ease of understanding, the following first explains and describes some technologies or terms used in embodiments of this application. The technologies or terms are also used as a part of content of the present invention.

### 1. Scalable video coding

Scalable video coding, also referred to as scalable video encoding, is an extended coding standard of current video coding standards (which is generally extended standard scalable video coding (scalable video coding, SVC) of advanced video coding (advanced video coding, AVC) (H.264) or extended standard scalable high efficiency video coding (scalable high efficiency video coding, SHVC) of high efficiency video coding (high efficiency video coding, HEVC) (H.265)). The scalable video coding is mainly used to resolve packet loss and delay jitter problems caused by a real-time network bandwidth change in real-time video transmission.

A basic structure in the scalable video coding may be referred to as layering. In the scalable video coding technology, space-domain scaling (resolution scaling) is performed on original picture blocks, so that bitstreams of layers of different resolution can be obtained. The resolution may be a size of a picture block in a unit of pixels. Resolution at a low layer is low, and resolution at a high layer is not less than the resolution at the low layer. Alternatively, time-domain scaling (frame rate scaling) is performed on original picture blocks, so that bitstreams of layers of different frame rates can be obtained. The frame rate may be a quantity of picture frames included in a video in unit time. A frame rate at a low layer is low, and a frame rate at a high layer is not less than the frame rate at the low layer. Alternatively, quality-domain scaling is performed on original picture blocks, so that bitstreams of layers of different coding quality can be obtained. The coding quality may be video quality. A picture distortion degree at a low layer is high, and a picture distortion degree at a high layer is not higher than the picture distortion degree at the low layer.

Usually, a layer referred to as a base layer is a bottommost layer in the scalable video coding. In the space-domain scaling, a base layer picture block is coded at lowest resolution. In the time-domain scaling, a base layer picture block is coded at a lowest frame rate. In the quality-domain scaling, a base layer picture block is coded at a highest QP or a lowest bit rate. That is, the base layer is a layer having lowest quality in the scalable video coding. A layer referred to as an enhancement layer is a layer above the base layer in the scalable video coding, and there may be a plurality of enhancement layers from bottom to top. A lowest enhancement layer performs encoding based on coding information obtained by the base layer, to obtain a combined bitstream, and has higher encoding resolution, a higher frame rate, or a higher bit rate than the base layer. A higher enhancement layer may perform encoding based on coding information of a lower enhancement layer, to obtain picture blocks of higher quality.

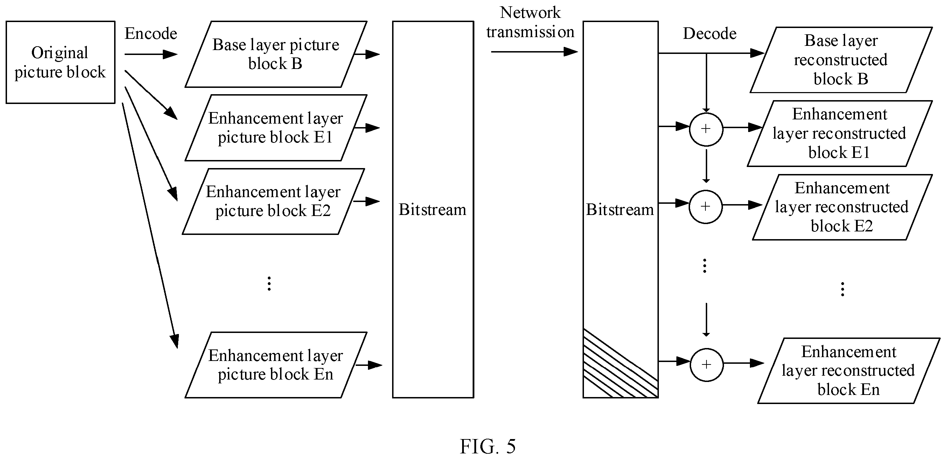

For example, FIG. 5 is an example diagram of layers of scalable video coding according to this application. As shown in FIG. 5, after original picture blocks are sent to a scalable encoder, the original picture blocks may be layered into a base layer picture block B and enhancement layer picture blocks (E1 to En, n≥1) based on different encoding configurations, and then bitstreams including a base layer bitstream and enhancement layer bitstreams are obtained through encoding. The base layer bitstream is generally a bitstream obtained from the picture blocks at lowest resolution, a lowest frame rate, or a lowest encoding quality parameter. The enhancement layer bitstream is a bitstream obtained by encoding the picture block based on the base layer at high resolution, a high frame rate, or a high encoding quality parameter. As a quantity of enhancement layers increases, space domain layers, time domain layers, or quality layers for coding also increase. When an encoder transmits the bitstreams to a decoder, transmission of the base layer bitstream is ensured first. When a network has a margin, bitstreams at higher layers are transmitted gradually. The decoder first receives and decodes the base layer bitstream, then decodes the received enhancement layer bitstreams in an ascending order of space domain, time domain, or quality layer by layer from a lower layer to a higher layer, and then superposes decoding information of a higher layer on a reconstructed block of a lower layer, to obtain a reconstructed block of higher resolution, a higher frame rate, or higher quality.

### 2. YUV

A video includes a series of pictures that are continuously collected in time. One picture usually includes sample arrays of three color components. Typically, one picture includes a sample array of one luminance component and sample arrays of two chrominance components, for example, a picture in a common color format like YCbCr (or YUV) or YCoCg, where Y represents luminance, and Cb/Cr, U/V, or Co/Cg respectively represents two chrominance components. Without loss of generality, the following uses YUV as an example for description. Alternatively, a sample array of a component in a picture is also referred to as a channel.

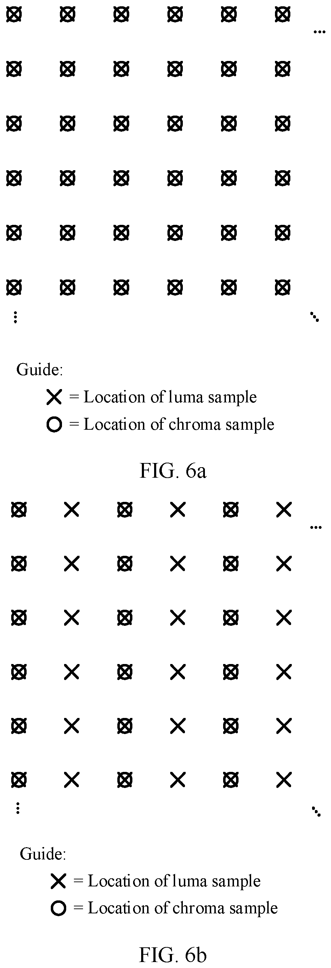

FIG. 6a to FIG. 6c are diagrams of common sampling formats of pictures in a YUV format. Three components of the picture in the YUV format may have different resolution. If sample arrays of the three components have a same size and have a same sampling point location, the sampling format is denoted as a 4:4:4 sampling format, as shown in FIG. 6a. Because a human eye visual system is insensitive to chrominance components, resolution of the two chrominance components can be reduced while human eye perception quality is maintained. Typically, horizontal resolution of a chrominance sample array is halved, that is, the sampling format is a 4:2:2 sampling format shown in FIG. 6b. Further, horizontal resolution is halved, that is, the sampling format is a 4:2:0 sampling format shown in FIG. 6c.

In the 4:2:0 sampling format, four luminance samples in a 2×2 shape correspond to one chrominance sample, and there may be a plurality of choices for a chrominance sampling location. FIG. 7a to FIG. 7c are diagrams of common chrominance sampling locations. As shown in FIG. 7a, a chrominance sampling location of a type 0 is in the middle of two luminance sampling locations on a left side. As shown in FIG. 7b, a chrominance sampling location of a type 1 is in a center of four luminance sampling locations. As shown in FIG. 7c, a chrominance sampling location of a type 2 is the same as an upper left luminance sampling location. A chrominance sampling location in FIG. 6c is of the type 0.

In embodiments of this application, a chrominance picture is used to represent sample arrays of two chrominance components UV. Specifically, sample arrays of two chrominance components in a YUV picture in a 4:4:4 format (which may also be briefly denoted as a YUV444 format) are denoted as a UV44 chrominance picture. FIG. 8 is an example diagram of a chrominance picture and chrominance subpictures. As shown in FIG. 8, UV44 is used to represent a chrominance picture formed by sample arrays of two chrominance components in a YUV picture in a 4:4:4 format. A UV44 chrominance picture is sampled in different phases, to obtain chrominance subpictures P0, P1, P2, and P3. A format of each chrominance subpicture is denoted as UV11. A set of the chrominance subpictures P1, P2, and P3 is denoted as UV33. It should be understood that a chrominance subpicture that is in a picture in a YUV420 format and that uses the type 2 of the chrominance sampling location shown in FIG. 7c is the chrominance subpicture P0 in FIG. 8. In a chrominance picture, a width and a height of each channel array are the same as a width and a height of a luminance channel in the YUV444 picture. In a chrominance subpicture, a width and a height of each channel array are equal to half of a width and half of a height of a luminance channel in the YUV444 picture.

### 3. Phase

Any 2×2 block included in a YUV4:4:4 picture includes four samples. Because locations of the four samples are different, it may be considered that the four different locations correspond to four different phases. Therefore, it can be learned that one 2×2 block includes four phases, the four phases are respectively an upper left phase, an upper right phase, a lower left phase, and a lower right phase, and numbers of the four phases may successively be 0, 1, 2, and 3. For ease of description, in embodiments of this application, the numbers are used to represent the four phases. However, it should be understood that the numbers are merely used as an example, and do not constitute a limitation on a chrominance phase.

### 4. Sample array

It is assumed that a size of a picture block using the 4:4:4 sampling format is 2W (width)×2H (height), a total of 2W (width)×2H (height) sampling points are included, and the picture block may be represented by using a sample array. In this case, a size of the sample array is also 2W (width)×2H (height), where each row in the sample array includes 2W elements, and each column in the sample array includes 2H elements. Locations of elements in the sample array one-to-one correspond to locations of sampling points in the picture block.

One picture usually includes three color components: a luminance component, a first chrominance component, and a second chrominance component. In this case, the three color components of the picture may be represented by using three sample arrays. Typically, one picture includes a sample array of one luminance component and sample arrays of two chrominance components.

The picture block using the 4:4:4 sampling format includes three 2W×2H sample arrays, where one 2W×2H sample array is used to represent a first chrominance component, one 2W×2H sample array is used to represent a second chrominance component, and one 2W^{x}2H sample array is used to represent a luminance component.

A picture block using the 4:2:0 sampling format (obtained based on the picture block using the 4:4:4 sampling format) includes two W×H sample arrays and one 2W×2H sample array, where one W×H sample array is used to represent a first chrominance component, one W×H sample array is used to represent a second chrominance component, and the 2W×2H sample array is used to represent a luminance component.

A UV44 chrominance picture block (obtained based on the two chrominance components of the picture block using the 4:4:4 sampling format) includes two 2W^{x}2H sample arrays, where one 2W×2H sample array is used to represent a first chrominance component, and one 2W×2H sample array is used to represent a second chrominance component.

A UV33 chrominance picture block (obtained based on the two chrominance components of the picture block using the 4:4:4 sampling format) includes six W×H sample arrays, where three W×H sample arrays are used to represent a first chrominance component, and three W×H sample arrays are used to represent a second chrominance component.

For ease of description, the following provides descriptions by using the foregoing several picture blocks as examples, but this does not constitute a limitation on a related picture block.

Usually, YUV4:2:0 is used for most pictures input to a coder for coding. A standard video codec based on YUV4:2:0 is widely used in various products, for example, a video application (application, APP), a mobile phone (chip), and a television (chip). Therefore, coding a picture with a high-sampling-rate chrominance component through an existing standard video codec based on the 4:2:0 sampling format is a common requirement. In a related technology, a compressed bitstream includes base layer YUV420 picture coded data and enhancement layer UV44 picture coded data. However, this technology has a problem of low prediction coding efficiency of the enhancement layer.

To resolve the foregoing technical problem, embodiments of this application provide a picture scalable coding method and apparatus. The following describes the technical solutions of this application.

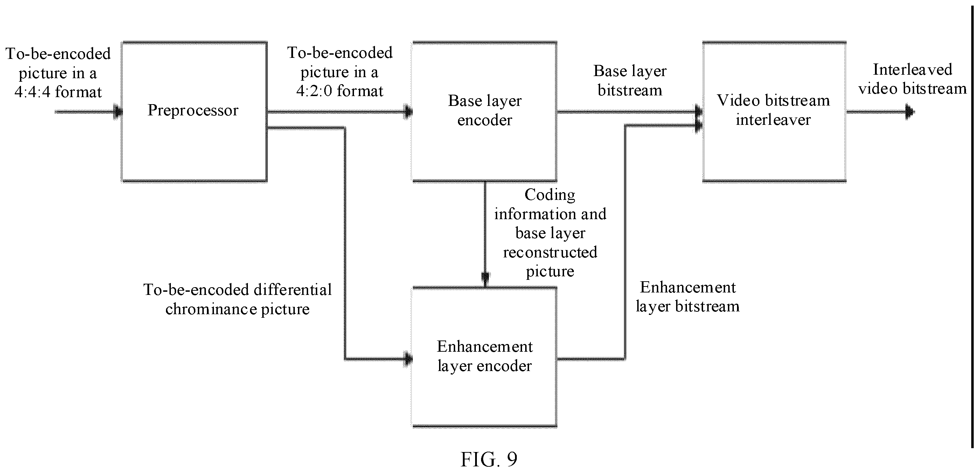

FIG. 9 is an example block diagram of a picture scalable encoding architecture according to an embodiment of this application. As shown in FIG. 9, the encoding architecture may be implemented by the encoder 20.

The encoder encodes each YUV444 picture in an input to-be-encoded video to obtain an interleaved video bitstream. A preprocessor performs a downsampling operation on chrominance components in the YUV444 picture to obtain a YUV420 picture, and obtain a differential chrominance picture between the YUV444 picture and the YUV420 picture. The two chrominance components in the YUV444 picture may form a UV44 chrominance picture, and two chrominance components in the YUV420 picture may form a UV11 chrominance picture.

A chrominance sampling location of the YUV420 picture may be of any type shown in FIG. 7a to FIG. 7c. If the chrominance sampling location of the YUV420 picture is of a type 2 shown in FIG. 7c, a chrominance subpicture in the YUV420 picture is a chrominance subpicture P0 shown in FIG. 8. If the chrominance sampling location of the YUV420 picture is of a type 1 shown in FIG. 7b, a downsampling operation needs to be performed on the UV44 chrominance picture, to obtain a UV11 chrominance subpicture in the YUV420. Typically, an averaging operation may be performed on four chrominance samples in FIG. 7b to obtain a chrominance sample at a new sampling location. Similarly, if the chrominance sampling location of the YUV420 picture is of a type 0 shown in FIG. 7a, the downsampling operation also needs to be performed on the UV44 chrominance picture to obtain chrominance samples at new sampling locations, so as to obtain the UV11 chrominance subpicture in the YUV420.

The differential chrominance picture may be the UV44 chrominance picture obtained from the YUV444 picture. Alternatively, the differential chrominance picture may be a UV33 chrominance subpicture obtained from the YUV444 picture. As shown in FIG. 8, the UV33 chrominance subpicture is a set of chrominance subpictures P1, P2, and P3. The UV33 chrominance subpicture includes six sample arrays in total, and a width and a height of each channel sample array are half of a width and a height of the YUV444 picture.

A base layer encoder performs an encoding operation on the input to-be-encoded YUV420 picture to obtain a compressed base layer bitstream, a base layer YUV420 reconstructed picture, and base layer YUV420 picture coding information. The base layer YUV420 picture coding information includes information such as a picture block split manner in the YUV420 picture, and an encoding mode and a motion vector of each picture block.

An enhancement layer encoder performs an encoding operation on the input differential chrominance picture to obtain a compressed enhancement layer bitstream. An input of the enhancement layer encoder includes the to-be-encoded differential chrominance picture, the YUV420 reconstructed picture output at a base layer, and the YUV420 picture coding information output at the base layer.

A video bitstream interleaver interleaves the input base layer bitstream and enhancement layer bitstream to obtain a compressed YUV444 video bitstream. Typically, picture-level bitstream interleaving or picture-block-level bitstream interleaving may be performed. Picture-level interleaving means that a compressed bitstream of the YUV420 picture and a compressed bitstream of the differential chrominance picture that are obtained by decomposing each YUV444 picture are sequentially written into the compressed YUV444 video bitstream. Picture-level bitstream interleaving means that a compressed bitstream of the YUV420 picture and a compressed bitstream of the differential chrominance picture that are obtained by decomposing each YUV444 picture are sequentially written into the compressed YUV444 video bitstream. Picture-block-level bitstream interleaving means that a compressed bitstream of a YUV420 picture block corresponding to each picture block in the YUV444 picture and a compressed bitstream of a differential chrominance picture block are sequentially written into the compressed YUV444 video bitstream. The base layer bitstream and the enhancement layer bitstream may alternatively be transmitted or stored independently. In this case, the foregoing bitstream interleaving operation is not required.

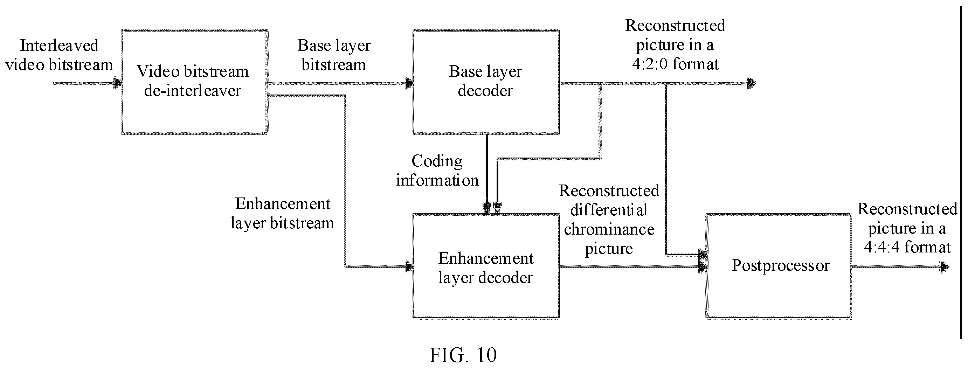

FIG. 10 is an example block diagram of a picture scalable decoding architecture according to an embodiment of this application. As shown in FIG. 10, the decoding architecture may be implemented by the decoder 30.

A video bitstream de-interleaver performs a de-interleaving operation on an input interleaved video bitstream to obtain a base layer bitstream and an enhancement layer bitstream, and transfers the base layer bitstream and the enhancement layer bitstream to a base layer decoder and an enhancement layer decoder respectively. A de-interleaving operation in the decoder corresponds to an interleaving operation in an encoder. The decoder needs to perform a de-interleaving operation corresponding to an interleaving method sampled by the encoder.

The base layer decoder performs a decoding operation on the base layer bitstream to obtain a YUV420 reconstructed picture and coding information. A base layer decoding operation may be considered as an inverse operation of a base layer encoding operation. The YUV420 reconstructed picture and the base layer coding information that are obtained by the decoder are the same as a YUV420 reconstructed picture and base layer coding information that are obtained by the encoder.

The enhancement layer decoder performs a decoding operation on the enhancement layer bitstream based on the YUV420 reconstructed picture and the base layer coding information that are obtained through decoding, to obtain a reconstructed differential chrominance picture. An enhancement layer decoding operation may be considered as an inverse operation of an enhancement layer encoding operation. When the encoder samples a differential chrominance picture in a specific format, the decoder obtains a reconstructed differential chrominance picture in the format.

A postprocessor reorganizes the YUV420 reconstructed picture and the reconstructed differential chrominance picture into a reconstructed picture in a YUV444 format. A postprocessor operation in the decoder may be considered as an inverse operation of a preprocessor operation in the encoder.

If a differential chrominance picture is a UV44 chrominance picture obtained from a YUV444 picture, the postprocessor uses the UV44 chrominance picture and a Y component in the YUV420 reconstructed picture to form a YUV444 reconstructed picture. In this case, a UV11 chrominance subpicture in the YUV420 reconstructed picture is discarded.

Alternatively, the differential chrominance picture may be a UV33 chrominance subpicture obtained from the YUV444 picture, and the postprocessor reorganizes chrominance subpictures P1, P2, and P3 in the differential chrominance picture and the UV11 chrominance subpicture in the YUV420 reconstructed picture into the YUV444 reconstructed picture. Specifically, if a chrominance sampling location of a YUV420 picture is of a type 2 shown in FIG. 7c, a chrominance subpicture in the YUV420 reconstructed picture is a chrominance subpicture P0 shown in FIG. 8. In this case, the chrominance subpicture P0 and the reconstructed chrominance subpictures P1, P2, and P3 may be spliced to obtain the YUV444 reconstructed picture. If the chrominance sampling location of the YUV420 picture is of a type 1 shown in FIG. 7b, a reconstructed chrominance subpicture in a UV11 format is not the chrominance subpicture P0 shown in FIG. 8. Because each chrominance sampling location is at a center of every four chrominance sampling locations in the UV44 chrominance picture, a chrominance sample of the YUV420 picture is an average value of every four chrominance samples in the UV44 chrominance picture. In this case, a chrominance sample at a location of the reconstructed chrominance subpicture P0 needs to be obtained through solving based on each chrominance sample in the reconstructed chrominance subpicture in the UV11 format and three chrominance samples in reconstructed chrominance subpictures P1, P2, and P3 corresponding to the chrominance sample. Because a preprocessor uses the average value of every four chrominance samples in the UV44 chrominance picture as a sample value at a corresponding sampling location in the UV11 chrominance subpicture, the chrominance sample at the location of the reconstructed chrominance subpicture P0 can be obtained by solving a simple unary linear equation during postprocessing. After the reconstructed chrominance subpicture P0 is obtained through solving, the reconstructed chrominance subpicture P0 and P1, P2, and P3 may be spliced to obtain the YUV444 reconstructed picture. Similarly, if the chrominance sampling location of the YUV420 picture is of a type 0 shown in FIG. 7a, the reconstructed chrominance subpicture P0 may also be correspondingly solved, and the reconstructed YUV444 picture is obtained through splicing.

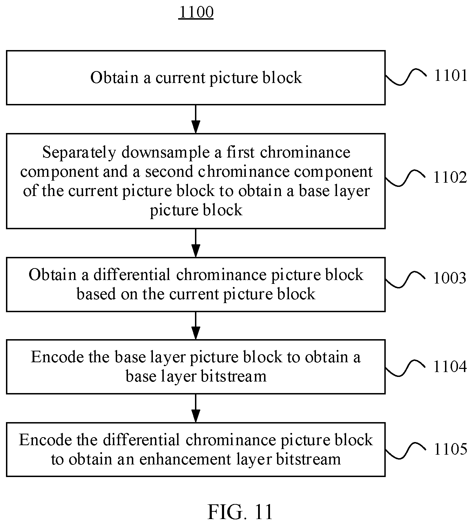

FIG. 11 is a flowchart of a process 1100 of a picture scalable encoding method according to this application. The process 1100 may be performed by the video encoder 20 (or an encoder). The process 1100 is described as a series of steps or operations. It should be understood that the process 1100 may be performed in various sequences and/or simultaneously, not limited to an execution sequence shown in FIG. 11. The process 1100 includes the following steps.

Step 1101: Obtain a current picture block.

A 4:4:4 sampling format is used for the current picture block. It is assumed that the current picture block includes three 2W×2H sample arrays. In this case, one 2W×2H sample array is used to represent a first chrominance component, one 2W×2H sample array is used to represent a second chrominance component, and one 2W×2H sample array is used to represent a luminance component.

The current picture block may be a picture block currently being processed by the encoder, and the picture block may be a largest coding unit (largest coding unit, LCU) in an entire frame of picture. The entire frame of picture may be any picture frame in a sequence of pictures included in a video being processed by the encoder. The picture frame is not divided, and a dimension of the picture frame is a dimension of a complete picture frame. In the H.265 standard, before video encoding is performed, an original picture frame is split into a plurality of coding tree units (coding tree units, CTUs). The CTU is a largest coding unit for video encoding, and may be split into CUs of different dimensions in a quad-tree manner. The CTU, as the largest coding unit, is also referred to as an LCU. Alternatively, the picture block may be an entire frame of picture. Alternatively, the picture block may be a region of interest (region of interest, ROI) in an entire frame of picture, that is, a picture region that needs to be processed and that is specified in the picture.

Step 1102: Separately downsample the first chrominance component and the second chrominance component of the current picture block to obtain a base layer picture block.

In this embodiment of this application, the first chrominance component may be a U component, a Cb component, a Co component, or the like, and the second chrominance component may be a V component, a Cr component, a Cg component, or the like. Alternatively, the first chrominance component may be a V component, a Cr component, a Cg component, or the like, and the second chrominance component may be a U component, a Cb component, a Co component, or the like.

A 4:2:0 sampling format is used for the base layer picture block; and the base layer picture block includes two W×H sample arrays and one 2W×2H sample array, where one W×H sample array is used to represent a first chrominance component, one W×H sample array is used to represent a second chrominance component, and the 2W×2H sample array is used to represent a luminance component. It can be learned that, compared with those of the two sample arrays that are in the current picture block and that are used to represent the chrominance components, widths and heights of the two sample arrays that are in the base layer picture block and that are used to represent the chrominance components are respectively reduced by half.

Chrominance sampling locations of the first chrominance component and the second chrominance component in the base layer picture block may be of any type shown in FIG. 7a to FIG. 7c. If the chrominance sampling location of the base layer picture block is of a type 2 shown in FIG. 7c, a UV11 chrominance picture block in the base layer picture block is a chrominance subpicture P0 shown in FIG. 8. If the chrominance sampling location of the base layer picture block is of a type 1 shown in FIG. 7b, a downsampling operation needs to be performed on a UV44 chrominance picture block in the current picture block, to obtain a UV11 chrominance picture block in the base layer picture block. Typically, an averaging operation may be performed on four chrominance samples in FIG. 7b to obtain a chrominance value at a new sampling location. Similarly, if the chrominance sampling location of the base layer picture block is of a type 0 shown in FIG. 7a, a downsampling operation also needs to be performed on a UV44 chrominance picture block in the current picture block to obtain chrominance samples at new sampling locations, so as to obtain a UV11 chrominance picture block in the base layer picture block.

Step 1103: Obtain a differential chrominance picture block based on the current picture block.

That the differential chrominance picture block includes a part or all of chrominance samples of the current picture block may include the following two cases:

In a first case, the differential chrominance picture block is a UV44 chrominance picture block; and the UV44 chrominance picture block includes two 2W×2H sample arrays, where one 2W×2H sample array is used to represent a first chrominance component, and one 2W×2H sample array is used to represent a second chrominance component.

The UV44 chrominance picture block may be a picture block formed by the first chrominance component (including one 2W×2H sample array) and the second chrominance component (including one 2W×2H sample array) in the current picture block (including three 2W×2H sample arrays). Therefore, the UV44 chrominance picture block includes the two 2W×2H sample arrays, where one 2W×2H sample array is used to represent the first chrominance component, and one 2W×2H sample array is used to represent the second chrominance component. The two 2W×2H sample arrays may be two 2W×2H sample arrays that are in the current picture block and that are used to represent the first chrominance component and the second chrominance component. Based on the UV44 chrominance picture block, complete chrominance information may be obtained on a decoder side, to ensure quality of a reconstructed picture block as much as possible.

In a second case, the differential chrominance picture block is a UV33 chrominance picture block; and the UV33 chrominance picture block includes six W×H sample arrays, where three W×H sample arrays are used to represent a first chrominance component, and three W×H sample arrays are used to represent a second chrominance component.

The UV33 chrominance picture block is a picture block formed by separately extracting sampling points in three phases (one phase is represented by one W×H sample array) from the first chrominance component (including one 2W×2H sample array) and the second chrominance component (including one 2W×2H sample array) in the current picture block (including three 2W×2H sample arrays), for example, a set of chrominance subpictures P1, P2, and P3 shown in FIG. 8. The chrominance subpictures P1, P2, and P3 respectively correspond to sampling points in three phases, and there are two chrominance components. Therefore, the UV33 chrominance picture block includes the six W×H sample arrays, where three W×H sample arrays are used to represent the first chrominance component, and one W×H sample array represents one phase; and three W×H sample arrays are used to represent the second chrominance component, and one W×H sample array represents one phase. Based on the UV33 chrominance picture block, there is no intersection of samples in picture blocks at a base layer and a reconstruction layer. This reduces encoded data. In addition, complete chrominance information may be obtained on the decoder side by splicing a base layer picture and the UV33 chrominance picture block, to ensure quality of a reconstructed picture block as much as possible.

It should be noted that the UV33 chrominance picture block may be a set of any three of the chrominance subpictures P0, P1, P2, and P3 shown in FIG. 8. To avoid overlapping with the UV11 chrominance picture block in the base layer picture block, samples in a phase of a non-UV11 chrominance picture block may be selected in a downsampling manner in step 1102, to obtain the UV33 chrominance picture block.

Step 1104: Encode the base layer picture block to obtain a base layer bitstream.

A base layer encoder performs an encoding operation on the input base layer picture block to obtain a compressed base layer bitstream, a base layer reconstructed block, and base layer coding information. The base layer coding information includes information such as a block split manner of the base layer picture block, and an encoding mode and a motion vector of each picture block. In this embodiment of this application, the base layer picture block may be encoded in the foregoing plurality of/picture encoding manners. This is not specifically limited.

The base layer encoder may obtain a base layer prediction block, then calculate a difference between corresponding samples in the base layer picture block and in the base layer prediction block to obtain a base layer residual, divide the base layer residual, perform transform and quantization on a divided base layer residual, and perform entropy encoding on a transformed and quantized base layer residual as well as base layer encoding control information, prediction information, motion information, and the like to obtain the base layer bitstream. In addition, the base layer encoder may further perform inverse quantization and inverse transform on a quantized quantization coefficient to obtain a base layer reconstructed residual, and then sum up corresponding samples in the base layer prediction block and in the base layer reconstructed residual to obtain the base layer reconstructed block.

Step 1105: Encode the differential chrominance picture block to obtain an enhancement layer bitstream.

FIG. 12 is an example diagram of a structure of an enhancement layer encoder. As shown in FIG. 12, an input of the enhancement layer encoder may include the base layer reconstructed block and the differential chrominance picture block, and an output may be the enhancement layer bitstream. In the enhancement layer encoder, a differential chrominance prediction block of the differential chrominance picture block may be obtained. In this way, the enhancement layer encoder may obtain a differential chrominance residual based on the differential chrominance picture block and the differential chrominance prediction block, and further encode the differential chrominance residual to obtain the enhancement layer bitstream. The differential chrominance prediction block may be obtained through three modules: a chrominance upsampling prediction module, a cross-component prediction module, and a co-location block replication module. Based on this, the three modules each may correspond to one manner of obtaining the differential chrominance prediction block. This is described below.

In this embodiment of this application, a spare reconstructed block may be first obtained; the differential chrominance prediction block is then obtained based on the spare reconstructed block, where the differential chrominance prediction block includes a first chrominance component and a second chrominance component; the differential chrominance residual is obtained based on the differential chrominance prediction block and the differential chrominance picture block; and the differential chrominance residual is encoded to obtain the enhancement layer bitstream.
1. Corresponding to the chrominance upsampling prediction module and the cross-component prediction module, the spare reconstructed block may be a base layer reconstructed block (for a method of obtaining the base layer reconstructed block, refer to the descriptions of step 1102, and details are not described herein again), and has a same sampling format as the base layer picture block. The 4:2:0 sampling format is used for the base layer reconstructed block; and the base layer reconstructed block includes two W×H sample arrays and one 2W^{x}2H sample array, where one W×H sample array is used to represent a first chrominance component, one W×H sample array is used to represent a second chrominance component, and the 2W×2H sample array is used to represent a luminance component.

Based on this, the differential chrominance prediction block may be obtained according to the following two methods:
Method 1 (corresponding to the upsampling prediction module): A UV11 chrominance reconstructed block is obtained based on the base layer reconstructed block, where the UV11 chrominance reconstructed block includes two W×H arrays, where one W×H array is used to represent a first chrominance component, and one W×H array is used to represent a second chrominance component; and the differential chrominance prediction block is obtained based on the UV11 chrominance reconstructed block.

The UV11 chrominance reconstructed block includes the two chrominance components of the base layer reconstructed block, and therefore includes two W×H arrays, where one W×H array is used to represent the first chrominance component, and one W×H array is used to represent the second chrominance component.

In a possible implementation, the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

In this embodiment of this application, the differential chrominance prediction block may be obtained through upsampling based on the UV11 chrominance reconstructed block. There are a plurality of optional upsampling manners, for example, bicubic interpolation and DCTIF interpolation that are commonly used in the industry. The upsampling manner is not specifically limited in embodiments of this application.

In a possible implementation, the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

If the chrominance sampling location of the base layer picture block is of the type 2 shown in FIG. 7c, and the UV11 chrominance picture block in the base layer picture block is the chrominance subpicture P0 shown in FIG. 8, correspondingly, the UV11 chrominance reconstructed block in the base layer reconstructed block may also be the chrominance subpicture P0 shown in FIG. 8. In this case, the to-be-obtained differential chrominance prediction block may be the set of the chrominance subpictures P1, P2, and P3 shown in FIG. 8. In this case, the chrominance subpictures P1, P2, and P3 may be separately obtained through resampling based on the obtained chrominance subpicture P0 (the UV11 chrominance reconstructed block), to obtain the differential chrominance prediction block. There are a plurality of optional resampling manners. For example, a filter that is the same as that used for upsampling may be used, for example, bicubic or DCTIF.

It should be understood that, in this embodiment of this application, both resampling and upsampling are sampling manners. A difference lies in that upsampling describes an increase in a quantity of sampling points, and resampling describes a change in a location of a sampling point (the quantity of sampling points remains unchanged).

Method 2 (corresponding to the cross-component prediction module): The differential chrominance prediction block is obtained based on linear relationships between the luminance component and the chrominance components of the base layer reconstructed block.
(1) When the differential chrominance picture block is the UV44 chrominance picture block, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a second linear relationship between the first luminance reconstructed block and the second chrominance reconstructed block is obtained; a first differential chrominance prediction block is obtained based on the first linear relationship and the luminance component of the base layer reconstructed block, where the first differential chrominance prediction block includes one 2W×2H sample array, and the 2W×2H sample array is used to represent a first chrominance component; and a second differential chrominance prediction block is obtained based on the second linear relationship and the luminance component of the base layer reconstructed block, where the second differential chrominance prediction block includes one 2W×2H sample array, and the 2W×2H sample array is used to represent a second chrominance component.
(2) When the differential chrominance picture block is the UV44 chrominance picture block, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a third linear relationship between the first chrominance reconstructed block and the second chrominance reconstructed block is obtained; a first differential chrominance prediction block is obtained based on the first linear relationship and the luminance component of the base layer reconstructed block, where the first differential chrominance prediction block includes one 2W×2H sample array, and the 2W×2H sample array is used to represent a first chrominance component; and a second differential chrominance prediction block is obtained based on the third linear relationship and the first differential chrominance prediction block, where the second differential chrominance prediction block includes one 2W×2H sample array, and the 2W×2H sample array is used to represent a second chrominance component.
(3) When the differential chrominance picture block is the UV33 chrominance picture block, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a second linear relationship between the first luminance reconstructed block and the second chrominance reconstructed block is obtained; three third differential chrominance prediction blocks are obtained based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and three fourth differential chrominance prediction blocks are obtained based on the second linear relationship and the three W×H sample arrays of the luminance component of the base layer reconstructed block, where the fourth differential chrominance prediction block includes one W×H sample array, and three W×H sample arrays are used to represent three W×H sample arrays of a second chrominance component.
(4) When the differential chrominance picture block is the UV33 chrominance picture block, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a third linear relationship between the first chrominance reconstructed block and the second chrominance reconstructed block is obtained; three third differential chrominance prediction blocks are obtained based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and three fourth differential chrominance prediction blocks are obtained based on the third linear relationship and the three third differential chrominance prediction blocks, where the fourth differential chrominance prediction block includes one W×H sample array, and three W×H sample arrays are used to represent three W×H sample arrays of a second chrominance component.

2. Corresponding to the co-location block replication module, the spare reconstructed block may be a buffered differential chrominance reconstructed picture. To be specific, a picture block that is in the buffered differential chrominance reconstructed picture and that is at a same location as a differential chrominance reconstructed block (a UV44 chrominance picture or a UV33 chrominance picture) is used as the differential chrominance prediction block.

An algorithm of an enhancement layer codec is simple. Compared with a YUV420 video picture hardware codec, the enhancement layer codec can support a coding operation of a video picture of a same specification with only a small increase in costs. Compared with a conventional YUV444 video picture codec, an enhancement layer codec has a large increase in costs, and deploying the codec in a software manner can also effectively reduce codec costs.

In this embodiment of this application, the picture block in the YUV444 sampling format is downsampled into the picture block in the YUV420 sampling format and the differential chrominance picture block, so that base layer encoding and enhancement layer encoding are separately performed on the picture block in the YUV420 sampling format and the differential chrominance picture block. Bitstream transmission of the base layer picture block can ensure picture transmission efficiency. In addition, transmission of the differential chrominance picture block may provide a high-frequency component of a chrominance component of the picture block. This ensures picture quality.

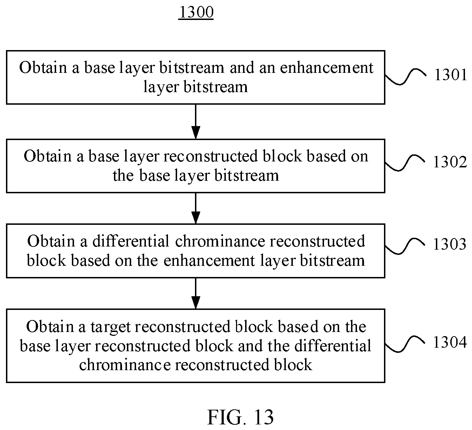

FIG. 13 is an example flowchart of a picture scalable decoding method according to this application. A process 1300 may be performed by the video decoder 30 (or a decoder). The process 1300 is described as a series of steps or operations. It should be understood that the process 000 may be performed in various sequences and/or simultaneously, not limited to an execution sequence shown in FIG. 13. The process 1300 includes the following steps.

Step 1301: Obtain a base layer bitstream and an enhancement layer bitstream.

Step 1302: Obtain a base layer reconstructed block based on the base layer bitstream.

Corresponding to a base layer picture block on an encoder side, a 4:2:0 sampling format is also used for the base layer reconstructed block obtained by decoding the base layer bitstream; and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component.

A base layer decoder performs a decoding operation on the input base layer bitstream to obtain the base layer reconstructed block and base layer decoding information. The base layer decoding information includes information such as a block split manner of the base layer reconstructed block, and a decoding mode and a motion vector of each reconstructed block. In this embodiment of this application, the base layer bitstream may be decoded in the foregoing plurality of/picture decoding manners. This is not specifically limited.

The base layer decoder may obtain a base layer prediction block. The base layer decoder may further perform inverse quantization and inverse transform on a quantized quantization coefficient to obtain a base layer reconstructed residual, and then sum up corresponding samples in the base layer prediction block and in the base layer reconstructed residual to obtain the base layer reconstructed block.

In this embodiment of this application, after the base layer bitstream is obtained, the base layer bitstream may be sent to a deployed YUV420 video picture decoder (the base layer decoder), to obtain a base layer reconstructed picture (YUV420). This can ensure at least normal display of a video. If the decoder has an enhancement layer bitstream processing capability, a target reconstructed picture (YUV444) may be obtained through decoding. This further improves video quality.

Step 1303: Obtain a differential chrominance reconstructed block based on the enhancement layer bitstream.

Corresponding to the encoder side, the differential chrominance reconstructed block may include the following two cases:
In a first case, the differential chrominance reconstructed block is a UV44 chrominance picture block; and the UV44 chrominance picture block includes two 2W×2H sample arrays, where one 2W×2H sample array is used to represent a first chrominance component, and one 2W×2H sample array is used to represent a second chrominance component.

The UV44 chrominance picture block may be a picture block including the first chrominance component and the second chrominance component. Therefore, the UV44 chrominance picture block includes the two 2W×2H sample arrays, where one 2W×2H sample array is used to represent the first chrominance component, and one 2W^{x}2H sample array is used to represent the second chrominance component. The two 2W×2H sample arrays may be two 2W×2H sample arrays that are in the target reconstructed block and that are used to represent the first chrominance component and the second chrominance component.

In a second case, the differential chrominance reconstructed block is a UV33 chrominance picture block; and the UV33 chrominance picture block includes six W×H sample arrays, where three W×H sample arrays are used to represent a first chrominance component, and three W×H sample arrays are used to represent a second chrominance component.

The UV33 chrominance picture block may be a set of chrominance subpictures P1, P2, and P3 shown in FIG. 8. The chrominance subpictures P1, P2, and P3 respectively correspond to sampling points in three phases, and there are two chrominance components. Therefore, the UV33 chrominance picture block includes the six W×H sample arrays, where three W×H sample arrays are used to represent the first chrominance component, and one W×H sample array represents one phase; and three W×H sample arrays are used to represent the second chrominance component, and one W×H sample array represents one phase.

FIG. 14 is an example diagram of a structure of an enhancement layer encoder. As shown in FIG. 14, an input of the enhancement layer decoder may include the base layer reconstructed block and the enhancement layer bitstream, and an output may be the differential chrominance reconstructed block. In the enhancement layer decoder, the enhancement layer bitstream may be decoded to obtain a differential chrominance residual, and then a differential chrominance prediction block is obtained. In this way, the enhancement layer decoder may obtain the differential chrominance reconstructed block based on the differential chrominance residual and the differential chrominance prediction block. The differential chrominance prediction block may be obtained through three modules: a chrominance upsampling prediction module, a cross-component prediction module, and a co-location block replication module. Based on this, the three modules each may correspond to one manner of obtaining the differential chrominance prediction block. This is described below.

In this embodiment of this application, a spare reconstructed block may be first obtained; the enhancement layer bitstream is then decoded to obtain the differential chrominance residual; the differential chrominance prediction block is obtained based on the spare reconstructed block, where the differential chrominance prediction block includes a first chrominance component and a second chrominance component; and the differential chrominance reconstructed block is obtained based on the differential chrominance prediction block and the differential chrominance residual.
1. Corresponding to the chrominance upsampling prediction module and the cross-component prediction module, the spare reconstructed block may be a base layer reconstructed block (for a method of obtaining the base layer reconstructed block, refer to the descriptions of step 1302, and details are not described herein again), and has a same sampling format as the base layer reconstructed block on the encoder side. The 4:2:0 sampling format is used for the base layer reconstructed block; and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component.
2. Corresponding to the co-location block replication module, the spare reconstructed block may be a buffered differential chrominance reconstructed picture. To be specific, a picture block that is in the buffered differential chrominance reconstructed picture and that is at a same location as a differential chrominance reconstructed block (a UV44 chrominance picture or a UV33 chrominance picture) is used as the differential chrominance prediction block.

In this embodiment of this application, for a method for obtaining the differential chrominance prediction block on a decoder side, refer to step 1105 in the foregoing method embodiment on the encoder side. Details are not described herein again.

Step 1304: Obtain the target reconstructed block based on the base layer reconstructed block and the differential chrominance reconstructed block.

Corresponding to a current picture block on the encoder side, the 4:4:4 sampling format is also used for the target reconstructed block. The target reconstructed block includes the three 2W×2H sample arrays, where one 2W×2H sample array is used to represent the first chrominance component, one 2W×2H sample array is used to represent the second chrominance component, and the 2W×2H sample array is used to represent the luminance component.

The target reconstructed block may be obtained through construction based on the luminance component of the base layer reconstructed block and the differential chrominance reconstructed block.

In a possible implementation, the differential chrominance reconstructed block is the UV44 chrominance picture block. In this case, the luminance component (including one 2W×2H sample array) of the base layer reconstructed block and the UV44 chrominance picture block (including two 2W×2H sample arrays) may be spliced to obtain the three 2W×2H sample arrays, where one 2W×2H sample array is used to represent the first chrominance component, one 2W×2H sample array is used to represent the second chrominance component, and one 2W×2H sample array is used to represent the luminance component, so as to obtain the target reconstructed block. The two W×H sample arrays that are in the base layer reconstructed block and that are used to represent the first chrominance component and the second chrominance component may be discarded.

In a possible implementation, the differential chrominance reconstructed block is the UV33 chrominance picture block. In this case, the base layer reconstructed block (including one 2W×2H sample array and two W×H sample arrays) and the UV33 chrominance picture block (including six W×H sample arrays) may be spliced to obtain one 2W×2H sample array and eight W×H sample arrays, where the eight W×H sample arrays may form two 2W×2H sample arrays, so as to obtain the target reconstructed block.

In this embodiment of this application, through picture scalable decoding, the target reconstructed block in the YUV444 sampling format is restored from the base layer reconstructed block in the YUV420 sampling format and the differential chrominance reconstructed block at an enhancement layer that are obtained through decoding. Bitstream transmission of a base layer picture block can ensure picture transmission efficiency. In addition, transmission of a differential chrominance picture block may provide a high-frequency component of a chrominance component of a picture block. This ensures picture quality.

The following describes the solutions in the foregoing method embodiments by using several specific embodiments.

For example, a YUV4:4:4 sampling format is used for a current picture block; and the current picture block includes three 2W×2H sample arrays, where one 2W×2H sample array is used to represent a first chrominance component, one 2W×2H sample array is used to represent a second chrominance component, and one 2W×2H sample array is used to represent a luminance component.

A 4:2:0 sampling format is used for a base layer picture block; and the base layer picture block includes two W×H sample arrays and one 2W×2H sample array, where one W×H sample array is used to represent a first chrominance component, one W×H sample array is used to represent a second chrominance component, and the 2W×2H sample array is used to represent a luminance component. A base layer encoder may use an existing 4:2:0 format video coding solution in the industry, for example, a YUV420 video coding method specified in the H.265 standard. This is not specifically limited.

### Embodiment 1

A differential chrominance picture block in this embodiment is a UV44 chrominance picture block obtained based on a current picture block.

### Encoder side

Refer to a structure of an enhancement layer encoder shown in FIG. 12. The differential chrominance picture block is a UV44 chrominance picture block, a differential chrominance prediction block is also a UV44 chrominance picture block, and a buffered differential chrominance reconstructed picture is a UV44 chrominance picture. A method for encoding the differential chrominance picture block in this embodiment is shown in FIG. 12. The enhancement layer encoder may obtain prediction of the differential chrominance picture block at an enhancement layer based on a base layer reconstructed block, and encode a differential chrominance residual to obtain an enhancement layer bitstream. In addition to the differential chrominance residual, enhancement layer encoding mode selection information and coding information required by an encoding mode also need to be written into the enhancement layer bitstream.

Similar to an existing video picture coding standard solution, the enhancement layer encoder buffers a historically buffered differential chrominance reconstructed picture (also referred to as a decoded UV44 chrominance picture), to use the differential chrominance reconstructed picture as a reference for subsequently encoding a picture block. Generally, an inter prediction technology is used to obtain prediction of a current coding block from a buffered decoded picture. In addition, the enhancement layer encoder may also use technologies for the existing video picture coding standard solution, including intra prediction, loop filtering, and the like. Because use of these technologies is well known to researchers in the field of video coding, details are not described herein again. An existing coding solution is usually applied to a picture including three channels, but a person in the art may alternatively directly extend to support processing of a picture including two channels. The following focuses on a special design of the enhancement layer encoder in this embodiment of this application.

This embodiment of this application includes a combination of three specially designed algorithm modules. The three algorithm modules include a chrominance upsampling prediction module, a cross-component prediction module, and a co-location block replication module.
1. The chrominance upsampling prediction module may obtain accurate prediction of a low-frequency component in a chrominance component. Because a UV11 chrominance picture block in a base layer picture block is obtained by performing downsampling on the enhancement layer UV44 chrominance picture block, the UV11 chrominance picture block is highly similar to the UV44 chrominance picture block, but the UV44 chrominance picture block includes a richer high-frequency signal component. Because a width and a height of the UV44 chrominance picture block are twice a width and a height of the UV11 chrominance picture block, an upsampling operation needs to be performed on the UV11 chrominance picture block to obtain prediction of the UV44 chrominance picture block. A prediction residual is a high-frequency component in the UV44 chrominance picture block, and residual encoding is performed on the prediction residual and the prediction residual is written into the enhancement layer bitstream. There are a plurality of optional upsampling manners, for example, bicubic interpolation and DCTIF interpolation that are commonly used in the industry, to obtain prediction of each UV44 chrominance picture block. An existing residual coding scheme in the industry may be selected to process a UV44 prediction residual of each picture block. For example, 2D DCT transform may be performed on the prediction residual, a transform coefficient is quantized, and then a quantized coefficient is converted into a binary symbol in a manner such as variable-length coding or arithmetic encoding, so as to output the binary symbol as a compressed bitstream.
2. The cross-component prediction module may migrate a high-frequency component in a luminance component of the base layer reconstructed block to prediction of the enhancement layer UV44 chrominance picture block. Therefore, a disadvantage that the chrominance upsampling module cannot predict the high-frequency component in the UV44 chrominance picture block can be compensated. Specifically, linear models of the luminance component and two chrominance components in the base layer reconstructed block are separately built, and prediction of two chrominance samples at a same location of each luminance sample in the luminance component is obtained based on the two linear models.

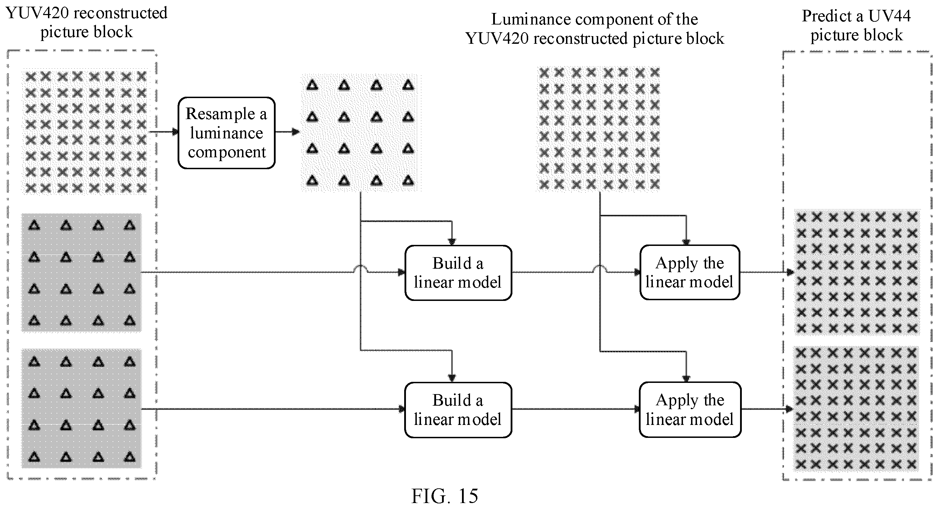

For example, FIG. 15 is an example diagram of a cross-component prediction algorithm. As shown in FIG. 15, a group of luminance and chrominance sampling pairs at a same sampling location is required for building a linear model. In addition, a sampling location of a chrominance component of a target reconstructed block may be different from a sampling location of a luminance component. In this case, a resampling operation needs to be performed on the luminance component, to obtain a sample value of the luminance component at the sampling location of the chrominance component.

In this embodiment, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a second linear relationship between the first luminance reconstructed block and the second chrominance reconstructed block is obtained; a first differential chrominance prediction block is obtained based on the first linear relationship and the luminance component of the base layer reconstructed block, where the first differential chrominance prediction block includes one 2W×2H sample array, and the 2W×2H sample array is used to represent a first chrominance component; and a second differential chrominance prediction block is obtained based on the second linear relationship and the luminance component of the base layer reconstructed block, where the second differential chrominance prediction block includes one 2W×2H sample array, and the 2W×2H sample array is used to represent a second chrominance component.

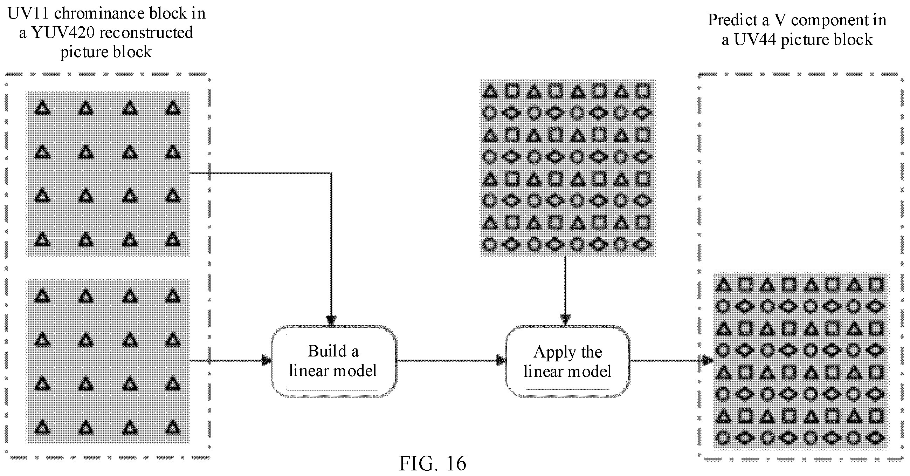

For example, FIG. 16 is an example diagram of a cross-component prediction algorithm. As shown in FIG. 16, a group of luminance and chrominance sampling pairs at a same sampling location is required for building a linear model. In addition, a sampling location of a chrominance component of a target reconstructed block may be different from a sampling location of a luminance component. In this case, a resampling operation needs to be performed on the luminance component, to obtain a sample value of the luminance component at the sampling location of the chrominance component.

A difference from the embodiment shown in FIG. 15 lies in that a first linear relationship between a first luminance reconstructed block and a first chrominance reconstructed block is obtained; a third linear relationship between the first chrominance reconstructed block and a second chrominance reconstructed block is obtained; a first differential chrominance prediction block is obtained based on the first linear relationship and the luminance component of the base layer reconstructed block, where the first differential chrominance prediction block includes one 2W×2H sample array, and the 2W×2H sample array is used to represent a first chrominance component; and a second differential chrominance prediction block is obtained based on the third linear relationship and the first differential chrominance prediction block, where the second differential chrominance prediction block includes one 2W×2H sample array, and the 2W×2H sample array is used to represent a second chrominance component.

3. The co-location block replication module obtains, from the historically buffered differential chrominance reconstructed picture, a picture block at a same location as the current picture block, and uses the picture block as prediction of the current picture block. Different from the foregoing two prediction modules, the module no longer relies on the UV11 chrominance picture block in the low-resolution base layer reconstructed block to obtain prediction of the UV44 chrominance picture block, but obtains prediction from the historically buffered differential chrominance reconstructed picture. When video content is static, a co-location block replication mode may be used to obtain high-quality prediction of the current coding block at an extremely low cost, and is more efficient than the first two prediction modes. Certainly, if the video content continuously changes, the chrominance upsampling mode and the cross-component prediction mode are used to obtain more accurate prediction.

It can be learned that, compared with a conventional YUV444 video picture coding solution, in this embodiment of this application, correlation between a luminance component and a chrominance component and similarity between four phases of a same color component are more fully used, so that better rate-distortion performance can be obtained.

This embodiment of this application includes the combination of the three algorithm modules. When the differential chrominance prediction block is obtained, one of the three modules may be selected.

### Decoder side

Refer to a structure of an enhancement layer decoder shown in FIG. 14. The enhancement layer bitstream is obtained based on the UV44 chrominance picture block, the differential chrominance prediction block is also the UV44 chrominance picture block, and the buffered differential chrominance reconstructed picture is the UV44 chrominance picture. A method for decoding the enhancement layer bitstream in this embodiment is shown in FIG. 14. The enhancement layer decoder obtains prediction of a differential chrominance reconstructed block at the enhancement layer based on the base layer reconstructed block, and decodes the enhancement layer bitstream to obtain the differential chrominance residual, to further obtain the differential chrominance reconstructed block.

A decoding operation is an inverse operation of an encoding operation. Therefore, the decoding operation may be understood with reference to the descriptions of the enhancement layer encoder. The enhancement layer decoder buffers the historically buffered differential chrominance reconstructed picture (also referred to as the decoded UV44 chrominance picture) as a reference for subsequently decoding a picture. The inter prediction technology is usually used to obtain prediction of the differential chrominance reconstructed block from the buffered differential chrominance reconstructed picture. In addition, the enhancement layer decoder may also use the technologies for the existing video picture coding standard solution, including intra prediction, loop filtering, and the like. Because use of these technologies is well known to the researchers in the field of video coding, details are not described herein again.

It can be learned by comparing FIG. 12 and FIG. 14 that operations of the three algorithm modules: the chrominance upsampling prediction module, the cross-component prediction module, and the co-location block replication module are completely the same in a codec. Details are not described herein again.

### Embodiment 2

A differential chrominance picture block in this embodiment is a UV33 chrominance picture block obtained based on a current picture block.

### Encoder side

Refer to a structure of an enhancement layer encoder shown in FIG. 12. The differential chrominance picture block is a UV33 chrominance picture block, a differential chrominance prediction block is also a UV33 chrominance picture block, and a buffered differential chrominance reconstructed picture is a UV33 chrominance picture. A method for encoding the differential chrominance picture block in this embodiment is shown in FIG. 12. The enhancement layer encoder obtains prediction of the differential chrominance picture block at an enhancement layer based on a base layer reconstructed block, and encodes a differential chrominance residual to obtain an enhancement layer bitstream. In addition to the differential chrominance residual, enhancement layer encoding mode selection information and coding information required by an encoding mode also need to be written into the enhancement layer bitstream.

Similar to an existing video picture coding standard solution, the enhancement layer encoder buffers a historically buffered differential chrominance reconstructed picture (also referred to as a decoded UV33 chrominance picture), to use the differential chrominance reconstructed picture as a reference for subsequently encoding a picture. Generally, an inter prediction technology is used to obtain prediction of a current coding block from a buffered decoded picture. In addition, the enhancement layer encoder may also use technologies for the existing video picture coding standard solution, including intra prediction, loop filtering, and the like. Because use of these technologies is well known to researchers in the field of video coding, details are not described herein again. An existing coding solution is usually applied to a picture including three channels, but a person in the art may alternatively directly extend to support processing of a picture including six channels.

Same as Embodiment 1, this embodiment includes three specially designed modules: a chrominance upsampling prediction module, a cross-component prediction module, and a co-location block replication module. A chrominance upsampling prediction operation may be independently applied to a chrominance picture block or each phase in a chrominance picture block. Therefore, in Embodiment 1, an operation performed by the module on the UV44 chrominance picture block may be directly extended to support processing of the UV33 chrominance picture block in this embodiment. Similarly, the co-location block replication module may be independently applied to a chrominance picture block or each phase in a chrominance picture block, or may be directly applied to this embodiment.

However, for the cross-component prediction module, because six channels in the UV33 chrominance picture block may be classified into two groups, where one group is a three-channel chrominance subpicture U including a U component of chrominance subpictures P0, P1, and P3, and the other group is a three-channel chrominance subpicture V including a V component of the chrominance subpictures P0, P1, and P3.

Linear models of a luminance component and two chrominance components in the base layer reconstructed block are separately built, and prediction of two chrominance samples at a same location of each luminance sample in the luminance component is obtained based on the two linear models.

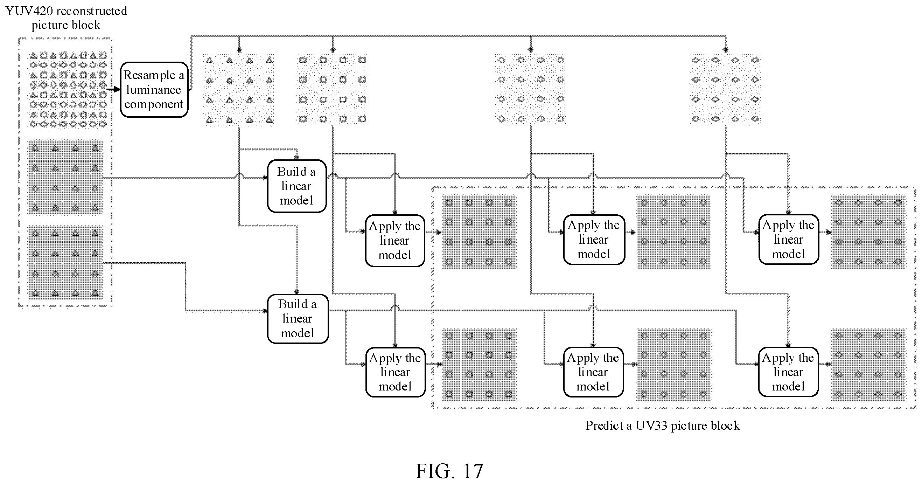

For example, FIG. 17 is an example diagram of a cross-component prediction algorithm. As shown in FIG. 17, a group of luminance and chrominance sampling pairs at a same sampling location is required for building a linear model. In addition, a sampling location of a chrominance component of a target reconstructed block may be different from a sampling location of a luminance component. In this case, a resampling operation needs to be performed on the luminance component, to obtain a sample value of the luminance component at the sampling location of the chrominance component.

In this embodiment, a first chrominance reconstructed block and a second chrominance reconstructed block are obtained based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; the luminance component of the base layer reconstructed block is downsampled to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; a first linear relationship between the first luminance reconstructed block and the first chrominance reconstructed block is obtained; a second linear relationship between the first luminance reconstructed block and the second chrominance reconstructed block is obtained; three third differential chrominance prediction blocks are obtained based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and three fourth differential chrominance prediction blocks are obtained based on the second linear relationship and the three W×H sample arrays of the luminance component of the base layer reconstructed block, where the fourth differential chrominance prediction block includes one W×H sample array, and three W×H sample arrays are used to represent three W×H sample arrays of a second chrominance component.

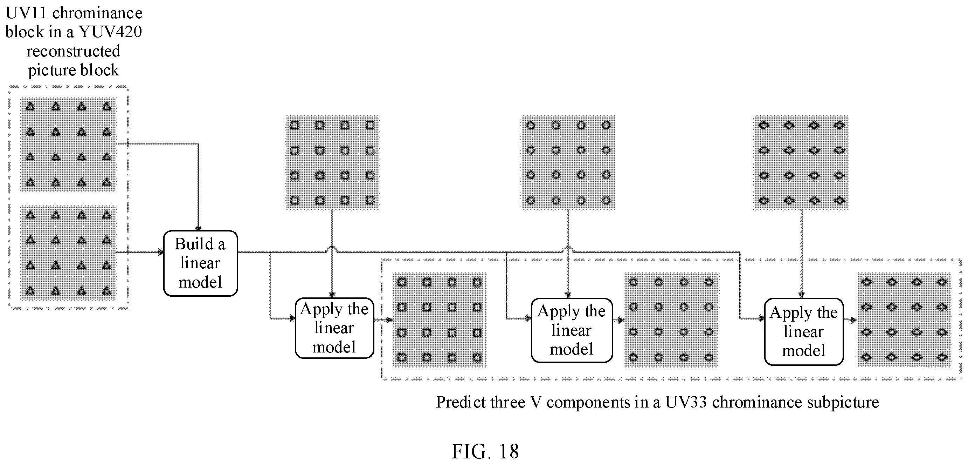

For example, FIG. 18 is an example diagram of a cross-component prediction algorithm. As shown in FIG. 18, a group of luminance and chrominance sampling pairs at a same sampling location is required for building a linear model. In addition, a sampling location of a chrominance component of a target reconstructed block may be different from a sampling location of a luminance component. In this case, a resampling operation needs to be performed on the luminance component, to obtain a sample value of the luminance component at the sampling location of the chrominance component.

A difference from the embodiment shown in FIG. 17 lies in that a first linear relationship between a first luminance reconstructed block and a first chrominance reconstructed block is obtained; a third linear relationship between the first chrominance reconstructed block and a second chrominance reconstructed block is obtained; three third differential chrominance prediction blocks are obtained based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and three fourth differential chrominance prediction blocks are obtained based on the third linear relationship and the three third differential chrominance prediction blocks, where the fourth differential chrominance prediction block includes one W×H sample array, and three W×H sample arrays are used to represent three W×H sample arrays of a second chrominance component.

This embodiment of this application includes a combination of the three algorithm modules. When the differential chrominance prediction block is obtained, one of the three modules may be selected.

### Decoder side

Refer to a structure of an enhancement layer decoder shown in FIG. 14. The enhancement layer bitstream is obtained based on the UV33 chrominance picture block, the differential chrominance prediction block is also the UV33 chrominance picture block, and the buffered differential chrominance reconstructed picture is the UV33 chrominance picture. A method for decoding the enhancement layer bitstream in this embodiment is shown in FIG. 14. The enhancement layer decoder obtains prediction of a differential chrominance reconstructed block at the enhancement layer based on the base layer reconstructed block, and decodes the enhancement layer bitstream to obtain the differential chrominance residual, to further obtain the differential chrominance reconstructed block.

A decoding operation is an inverse operation of an encoding operation. Therefore, the decoding operation may be understood with reference to the descriptions of the enhancement layer encoder. The enhancement layer decoder buffers the historically buffered differential chrominance reconstructed picture (also referred to as the decoded UV33 chrominance picture) as a reference for subsequently decoding a picture. The inter prediction technology is usually used to obtain prediction of the differential chrominance reconstructed block from the buffered differential chrominance reconstructed picture. In addition, the enhancement layer decoder may also use the technologies for the existing video picture coding standard solution, including intra prediction, loop filtering, and the like. Because use of these technologies is well known to the researchers in the field of video coding, details are not described herein again.

It can be learned by comparing FIG. 12 and FIG. 14 that operations of the three algorithm modules: the chrominance upsampling prediction module, the cross-component prediction module, and the co-location block replication module are completely the same in a codec. Details are not described herein again.

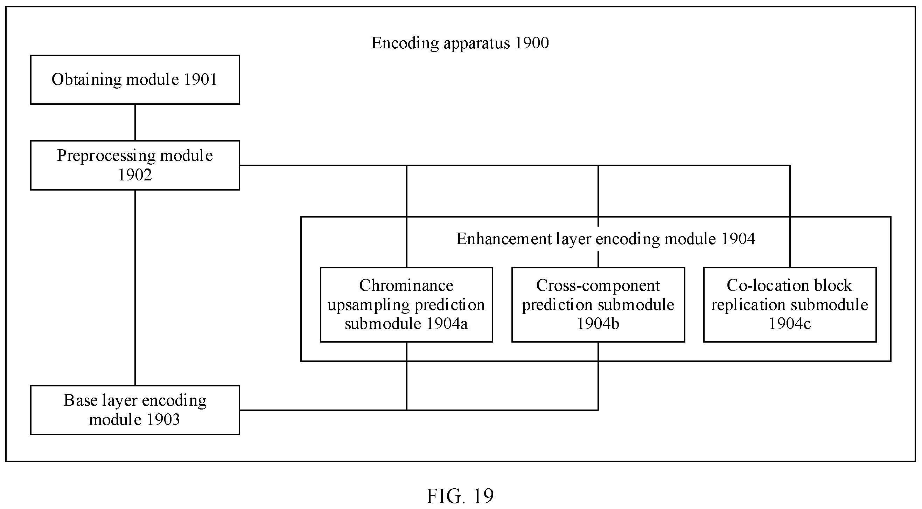

FIG. 19 is a diagram of a structure of an encoding apparatus 1900 according to an embodiment of this application. The encoding apparatus 1900 may be used in the video encoder 20 (or an encoder), and includes: an obtaining module 1901, a preprocessing module 1902, a base layer encoding module 1903, and an enhancement layer encoding module 1904. The enhancement layer encoding module 1904 includes a chrominance upsampling prediction submodule 1904a, a cross-component prediction submodule 1904b, and a co-location block replication submodule 1904c.

The obtaining module 1901 is configured to obtain a current picture block, where a 4:4:4 sampling format is used for the current picture block; and the current picture block includes three 2W×2H sample arrays, where one 2W×2H sample array is used to represent a first chrominance component, one 2W×2H sample array is used to represent a second chrominance component, and one 2W×2H sample array is used to represent a luminance component. The preprocessing module 1902 is configured to separately downsample the first chrominance component and the second chrominance component of the current picture block to obtain a base layer picture block, where a 4:2:0 sampling format is used for the base layer picture block; and the base layer picture block includes two W×H sample arrays and one 2W×2H sample array, where one W×H sample array is used to represent a first chrominance component, one W×H sample array is used to represent a second chrominance component, and the 2W×2H sample array is used to represent a luminance component; and obtain a differential chrominance picture block based on the current picture block, where the differential chrominance picture block includes a part or all of chrominance samples of the current picture block. The base layer encoding module 1903 is configured to encode the base layer picture block to obtain a base layer bitstream. The enhancement layer encoding module 1904 is configured to encode the differential chrominance picture block to obtain an enhancement layer bitstream.

In a possible implementation, the differential chrominance picture block is a UV44 chrominance picture block; and the UV44 chrominance picture block includes two 2W×2H sample arrays, where one 2W×2H sample array is used to represent a first chrominance component, and one 2W×2H sample array is used to represent a second chrominance component.

In a possible implementation, the differential chrominance picture block is a UV33 chrominance picture block; and the UV33 chrominance picture block includes six W×H sample arrays, where three W×H sample arrays are used to represent a first chrominance component, and three W×H sample arrays are used to represent a second chrominance component.

In a possible implementation, the enhancement layer encoding module 1904 is specifically configured to: obtain a spare reconstructed block; obtain a differential chrominance prediction block based on the spare reconstructed block, where the differential chrominance prediction block includes a first chrominance component and a second chrominance component; obtain a differential chrominance residual based on the differential chrominance prediction block and the differential chrominance picture block; and encode the differential chrominance residual to obtain the enhancement layer bitstream.

In a possible implementation, the spare reconstructed block is a base layer reconstructed block, the 4:2:0 sampling format is used for the base layer reconstructed block, and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component.

In a possible implementation, the chrominance upsampling prediction submodule 1904a is specifically configured to: obtain a UV11 chrominance reconstructed block based on the base layer reconstructed block, where the UV11 chrominance reconstructed block includes two W×H arrays, where one W×H array is used to represent a first chrominance component, and one W×H array is used to represent a second chrominance component; and obtain the differential chrominance prediction block based on the UV11 chrominance reconstructed block.

In a possible implementation, the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

In a possible implementation, the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

In a possible implementation, when the differential chrominance picture block is the UV44 chrominance picture block, the cross-component prediction submodule 1904b is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtain a second differential chrominance prediction block based on the second linear relationship and the luminance component of the base layer reconstructed block, where the second differential chrominance prediction block includes one 2W×2H sample array, and the 2W×2H sample array is used to represent a second chrominance component.

In a possible implementation, when the differential chrominance picture block is the UV44 chrominance picture block, the cross-component prediction submodule 1904b is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtain a second differential chrominance prediction block based on the third linear relationship and the first differential chrominance prediction block, where the second differential chrominance prediction block includes one 2W×2H sample array, and the 2W×2H sample array is used to represent a second chrominance component.

In a possible implementation, when the differential chrominance picture block is the UV33 chrominance picture block, the cross-component prediction submodule 1904b is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtain three fourth differential chrominance prediction blocks based on the second linear relationship and the three W×H sample arrays of the luminance component of the base layer reconstructed block, where the fourth differential chrominance prediction block includes one W×H sample array, and three W×H sample arrays are used to represent three W×H sample arrays of a second chrominance component.

In a possible implementation, when the differential chrominance picture block is the UV33 chrominance picture block, the cross-component prediction submodule 1904b is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtain three fourth differential chrominance prediction blocks based on the third linear relationship and the three third differential chrominance prediction blocks, where the fourth differential chrominance prediction block includes one W×H sample array, and three W×H sample arrays are used to represent three W×H sample arrays of a second chrominance component.

In a possible implementation, the spare reconstructed block is a buffered differential chrominance reconstructed picture, and the differential chrominance reconstructed picture is a UV44 chrominance picture or a UV33 chrominance picture.

In a possible implementation, the co-location block replication submodule 1904c is specifically configured to use, as the differential chrominance prediction block, a picture block that is in the buffered differential chrominance reconstructed picture and that is at a same location as the differential chrominance picture block.

The apparatus in this embodiment may be configured to perform the technical solutions in the method embodiment shown in FIG. 11. An implementation principle and technical effect of the apparatus are similar to those of the method embodiment. Details are not described herein again.

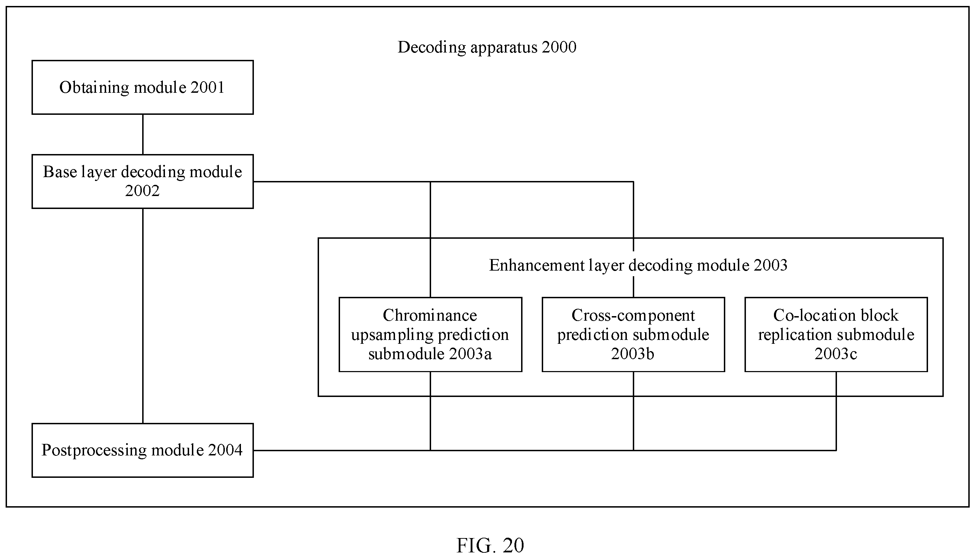

FIG. 20 is a diagram of a structure of a decoding apparatus 2000 according to an embodiment of this application. The decoding apparatus 2000 may be used in the video decoder 30 (or a decoder), and includes: an obtaining module 2001, a base layer decoding module 2002, an enhancement layer decoding module 2003, and a postprocessing module 2004. The enhancement layer decoding module 2003 includes a chrominance upsampling prediction submodule 2003a, a cross-component prediction submodule 2003b, and a co-location block replication submodule 2003c.

The obtaining module 2001 is configured to obtain a base layer bitstream and an enhancement layer bitstream. The base layer decoding module 2002 is configured to obtain a base layer reconstructed block based on the base layer bitstream, where a 4:2:0 sampling format is used for the base layer reconstructed block; and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component. The enhancement layer decoding module 2003 is configured to obtain a differential chrominance reconstructed block based on the enhancement layer bitstream. The postprocessing module 2004 is configured to obtain a target reconstructed block based on the base layer reconstructed block and the differential chrominance reconstructed block, where a 4:4:4 sampling format is used for the target reconstructed block; and the target reconstructed block includes three 2W×2H sample arrays, where one 2W×2H sample array is used to represent a first chrominance component, one 2W×2H sample array is used to represent a second chrominance component, and one 2W×2H sample array is used to represent a luminance component.

In a possible implementation, the differential chrominance reconstructed block is a UV44 chrominance picture block; and the UV44 chrominance picture block includes two 2W×2H sample arrays, where one 2W×2H sample array is used to represent a first chrominance component, and one 2W×2H sample array is used to represent a second chrominance component.

In a possible implementation, the differential chrominance reconstructed block is a UV33 chrominance picture block; and the UV33 chrominance picture block includes six W×H sample arrays, where three W×H sample arrays are used to represent a first chrominance component, and three W×H sample arrays are used to represent a second chrominance component.

In a possible implementation, the target reconstructed block is obtained through construction based on the luminance component of the base layer reconstructed block and the UV44 chrominance picture block.

In a possible implementation, the target reconstructed block is obtained through construction based on the base layer reconstructed block and the UV33 chrominance picture block.

In a possible implementation, the enhancement layer decoding module 2003 is specifically configured to: obtain a spare reconstructed block; decode the enhancement layer bitstream to obtain a differential chrominance residual; obtain a differential chrominance prediction block based on the spare reconstructed block, where the differential chrominance prediction block includes a first chrominance component and a second chrominance component; and obtain the differential chrominance reconstructed block based on the differential chrominance prediction block and the differential chrominance residual.

In a possible implementation, the spare reconstructed block is a base layer reconstructed block, the 4:2:0 sampling format is used for the base layer reconstructed block, and the base layer reconstructed block includes two W×H sample arrays and one 2W×2H sample array, where one W×H sample array is used to represent a first chrominance component, one W×H sample array is used to represent a second chrominance component, and the 2W×2H sample array is used to represent a luminance component.

In a possible implementation, the chrominance upsampling prediction submodule 2003a is specifically configured to: obtain a UV11 chrominance reconstructed block based on the base layer reconstructed block, where the UV11 chrominance reconstructed block includes two W×H arrays, where one W×H array is used to represent a first chrominance component, and one W×H array is used to represent a second chrominance component; and obtain the differential chrominance prediction block based on the UV11 chrominance reconstructed block.

In a possible implementation, the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

In a possible implementation, the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

In a possible implementation, when the differential chrominance picture block is a UV44 chrominance picture block, the cross-component prediction submodule 2003b is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtain a second differential chrominance prediction block based on the second linear relationship and the luminance component of the base layer reconstructed block, where the second differential chrominance prediction block includes one 2W×2H sample array, and the 2W×2H sample array is used to represent a second chrominance component.

In a possible implementation, when the differential chrominance picture block is a UV44 chrominance picture block, the cross-component prediction submodule 2003b is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain a first differential chrominance prediction block based on the first linear relationship and the luminance component of the base layer reconstructed block, where the first differential chrominance prediction block includes one 2W×2H sample array, and the 2W×2H sample array is used to represent a first chrominance component; and obtain a second differential chrominance prediction block based on the third linear relationship and the first differential chrominance prediction block, where the second differential chrominance prediction block includes one 2W×2H sample array, and the 2W×2H sample array is used to represent a second chrominance component.

In a possible implementation, when the differential chrominance picture block is a UV33 chrominance picture block, the cross-component prediction submodule 2003b is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtain three fourth differential chrominance prediction blocks based on the second linear relationship and the three W×H sample arrays of the luminance component of the base layer reconstructed block, where the fourth differential chrominance prediction block includes one W×H sample array, and three W×H sample arrays are used to represent three W×H sample arrays of a second chrominance component.

In a possible implementation, when the differential chrominance picture block is a UV33 chrominance picture block, the cross-component prediction submodule 2003b is specifically configured to: obtain a first chrominance reconstructed block and a second chrominance reconstructed block based on the base layer reconstructed block, where the first chrominance reconstructed block includes one W×H sample array, and the W×H sample array is used to represent a first chrominance component; and the second chrominance reconstructed block includes one W×H sample array, and the W×H sample array is used to represent a second chrominance component; downsample the luminance component of the base layer reconstructed block to obtain a first luminance reconstructed block, where the first luminance reconstructed block includes one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain three third differential chrominance prediction blocks based on the first linear relationship and three W×H sample arrays of the luminance component of the base layer reconstructed block, where the third differential chrominance prediction block includes one W×H sample array, and three W×H sample arrays are used to represent three W×H sample arrays of a first chrominance component; and obtain three fourth differential chrominance prediction blocks based on the third linear relationship and the three third differential chrominance prediction blocks, where the fourth differential chrominance prediction block includes one W×H sample array, and three W×H sample arrays are used to represent three W×H sample arrays of a second chrominance component.

In a possible implementation, the spare reconstructed block is a buffered differential chrominance reconstructed picture, and the differential chrominance reconstructed picture is a UV44 chrominance picture or a UV33 chrominance picture.

In a possible implementation, the co-location block replication submodule 2003c is specifically configured to use, as the differential chrominance prediction block, a picture block that is in the buffered differential chrominance reconstructed picture and that is at a same location as the differential chrominance picture block.

The apparatus in this embodiment may be configured to perform the technical solutions in the method embodiment shown in FIG. 13. An implementation principle and technical effect of the apparatus are similar to those of the method embodiment. Details are not described herein again.

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A picture scalable encoding method, comprising:
obtaining a current picture block, wherein a 4:4:4 sampling format is used for the current picture block; and the current picture block comprises three 2W×2H sample arrays, wherein one 2W×2H sample array is used to represent a first chrominance component, one 2W×2H sample array is used to represent a second chrominance component, and one 2W×2H sample array is used to represent a luminance component;
separately downsampling the first chrominance component and the second chrominance component of the current picture block to obtain a base layer picture block, wherein a 4:2:0 sampling format is used for the base layer picture block; and the base layer picture block comprises two W×H sample arrays and one 2W×2H sample array, wherein one W×H sample array is used to represent a first chrominance component, one W×H sample array is used to represent a second chrominance component, and the 2W×2H sample array is used to represent a luminance component;
obtaining a differential chrominance picture block based on the current picture block, wherein the differential chrominance picture block comprises a part or all of chrominance samples of the current picture block;
encoding the base layer picture block to obtain a base layer bitstream; and
encoding the differential chrominance picture block to obtain an enhancement layer bitstream.

2. The method according to claim 1, wherein the differential chrominance picture block is a UV44 chrominance picture block; and the UV44 chrominance picture block comprises two 2W×2H sample arrays, wherein one 2W×2H sample array is used to represent a first chrominance component, and one 2W×2H sample array is used to represent a second chrominance component.

3. The method according to claim 1, wherein the differential chrominance picture block is a UV33 chrominance picture block; and the UV33 chrominance picture block comprises six W×H sample arrays, wherein three W×H sample arrays are used to represent a first chrominance component, and three W×H sample arrays are used to represent a second chrominance component.

4. The method according to any one of claims 1 to 3, wherein before the encoding the differential chrominance picture block to obtain an enhancement layer bitstream, the method further comprises:
obtaining a spare reconstructed block; and
the encoding the differential chrominance picture block to obtain an enhancement layer bitstream comprises:
obtaining a differential chrominance prediction block based on the spare reconstructed block, wherein the differential chrominance prediction block comprises a first chrominance component and a second chrominance component;
obtaining a differential chrominance residual based on the differential chrominance prediction block and the differential chrominance picture block; and
encoding the differential chrominance residual to obtain the enhancement layer bitstream.

5. The method according to claim 4, wherein the spare reconstructed block is a base layer reconstructed block, the 4:2:0 sampling format is used for the base layer reconstructed block, and the base layer reconstructed block comprises two W×H sample arrays and one 2W×2H sample array, wherein one W×H sample array is used to represent a first chrominance component, one W×H sample array is used to represent a second chrominance component, and the 2W×2H sample array is used to represent a luminance component.

6. The method according to claim 5, wherein the obtaining a differential chrominance prediction block based on the spare reconstructed block comprises:
obtaining a UV11 chrominance reconstructed block based on the base layer reconstructed block, wherein the UV11 chrominance reconstructed block comprises two W×H arrays, wherein one W×H array is used to represent a first chrominance component, and one W×H array is used to represent a second chrominance component; and
obtaining the differential chrominance prediction block based on the UV11 chrominance reconstructed block.

7. The method according to claim 6, wherein the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

8. The method according to claim 6, wherein the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

9. The method according to claim 5, wherein when the differential chrominance picture block is the UV44 chrominance picture block, the obtaining a differential chrominance prediction block based on the spare reconstructed block comprises:
obtaining a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component;
downsampling the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block;
obtaining a first linear relationship between the first luminance reconstructed block and the first chrominance reconstructed block;
obtaining a second linear relationship between the first luminance reconstructed block and the second chrominance reconstructed block;
obtaining a first differential chrominance prediction block based on the first linear relationship and the luminance component of the base layer reconstructed block, wherein the first differential chrominance prediction block comprises one 2W×2H sample array, and the 2W×2H sample array is used to represent a first chrominance component; and
obtaining a second differential chrominance prediction block based on the second linear relationship and the luminance component of the base layer reconstructed block, wherein the second differential chrominance prediction block comprises one 2W×2H sample array, and the 2W×2H sample array is used to represent a second chrominance component.

10. The method according to claim 5, wherein when the differential chrominance picture block is the UV44 chrominance picture block, the obtaining a differential chrominance prediction block based on the spare reconstructed block comprises:
obtaining a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component;
downsampling the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block;
obtaining a first linear relationship between the first luminance reconstructed block and the first chrominance reconstructed block;
obtaining a third linear relationship between the first chrominance reconstructed block and the second chrominance reconstructed block;
obtaining a first differential chrominance prediction block based on the first linear relationship and the luminance component of the base layer reconstructed block, wherein the first differential chrominance prediction block comprises one 2W×2H sample array, and the 2W×2H sample array is used to represent a first chrominance component; and
obtaining a second differential chrominance prediction block based on the third linear relationship and the first differential chrominance prediction block, wherein the second differential chrominance prediction block comprises one 2W×2H sample array, and the 2W×2H sample array is used to represent a second chrominance component.

11. The method according to claim 5, wherein when the differential chrominance picture block is the UV33 chrominance picture block, the obtaining a differential chrominance prediction block based on the spare reconstructed block comprises:
obtaining a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component;
downsampling the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block;
obtaining a first linear relationship between the first luminance reconstructed block and the first chrominance reconstructed block;
obtaining a second linear relationship between the first luminance reconstructed block and the second chrominance reconstructed block;
obtaining three third differential chrominance prediction blocks based on the first linear relationship and three W×H sample arrays of the luminance component of the base layer reconstructed block, wherein the third differential chrominance prediction block comprises one W×H sample array, and three W×H sample arrays are used to represent three W×H sample arrays of a first chrominance component; and
obtaining three fourth differential chrominance prediction blocks based on the second linear relationship and the three W×H sample arrays of the luminance component of the base layer reconstructed block, wherein the fourth differential chrominance prediction block comprises one W×H sample array, and three W×H sample arrays are used to represent three W×H sample arrays of a second chrominance component.

12. The method according to claim 5, wherein when the differential chrominance picture block is the UV33 chrominance picture block, the obtaining a differential chrominance prediction block based on the spare reconstructed block comprises:
obtaining a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component;
downsampling the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block;
obtaining a first linear relationship between the first luminance reconstructed block and the first chrominance reconstructed block;
obtaining a third linear relationship between the first chrominance reconstructed block and the second chrominance reconstructed block;
obtaining three third differential chrominance prediction blocks based on the first linear relationship and three W×H sample arrays of the luminance component of the base layer reconstructed block, wherein the third differential chrominance prediction block comprises one W×H sample array, and three W×H sample arrays are used to represent three W×H sample arrays of a first chrominance component; and
obtaining three fourth differential chrominance prediction blocks based on the third linear relationship and the three third differential chrominance prediction blocks, wherein the fourth differential chrominance prediction block comprises one W×H sample array, and three W×H sample arrays are used to represent three W×H sample arrays of a second chrominance component.

13. The method according to claim 4, wherein the spare reconstructed block is a buffered differential chrominance reconstructed picture, and the differential chrominance reconstructed picture is a UV44 chrominance picture or a UV33 chrominance picture.

14. The method according to claim 13, wherein the obtaining a differential chrominance prediction block based on the spare reconstructed block comprises:
using, as the differential chrominance prediction block, a picture block that is in the buffered differential chrominance reconstructed picture and that is at a same location as the differential chrominance picture block.

15. A picture scalable decoding method, comprising:
obtaining a base layer bitstream and an enhancement layer bitstream;
obtaining a base layer reconstructed block based on the base layer bitstream, wherein a 4:2:0 sampling format is used for the base layer reconstructed block; and the base layer reconstructed block comprises two W×H sample arrays and one 2W×2H sample array, wherein one W×H sample array is used to represent a first chrominance component, one W×H sample array is used to represent a second chrominance component, and the 2W×2H sample array is used to represent a luminance component;
obtaining a differential chrominance reconstructed block based on the enhancement layer bitstream; and
obtaining a target reconstructed block based on the base layer reconstructed block and the differential chrominance reconstructed block, wherein a 4:4:4 sampling format is used for the target reconstructed block; and the target reconstructed block comprises three 2W×2H sample arrays, wherein one 2W×2H sample array is used to represent a first chrominance component, one 2W×2H sample array is used to represent a second chrominance component, and one 2W×2H sample array is used to represent a luminance component.

16. The method according to claim 15, wherein the differential chrominance reconstructed block is a UV44 chrominance picture block; and the UV44 chrominance picture block comprises two 2W×2H sample arrays, wherein one 2W×2H sample array is used to represent a first chrominance component, and one 2W×2H sample array is used to represent a second chrominance component.

17. The method according to claim 15, wherein the differential chrominance reconstructed block is a UV33 chrominance picture block; and the UV33 chrominance picture block comprises six W×H sample arrays, wherein three W×H sample arrays are used to represent a first chrominance component, and three W×H sample arrays are used to represent a second chrominance component.

18. The method according to claim 16, wherein the target reconstructed block is obtained through construction based on the luminance component of the base layer reconstructed block and the UV44 chrominance picture block.

19. The method according to claim 17, wherein the target reconstructed block is obtained through construction based on the base layer reconstructed block and the UV33 chrominance picture block.

20. The method according to any one of claims 15 to 19, wherein before the parsing the enhancement layer bitstream to obtain a differential chrominance reconstructed block, the method further comprises:
obtaining a spare reconstructed block; and
parsing the enhancement layer bitstream to obtain a differential chrominance reconstructed block comprises:
decoding the enhancement layer bitstream to obtain a differential chrominance residual;
obtaining a differential chrominance prediction block based on the spare reconstructed block, wherein the differential chrominance prediction block comprises a first chrominance component and a second chrominance component; and
obtaining the differential chrominance reconstructed block based on the differential chrominance prediction block and the differential chrominance residual.

21. The method according to claim 20, wherein the spare reconstructed block is a base layer reconstructed block, the 4:2:0 sampling format is used for the base layer reconstructed block, and the base layer reconstructed block comprises two W×H sample arrays and one 2W×2H sample array, wherein one W×H sample array is used to represent a first chrominance component, one W×H sample array is used to represent a second chrominance component, and the 2W×2H sample array is used to represent a luminance component.

22. The method according to claim 21, wherein the obtaining a differential chrominance prediction block based on the spare reconstructed block comprises:
obtaining a UV11 chrominance reconstructed block based on the base layer reconstructed block, wherein the UV11 chrominance reconstructed block comprises two W×H arrays, wherein one W×H array is used to represent a first chrominance component, and one W×H array is used to represent a second chrominance component; and
obtaining the differential chrominance prediction block based on the UV11 chrominance reconstructed block.

23. The method according to claim 22, wherein the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

24. The method according to claim 22, wherein the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

25. The method according to claim 21, wherein when the differential chrominance picture block is a UV44 chrominance picture block, the obtaining a differential chrominance prediction block based on the spare reconstructed block comprises:
obtaining a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component;
downsampling the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block;
obtaining a first linear relationship between the first luminance reconstructed block and the first chrominance reconstructed block;
obtaining a second linear relationship between the first luminance reconstructed block and the second chrominance reconstructed block;
obtaining a first differential chrominance prediction block based on the first linear relationship and the luminance component of the base layer reconstructed block, wherein the first differential chrominance prediction block comprises one 2W×2H sample array, and the 2W×2H sample array is used to represent a first chrominance component; and
obtaining a second differential chrominance prediction block based on the second linear relationship and the luminance component of the base layer reconstructed block, wherein the second differential chrominance prediction block comprises one 2W×2H sample array, and the 2W×2H sample array is used to represent a second chrominance component.

26. The method according to claim 21, wherein when the differential chrominance picture block is a UV44 chrominance picture block, the obtaining a differential chrominance prediction block based on the spare reconstructed block comprises:
obtaining a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component;
downsampling the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block;
obtaining a first linear relationship between the first luminance reconstructed block and the first chrominance reconstructed block;
obtaining a third linear relationship between the first chrominance reconstructed block and the second chrominance reconstructed block;
obtaining a first differential chrominance prediction block based on the first linear relationship and the luminance component of the base layer reconstructed block, wherein the first differential chrominance prediction block comprises one 2W×2H sample array, and the 2W×2H sample array is used to represent a first chrominance component; and
obtaining a second differential chrominance prediction block based on the third linear relationship and the first differential chrominance prediction block, wherein the second differential chrominance prediction block comprises one 2W×2H sample array, and the 2W×2H sample array is used to represent a second chrominance component.

27. The method according to claim 21, wherein when the differential chrominance picture block is a UV33 chrominance picture block, the obtaining a differential chrominance prediction block based on the spare reconstructed block comprises:
obtaining a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component;
downsampling the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block;
obtaining a first linear relationship between the first luminance reconstructed block and the first chrominance reconstructed block;
obtaining a second linear relationship between the first luminance reconstructed block and the second chrominance reconstructed block;
obtaining three third differential chrominance prediction blocks based on the first linear relationship and three W×H sample arrays of the luminance component of the base layer reconstructed block, wherein the third differential chrominance prediction block comprises one W×H sample array, and three W×H sample arrays are used to represent three W×H sample arrays of a first chrominance component; and
obtaining three fourth differential chrominance prediction blocks based on the second linear relationship and the three W×H sample arrays of the luminance component of the base layer reconstructed block, wherein the fourth differential chrominance prediction block comprises one W×H sample array, and three W×H sample arrays are used to represent three W×H sample arrays of a second chrominance component.

28. The method according to claim 21, wherein when the differential chrominance picture block is a UV33 chrominance picture block, the obtaining a differential chrominance prediction block based on the spare reconstructed block comprises:
obtaining a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component;
downsampling the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block;
obtaining a first linear relationship between the first luminance reconstructed block and the first chrominance reconstructed block;
obtaining a third linear relationship between the first chrominance reconstructed block and the second chrominance reconstructed block;
obtaining three third differential chrominance prediction blocks based on the first linear relationship and three W×H sample arrays of the luminance component of the base layer reconstructed block, wherein the third differential chrominance prediction block comprises one W×H sample array, and three W×H sample arrays are used to represent three W×H sample arrays of a first chrominance component; and
obtaining three fourth differential chrominance prediction blocks based on the third linear relationship and the three third differential chrominance prediction blocks, wherein the fourth differential chrominance prediction block comprises one W×H sample array, and three W×H sample arrays are used to represent three W×H sample arrays of a second chrominance component.

29. The method according to claim 20, wherein the spare reconstructed block is a buffered differential chrominance reconstructed picture, and the differential chrominance reconstructed picture is a UV44 chrominance picture or a UV33 chrominance picture.

30. The method according to claim 29, wherein the obtaining a differential chrominance prediction block based on the spare reconstructed block comprises:
using, as the differential chrominance prediction block, a picture block that is in the buffered differential chrominance reconstructed picture and that is at a same location as the differential chrominance picture block.

31. An encoding apparatus, comprising:
an obtaining module, configured to obtain a current picture block, wherein a 4:4:4 sampling format is used for the current picture block; and the current picture block comprises three 2W×2H sample arrays, wherein one 2W×2H sample array is used to represent a first chrominance component, one 2W×2H sample array is used to represent a second chrominance component, and one 2W×2H sample array is used to represent a luminance component;
a preprocessing module, configured to separately downsample the first chrominance component and the second chrominance component of the current picture block to obtain a base layer picture block, wherein a 4:2:0 sampling format is used for the base layer picture block; and the base layer picture block comprises two W×H sample arrays and one 2W×2H sample array, wherein one W×H sample array is used to represent a first chrominance component, one W×H sample array is used to represent a second chrominance component, and the 2W×2H sample array is used to represent a luminance component; and obtain a differential chrominance picture block based on the current picture block, wherein the differential chrominance picture block comprises a part or all of chrominance samples of the current picture block;
a base layer encoding module, configured to encode the base layer picture block to obtain a base layer bitstream; and
an enhancement layer encoding module, configured to encode the differential chrominance picture block to obtain an enhancement layer bitstream.

32. The apparatus according to claim 31, wherein the differential chrominance picture block is a UV44 chrominance picture block; and the UV44 chrominance picture block comprises two 2W×2H sample arrays, wherein one 2W×2H sample array is used to represent a first chrominance component, and one 2W×2H sample array is used to represent a second chrominance component.

33. The apparatus according to claim 31, wherein the differential chrominance picture block is a UV33 chrominance picture block; and the UV33 chrominance picture block comprises six W×H sample arrays, wherein three W×H sample arrays are used to represent a first chrominance component, and three W×H sample arrays are used to represent a second chrominance component.

34. The apparatus according to any one of claims 31 to 33, wherein the enhancement layer encoding module is specifically configured to: obtain a spare reconstructed block; obtain a differential chrominance prediction block based on the spare reconstructed block, wherein the differential chrominance prediction block comprises a first chrominance component and a second chrominance component; obtain a differential chrominance residual based on the differential chrominance prediction block and the differential chrominance picture block; and encode the differential chrominance residual to obtain the enhancement layer bitstream.

35. The method according to claim 34, wherein the enhancement layer encoding module comprises a chrominance upsampling prediction submodule, a cross-component prediction submodule, and a co-location block replication submodule.

36. The apparatus according to claim 35, wherein the spare reconstructed block is a base layer reconstructed block, the 4:2:0 sampling format is used for the base layer reconstructed block, and the base layer reconstructed block comprises two W×H sample arrays and one 2W×2H sample array, wherein one W×H sample array is used to represent a first chrominance component, one W×H sample array is used to represent a second chrominance component, and the 2W×2H sample array is used to represent a luminance component.

37. The apparatus according to claim 36, wherein the chrominance upsampling prediction submodule is specifically configured to: obtain a UV11 chrominance reconstructed block based on the base layer reconstructed block, wherein the UV11 chrominance reconstructed block comprises two W×H arrays, wherein one W×H array is used to represent a first chrominance component, and one W×H array is used to represent a second chrominance component; and obtain the differential chrominance prediction block based on the UV11 chrominance reconstructed block.

38. The apparatus according to claim 37, wherein the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

39. The apparatus according to claim 37, wherein the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

40. The apparatus according to claim 36, wherein when the differential chrominance picture block is the UV44 chrominance picture block, the cross-component prediction submodule is specifically configured to: obtain a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component; downsample the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain a first differential chrominance prediction block based on the first linear relationship and the luminance component of the base layer reconstructed block, wherein the first differential chrominance prediction block comprises one 2W×2H sample array, and the 2W×2H sample array is used to represent a first chrominance component; and obtain a second differential chrominance prediction block based on the second linear relationship and the luminance component of the base layer reconstructed block, wherein the second differential chrominance prediction block comprises one 2W×2H sample array, and the 2W×2H sample array is used to represent a second chrominance component.

41. The apparatus according to claim 36, wherein when the differential chrominance picture block is the UV44 chrominance picture block, the cross-component prediction submodule is specifically configured to: obtain a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component; downsample the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain a first differential chrominance prediction block based on the first linear relationship and the luminance component of the base layer reconstructed block, wherein the first differential chrominance prediction block comprises one 2W×2H sample array, and the 2W×2H sample array is used to represent a first chrominance component; and obtain a second differential chrominance prediction block based on the third linear relationship and the first differential chrominance prediction block, wherein the second differential chrominance prediction block comprises one 2W×2H sample array, and the 2W×2H sample array is used to represent a second chrominance component.

42. The apparatus according to claim 36, wherein when the differential chrominance picture block is the UV33 chrominance picture block, the cross-component prediction submodule is specifically configured to: obtain a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component; downsample the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain three third differential chrominance prediction blocks based on the first linear relationship and three W×H sample arrays of the luminance component of the base layer reconstructed block, wherein the third differential chrominance prediction block comprises one W×H sample array, and three W×H sample arrays are used to represent three W×H sample arrays of a first chrominance component; and obtain three fourth differential chrominance prediction blocks based on the second linear relationship and the three W×H sample arrays of the luminance component of the base layer reconstructed block, wherein the fourth differential chrominance prediction block comprises one W×H sample array, and three W×H sample arrays are used to represent three W×H sample arrays of a second chrominance component.

43. The apparatus according to claim 36, wherein when the differential chrominance picture block is the UV33 chrominance picture block, the cross-component prediction submodule is specifically configured to: obtain a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component; downsample the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain three third differential chrominance prediction blocks based on the first linear relationship and three W×H sample arrays of the luminance component of the base layer reconstructed block, wherein the third differential chrominance prediction block comprises one W×H sample array, and three W×H sample arrays are used to represent three W×H sample arrays of a first chrominance component; and obtain three fourth differential chrominance prediction blocks based on the third linear relationship and the three third differential chrominance prediction blocks, wherein the fourth differential chrominance prediction block comprises one W×H sample array, and three W×H sample arrays are used to represent three W×H sample arrays of a second chrominance component.

44. The apparatus according to claim 35, wherein the spare reconstructed block is a buffered differential chrominance reconstructed picture, and the differential chrominance reconstructed picture is a UV44 chrominance picture or a UV33 chrominance picture.

45. The apparatus according to claim 44, wherein the co-location block replication submodule is specifically configured to use, as the differential chrominance prediction block, a picture block that is in the buffered differential chrominance reconstructed picture and that is at a same location as the differential chrominance picture block.

46. A decoding apparatus, comprising:
an obtaining module, configured to obtain a base layer bitstream and an enhancement layer bitstream;
a base layer decoding module, configured to obtain a base layer reconstructed block based on the base layer bitstream, wherein a 4:2:0 sampling format is used for the base layer reconstructed block; and the base layer reconstructed block comprises two W×H sample arrays and one 2W×2H sample array, wherein one W×H sample array is used to represent a first chrominance component, one W×H sample array is used to represent a second chrominance component, and the 2W×2H sample array is used to represent a luminance component;
an enhancement layer decoding module, configured to obtain a differential chrominance reconstructed block based on the enhancement layer bitstream; and
a postprocessing module, configured to obtain a target reconstructed block based on the base layer reconstructed block and the differential chrominance reconstructed block, wherein a 4:4:4 sampling format is used for the target reconstructed block; and the target reconstructed block comprises three 2W×2H sample arrays, wherein one 2W×2H sample array is used to represent a first chrominance component, one 2W×2H sample array is used to represent a second chrominance component, and one 2W×2H sample array is used to represent a luminance component.

47. The apparatus according to claim 46, wherein the differential chrominance reconstructed block is a UV44 chrominance picture block; and the UV44 chrominance picture block comprises two 2W×2H sample arrays, wherein one 2W×2H sample array is used to represent a first chrominance component, and one 2W×2H sample array is used to represent a second chrominance component.

48. The apparatus according to claim 46, wherein the differential chrominance reconstructed block is a UV33 chrominance picture block; and the UV33 chrominance picture block comprises six W×H sample arrays, wherein three W×H sample arrays are used to represent a first chrominance component, and three W×H sample arrays are used to represent a second chrominance component.

49. The apparatus according to claim 47, wherein the target reconstructed block is obtained through construction based on the luminance component of the base layer reconstructed block and the UV44 chrominance picture block.

50. The apparatus according to claim 48, wherein the target reconstructed block is obtained through construction based on the base layer reconstructed block and the UV33 chrominance picture block.

51. The apparatus according to any one of claims 46 to 50, wherein the enhancement layer decoding module is specifically configured to: obtain a spare reconstructed block; decode the enhancement layer bitstream to obtain a differential chrominance residual; obtain a differential chrominance prediction block based on the spare reconstructed block, wherein the differential chrominance prediction block comprises a first chrominance component and a second chrominance component; and obtain the differential chrominance reconstructed block based on the differential chrominance prediction block and the differential chrominance residual.

52. The apparatus according to claim 51, wherein the enhancement layer decoding module comprises a chrominance upsampling prediction submodule, a cross-component prediction submodule, and a co-location block replication submodule.

53. The apparatus according to claim 52, wherein the spare reconstructed block is a base layer reconstructed block, the 4:2:0 sampling format is used for the base layer reconstructed block, and the base layer reconstructed block comprises two W×H sample arrays and one 2W×2H sample array, wherein one W×H sample array is used to represent a first chrominance component, one W×H sample array is used to represent a second chrominance component, and the 2W×2H sample array is used to represent a luminance component.

54. The apparatus according to claim 53, wherein the chrominance upsampling prediction submodule is specifically configured to: obtain a UV11 chrominance reconstructed block based on the base layer reconstructed block, wherein the UV11 chrominance reconstructed block comprises two W×H arrays, wherein one W×H array is used to represent a first chrominance component, and one W×H array is used to represent a second chrominance component; and obtain the differential chrominance prediction block based on the UV11 chrominance reconstructed block.

55. The apparatus according to claim 54, wherein the differential chrominance prediction block is a UV44 chrominance picture block; and the first chrominance component of the differential chrominance prediction block is obtained by upsampling the first chrominance component of the UV11 chrominance reconstructed block, and the second chrominance component of the differential chrominance prediction block is obtained by upsampling the second chrominance component of the UV11 chrominance reconstructed block.

56. The apparatus according to claim 54, wherein the differential chrominance prediction block is a UV33 chrominance picture block; and the first chrominance component of the differential chrominance prediction block is obtained by resampling the first chrominance component of the UV11 chrominance reconstructed block, and the second chrominance component of the differential chrominance prediction block is obtained by resampling the second chrominance component of the UV11 chrominance reconstructed block.

57. The apparatus according to claim 53, wherein when the differential chrominance picture block is a UV44 chrominance picture block, the cross-component prediction submodule is specifically configured to: obtain a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component; downsample the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain a first differential chrominance prediction block based on the first linear relationship and the luminance component of the base layer reconstructed block, wherein the first differential chrominance prediction block comprises one 2W×2H sample array, and the 2W×2H sample array is used to represent a first chrominance component; and obtain a second differential chrominance prediction block based on the second linear relationship and the luminance component of the base layer reconstructed block, wherein the second differential chrominance prediction block comprises one 2W×2H sample array, and the 2W×2H sample array is used to represent a second chrominance component.

58. The apparatus according to claim 53, wherein when the differential chrominance picture block is a UV44 chrominance picture block, the cross-component prediction submodule is specifically configured to: obtain a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component; downsample the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain a first differential chrominance prediction block based on the first linear relationship and the luminance component of the base layer reconstructed block, wherein the first differential chrominance prediction block comprises one 2W×2H sample array, and the 2W×2H sample array is used to represent a first chrominance component; and obtain a second differential chrominance prediction block based on the third linear relationship and the first differential chrominance prediction block, wherein the second differential chrominance prediction block comprises one 2W×2H sample array, and the 2W×2H sample array is used to represent a second chrominance component.

59. The apparatus according to claim 53, wherein when the differential chrominance picture block is a UV33 chrominance picture block, the cross-component prediction submodule is specifically configured to: obtain a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component; downsample the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a second linear relationship between the first luminance reconstructed block and the second chrominance reconstructed block; obtain three third differential chrominance prediction blocks based on the first linear relationship and three W×H sample arrays of the luminance component of the base layer reconstructed block, wherein the third differential chrominance prediction block comprises one W×H sample array, and three W×H sample arrays are used to represent three W×H sample arrays of a first chrominance component; and obtain three fourth differential chrominance prediction blocks based on the second linear relationship and the three W×H sample arrays of the luminance component of the base layer reconstructed block, wherein the fourth differential chrominance prediction block comprises one W×H sample array, and three W×H sample arrays are used to represent three W×H sample arrays of a second chrominance component.

60. The apparatus according to claim 53, wherein when the differential chrominance picture block is a UV33 chrominance picture block, the cross-component prediction submodule is specifically configured to: obtain a first chrominance reconstructed block and a second chrominance reconstructed block based on the base layer reconstructed block, wherein the first chrominance reconstructed block comprises one W×H sample array, and the W×H sample array is used to represent a first chrominance component; and the second chrominance reconstructed block comprises one W×H sample array, and the W×H sample array is used to represent a second chrominance component; downsample the luminance component of the base layer reconstructed block to obtain a first luminance reconstructed block, wherein the first luminance reconstructed block comprises one W×H sample array, and a luminance sampling location of the first luminance reconstructed block is separately the same as a chrominance sampling location of the first chrominance reconstructed block and a chrominance sampling location of the second chrominance reconstructed block; obtain a first linear relationship between the first luminance reconstructed block and the first chrominance reconstructed block; obtain a third linear relationship between the first chrominance reconstructed block and the second chrominance reconstructed block; obtain three third differential chrominance prediction blocks based on the first linear relationship and three W×H sample arrays of the luminance component of the base layer reconstructed block, wherein the third differential chrominance prediction block comprises one W×H sample array, and three W×H sample arrays are used to represent three W×H sample arrays of a first chrominance component; and obtain three fourth differential chrominance prediction blocks based on the third linear relationship and the three third differential chrominance prediction blocks, wherein the fourth differential chrominance prediction block comprises one W×H sample array, and three W×H sample arrays are used to represent three W×H sample arrays of a second chrominance component.

61. The apparatus according to claim 52, wherein the spare reconstructed block is a buffered differential chrominance reconstructed picture, and the differential chrominance reconstructed picture is a UV44 chrominance picture or a UV33 chrominance picture.

62. The apparatus according to claim 61, wherein the co-location block replication submodule is specifically configured to use, as the differential chrominance prediction block, a picture block that is in the buffered differential chrominance reconstructed picture and that is at a same location as the differential chrominance picture block.

63. An encoder, comprising:
one or more processors; and
a non-transitory computer-readable storage medium coupled to the processor and storing a program executed by the processor, wherein when the program is executed by the processor, the encoder performs the method according to any one of claims 1 to 14.

64. A decoder, comprising:
one or more processors; and
a non-transitory computer-readable storage medium coupled to the processor and storing a program executed by the processor, wherein when the program is executed by the processor, the decoder performs the method according to any one of claims 15 to 30.

65. A non-transitory computer-readable storage medium, comprising program code, wherein the program code is executed by a computer device, to perform the method according to any one of claims 1 to 30.

66. A non-transitory storage medium, comprising a bitstream obtained through encoding according to the method according to any one of claims 1 to 30.
